# FASCICULE DE BREVET EUROPEEN

(11) **EP 4 384 443 B1**
(45) Date de publication et mention de la délivrance du brevet: **13.11.2024**
(21) Numéro de dépôt: 22727765.4
(22) Date de dépôt: 02.05.2022
(51) Int. Cl.: B64C 1/00, B63G 8/00, B63G 8/04, B64C 35/00, B64D 33/02, B64C 15/00, B63H 11/08, B63G 8/08, B64C 1/16, B62D 35/00

(54) **UNITÉ MOBILE**
MOBILE EINHEIT
MOBILE UNIT

(43) Date de publication de la demande: 19.06.2024
(73) Titulaire: Merrien, Jean Paul, 22000 Saint Brieuc (FR)
(72) Inventeur: Merrien, Jean Paul, 22000 Saint Brieuc (FR)
(74) Mandataire: Derriennic, Tangui Jean
(86) Numéro de dépôt international: PCT/EP2022/061670
(87) Numéro de publication internationale: WO 2023/213373

(56) Documents cités:
- JP-A- S63 279 990
- US-A- 1 457 024
- US-A- 2 384 893
- US-A- 4 967 983
- US-A- 5 438 947
- US-A1- 2016 039 477

## Description

### Domaine technique de l'invention

La présente invention concerne les unités mobiles à entrées canalisantes longitudinales motorisées, asservies, optimisées, à trainée longitudinale très réduite, se déplaçant préférentiellement suivant leur axe longitudinal et sur des trajectoires variées notamment transversales.

Les unités mobiles sont des ensembles mécaniques à mobilité augmentée par leurs formes extérieures et intérieures, et par l'intégration de dispositifs propulseurs adaptés dont l'efficacité est améliorée par la mise en oeuvre d'asservissements appropriés. Elles sont conçues pour pouvoir s'appliquer à la majorité des domaines comparables connus.

Les innovations divulguées dans la présente demande de brevet sont relatives à des unités mobiles dont les formes « fuselages » externes et internes sont optimisées en termes de ratio « perte de charge / vitesse de déplacement » suivant leur axe principal longitudinal, qui permettent leur évolution améliorée en milieux aérauliques ou hydrauliques ou mixtes ; leurs caractéristiques de motorisations totalement intégrées et de formes particulières sont adaptées à ces milieux en fonction des applications techniques envisagées et sont telles qu'elles permettent une amélioration très nette du bilan énergétique global de leurs déplacements, par réduction très sensible des ratios « énergies dépensées / distances parcourues et/ou masses globales déplacées », rapportées aux plages de vitesses d'exploitation souhaitées ou prévues, comparativement aux performances des unités mobiles connues dans les domaines d'applications comparables.

Lesdites unités mobiles, en déplacement suivant leur axe principal longitudinal, sont aussi remarquables pour leurs performances en termes de réduction des perturbations macromoléculaires, périphériques et frontales, générées dans la masse fluide traversée :
- dans un milieu aéraulique tel que l'air, et donc notamment en aéronautique, et pour des mobiles se déplaçant au sol, en « traces (perturbations) aérodynamiques et sonores » très sensiblement réduites,
- dans un milieu liquide tel que l'eau, et donc pour les mobiles dits « sous-marins » et pour les mobiles se déplaçant en milieu mixte « liquide et gazeux », exemple « navires de surface », en « traces (perturbations) hydrodynamiques et sonores » très réduites.

Les formes hydrauliques et aérauliques ou aéronautiques nouvelles décrites et celles qui s'en déduisent, pour un professionnel averti, font partie intégrante de la présente innovation divulguée et sont exprimées sous forme de revendications appropriées. Les unités mobiles connues « adaptées » conformément aux revendications de base formulées sont aussi décrites comme étant innovantes.

Lesdites unités mobiles innovantes, revendiquées sont conçues pour se déplacer :
- Préférentiellement sur des trajectoires, s'appuyant sur leur axe principal longitudinal et sur leur prolongement par effet de tangence, elles sont dites « longitudinales »
- Secondairement sur des trajectoires perpendiculaires à celles définies ci-dessus, elles sont dites « transversales », ou
- Sur des trajectoires complexes combinant celles décrites ci-dessous

Ces dites unités mobiles ne sont en aucun cas assimilables à des objets mobiles appartenant à la catégorie des mobiles plus légers que l'air tels que les dirigeables et leurs dérivés car ils ne n'incorporent aucunement et en aucun cas de sacs à gaz à effet ascensionnel.

### Technique antérieure

Les objets mis en mouvement en milieu homogène fluide à forte viscosité tels que les liquides ou à faible viscosité tels que les gaz développent une trainée dans laquelle les énergies dépensées pour produire le mouvement de ces objets se transforment en agitations macro et micromoléculaires périphériques importantes, transférées dans le milieu fluide environnant sous forme d'énergies potentielles et cinétiques difficilement récupérables ; dans la pratique elles sont très peu récupérées en amélioration de leurs performances énergétiques.

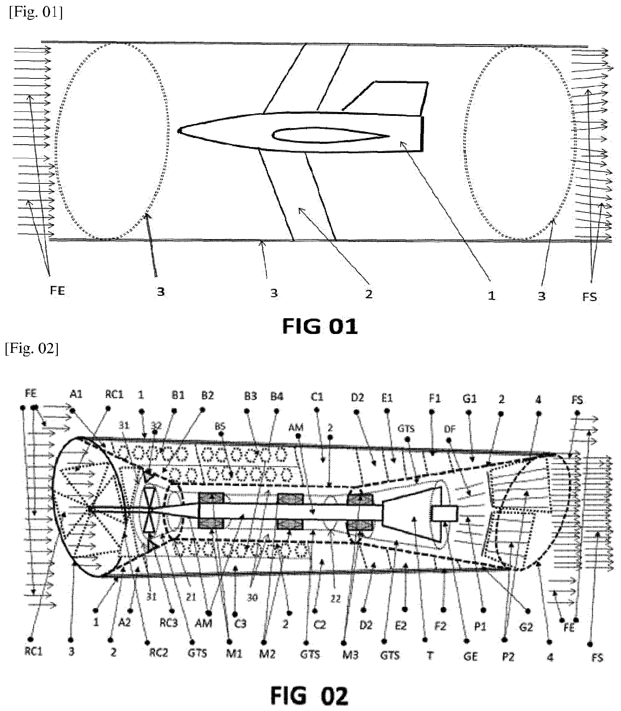

En général, les écoulements fluides du type « Tube de Venturi » sont toujours vus pour des structures externes fixes, statiques (voir [Fig.01]) qui servent de support à un canal fluide interne formant une première enveloppe externe « fixe », de formes et sections intérieures variables ou constantes, agrémentées d'objets mono-formes ou multiformes , mis en condition d'essais dans la veine fluide grâce à des supports, dont on étudie le comportement aérodynamique ou hydraulique en vue de leur optimisation de « formes-profils » pour correspondre à un ou plusieurs critères (économique, vitesse, nuisance sonore, etc.).

Dans ce cadre, sont étudiées les caractéristiques des écoulements fluides « perturbés » par lesdits objets, à savoir : viscosité, pression, vitesse, température, etc.

Les formes étudiées de la sorte sont soit relatives au conduit d'écoulement lui-même, l'enveloppe formant canal, soit, plus généralement, relatives aux objets placés dans ces écoulements fluides de façon à pouvoir mesurer les variations de leurs trainées et les turbulences qu'ils génèrent par leur formes en faisant varier les paramètres caractéristiques des écoulements fluides sachant que ceux-ci sont interdépendants selon les théories de la mécanique des fluides et les lois dites de « similitude » dans ces milieux (cas des maquettes notamment).

Pour les objets placés au milieu de l'écoulement fluide pour une optimisation de leurs formes aérodynamiques ou hydrauliques, les composantes mécaniques et dimensionnelles des profils matérialisés par ces objets sont modifiées et adaptées au fur et à mesure des étapes de l'expérimentation vers l'optimisation recherchée.

L'ensemble des essais relatifs à l'optimisation des formes d'objets en termes de minimisation de leurs trainées aérodynamiques ou hydrauliques ne permettent pas de réduire « drastiquement » ces trainées en raison du fait que les ondes de pression et les flux porteurs de celles-ci sont en général « perdus » sur le plan énergétique, sans recherche de rendement global optimisé, dans la masse fluide ou liquide du milieu environnant d'évolution des dits objets, lesquels peuvent être étudiés sous forme de maquettes (modèles réduits) des objets « grandeur nature » à définir ou à améliorer, à optimiser en terme de traînée fluidique.

Les objets mobiles connus dont les formes extérieures ont ainsi été optimisées, mis en mouvement dans leur environnement fluide d'exploitation, pénètrent la masse fluide en déplaçant, en général, une veine fluide de section égale ou très supérieure à leur plus grande section nette frontale (exemples : avions, hélicoptères, automobiles, bateaux, ...) ; Ils génèrent dans la masse fluide environnante des ondes de pression et de vitesses qui, globalement, se traduisent par des déperditions énergétiques conséquentes qui ne peuvent être utilisées, « récupérées », en termes d'amélioration notoire du rendement énergétique du mouvement produit. Chacun peut constater de visu, notamment en hydraulique (ex : bateaux), la formation de ces turbulences et se rend compte de la déperdition énergétique qui les accompagne.

Ces objets mobiles sont développés dans tous les domaines de la vie courante et sont d'un usage constant ou exceptionnel, ce sont à titre d'exemples non limitatifs :
- pour l'hydraulique :
- mobiles dits « sous-marins » et les objets à propulsion de la catégorie, ex : les submersibles sous-marins, les scooters sous-marins, les automates de recherche sous-marine, etc..., dont les trajectoires guidées, pour l'essentiel, se développent en milieu aquatique dit « sous-marin »
- les véhicules sous-marins à passage interne comme par exemple la publication US 5 438 947 A qui décrit un dispositif à traînée réduite voir très réduite ; ne sont pas optimisés car n'incorporent qu'un seul passage central motorisé de veine fluide, lequel n'est pas asservi à une détection de pression différentielle entre fluide admis et fluide environnant.
- pour l'aéraulique ou aéronautique :
- les avions et de façon générale tous les aéronefs à propulsion interne, exception faite des ballons « dirigeables » (voir ci-dessous),
- les hélicoptères et engins volants assimilés par exemple ceux dits « taxis volants » (Vertical Take-off and Landing aircrafts dits « VTOL »), dont les trajectoires suivies sont multidirectionnelles,
- les mobiles terrestres en appui sur le sol, roulant ou glissant à propulsion par motorisation interne,
- les dirigeables pour lesquels l'objectif de capacités ascensionnelles lié aux volumes de gaz incorporés et stockés plus légers que l'air : Hélium, ou Hydrogène, ..., dans des sacs à gaz et les formes qui s'en déduisent font de ces objets des mobiles à « grand déplacement du milieu fluide environnant » rapporté aux masses propres « efficaces » à déplacer. Malgré leurs caractéristiques parfois innovantes (Brevet US 2013256459), ces objets mobiles (dirigeables) demeurent handicapés en termes d'expression cinétique et ne peuvent concurrencer ni les avions même dans leur version « haute atmosphère » ou « stratosphérique », ni les hélicoptères. Dans les environnements à faible, voire très faible densité, les effets directionnels supposés développés sur ces « airships » par des accessoires connus et/ou dispositions associatives et/ou constructives déclarées innovantes deviennent inopérantes voir « sans efficacité démontrée »
- Pour l'hydraulique associée à l'aéraulique
- les mobiles dits de surface tels que les navires et bateaux à propulsion ou tractés, en appui « flottation » sur la surface de l'eau, déplacent des volumes d'eau et d'air en créant une trainée à la fois hydrodynamique et aérodynamique mais aussi une trainée due à la formation des vagues et remous qui sont le résultat d'une interaction entre les milieux liquide et gazeux en contact, mis en mouvement turbulent du fait du déplacement des dits mobiles sous l'impulsion de forces motrices développées par une motorisation interne.

### Présentation de l'invention

La présente invention a pour objet de réduire notablement voire drastiquement les déperditions énergétiques pour les mobiles des catégories de mobiles ci-dessus mentionnées et propose un ensemble de familles d'unités mobiles destinées à se déplacer dans un fluide liquide, gazeux ou mixte ; ces dites unités mobiles nouvelles se présentent comme des ensembles structurés (exemples schématiques simplifiés - voir [Fig.02], 04, et 11) dont les composantes de base sont indissociables.

L'invention décrit une unité mobile telle que définie dans la revendication 1.

Plus particulièrement les détails des différentes parties :

### A -

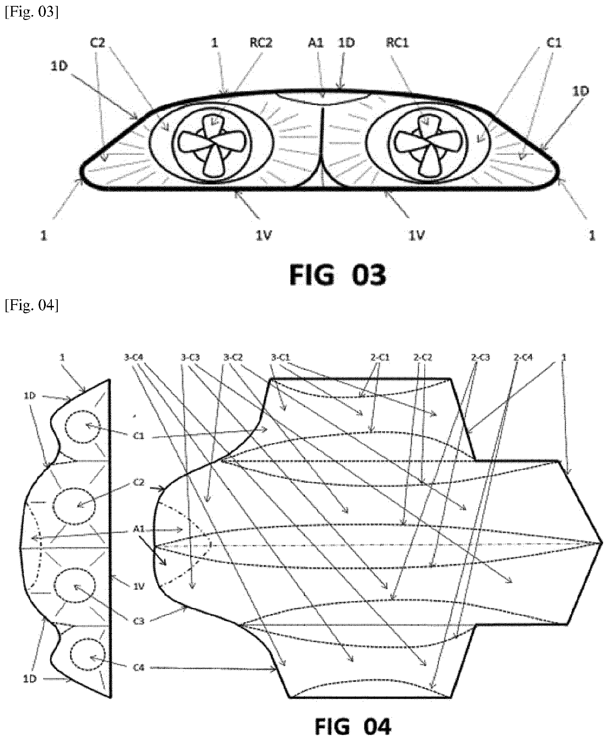

Une enveloppe « fuselage » externe Rep 1, à faible variation de section, diminuant en général légèrement de l'avant vers l'arrière, donc de faible conicité, voir cylindrique, telle qu'elle absorbe par dépression surfacique le maximum des masses fluides concernées par les effets de décollements laminaires périphériques générées par le déplacement des dites unités mobiles, et telle qu'elle ne déplace, autour d'elle qu'un minimum de masse fluidique environnante, avec une traînée périmétrique minimale; ces enveloppes « fuselage » sont de sections quelconques, notamment autres que circulaires et préférentiellement aplaties, ou très aplaties, voir même plates sur la partie inférieure dite 'ventrale', de longueur finie supérieure à la plus grande dimension transversale nette des dites enveloppes « fuselage »; les dites formes externes très aplaties, dans le domaine aéraulique notamment mais aussi en hydraulique, contribuent, en fonction des vitesses de déplacement, à développer sur cette dite zone aplatie notamment ventrale, pour une inclinaison à angle même relativement faible de l'axe de la dite unité mobile sur l'axe de la trajectoire suivie, pilotée, une surpression par rapport à celle existant dans l'environnement traversé, et par effet inverse une dépression quasi symétrique sur la surface opposée, dorsale, non symétrique de la surface ventrale, de la dite enveloppe extérieure ; la résultante de ces pressions différentielles opposées (ventrales et dorsales) , appliquées à la totalité des surfaces concernées, en terme de forces résultantes, auxquelles il faut enlever la force de la pesanteur, se traduit par un effet ascensionnel qui permet à la dite unité mobile de se mouvoir en montée progressive; et inversement si l'angle d'inclinaison de la dite unité sur l'axe de sa trajectoire est piloté pour devenir négatif, les dites pressions ventrales et dorsales s'inversent et en terme de forces résultantes, l'effet ascensionnel devient un effet de poussée inversé qui s'ajoute à la force de la pesanteur , contribuant à la descente progressive de la dite unité mobile. Autrement dit les formes « fuselage » décrites sont capables de développer une force résultante dite de « portance propre » telle que lesdites unités mobiles associées aient aussi une capacité à se déplacer perpendiculairement à la direction longitudinale de pénétration des dites unités mobiles dans les fluides qu'elles traversent. A titre d'exemples non limitatif voir les Figures. 03 et 04 des formes « fuselage » qui permettent le développement de telles forces de portance.

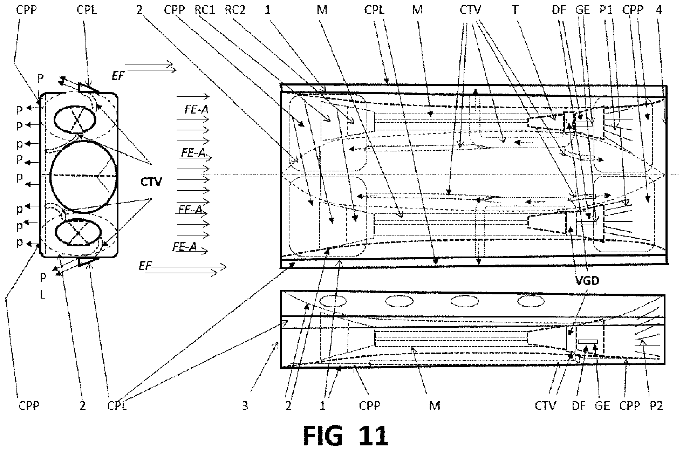

Lesdites unités mobiles, revendiquées, appliquées à l'aéraulique, dans leurs formes « fuselage » aplaties, très aplaties ou plates en face ventrale, présenteront « accessoirement », en raccordement longitudinal des faces ventrales et dorsales,
1- des extensions symétriques à profil plat en développement progressif, à bords horizontaux, puis progressivement relevés ou abaissés, prolongeant la jonction des dites faces en ayant une forme d'aileron, fine, dite « winglet » dont la longueur s'étendra depuis l'avant jusque l'arrière des dites unités mobiles ; elles se développent progressivement d'une valeur nulle à l'avant (section frontale) jusqu'à atteindre sa valeur maximale à hauteur de la terminaison arrière de l'enveloppe fuselage ; ces formes « ajoutées » à l'enveloppe fuselage externe peuvent aussi se décliner comme un dispositif rétractable et escamotable. Ces formes « winglets » atténuent les turbulences rotationnelles de type « Vortex » qui se forment notamment en bout d'ailes d'avions ; elles sont donc un complément technique utile voir indispensable pour la définition des formes « fuselages » externes associées aux mobiles nouveaux décrits ;
   Ces extensions de fuselage en forme dites « Winglets » pour des applications particulières, sont avantageusement remplacées par
2- des extensions horizontales symétriques, en profil longitudinal constant, dont les sections transversales se réduisent progressivement au fur et à mesure qu'elles se développent à distance de l'axe principal de ladite unité mobile ; elles s'étendent de l'avant des dites formes « fuselage » jusqu'à leur extrémité « arrière ; elles participent à la définition frontale sectionnelle de l'enveloppe « fuselage » auxquelles elles sont intégrées ; lorsqu'elles sont développées, elles participent grandement à l'extension des surfaces portantes notamment ventrales mises à contribution pour développer des effets de portance aérodynamique, mais aussi des forces transversales perpendiculaires à l'axe longitudinal principal des dites unités mobiles.( ex : Rep CPL / [Fig. 11]).

### B -

L'enveloppe « fuselage » externe Rep1 à faible variation de section, décrite ci-dessus incorpore indissociablement :
plusieurs ou une pluralité de canaux «fluidiques longitudinaux » internes, ex sur [Fig.04]: Rep 2C1, Rep 2C2, Rep 2C3, Rep 2C4, voir un seul canal Rep 2, traversant longitudinalement les dites unités mobiles ; ces dits canaux internes sont configurés de sorte que la somme de leurs sections « entrantes-frontales » est égale à la section nette frontale de la dite unité mobile et que la somme de leurs sections « arrière de sortie » soit égale à la section nette « arrière » de l'enveloppe « fuselage » qui les incorpore ; ces dits canaux fluidiques internes longitudinaux sont tous motorisés pour assurer la circulation « certaine », assurée, de la « totalité » de la veine fluide frontale qui s'opposerait au déplacement de ladite unité mobile à travers le milieu fluide environnant, de sorte que
- les vitesses et les pressions des flux globalisant l'ensemble des veines fluides sortant de ces dits canaux internes longitudinaux, sous l'impulsion d'un ensemble de motorisations appropriées, soient supérieures à la vitesse et à la pression du flux global entrant dans les dits canaux internes longitudinaux,
- la pression mesurée dans la veine fluide frontale se présentant immédiatement à l'entrée de ces dits canaux internes longitudinaux, sous l'impulsion du même ensemble de motorisations, soit constamment inférieure à la pression environnante

Plusieurs ou une pluralité de canaux fluidiques internes dits « transversaux », connectés,
- dans leur définition fluidique « amont », à la demande, aux canaux fluidiques longitudinaux, à hauteur de la sortie de leurs motorisations,
- dans leur définition fluidique « aval finale » à des zones déterminées de l'enveloppe « fuselage » externe,
- dans leur définition fluidique « intermédiaires » ces canaux fluidiques relient de manière totalement internalisée, à l'intérieur même de l'enveloppe « fuselage » définie ci-dessus, les deux précédentes extrémités,
   ces canaux fluidiques« transversaux » internes, dont l'alimentation « amont » est asservie à la demande du pilotage de l'unité mobile constituée qui les incorporent, permettent une distribution « à la demande », partielle ou totale des flux transitant dans les canaux fluidiques « longitudinaux » ; leur alimentation pilotée, dosée, suivant les techniques mises en oeuvre à leurs extrémités, développées à la surface de la dite enveloppe « fuselage », permet une distribution contrôlée de flux captés à partir des canaux principaux longitudinaux vers des zones surfaciques spécifiques définies de l'enveloppe « fuselage » externe ; ces canaux fluidiques transversaux peuvent se subdiviser d'amont en aval de leur parcours interne pour alimenter chacun un ou plusieurs points ou zones de la surface de l'enveloppe « fuselage » externe.
- La surcapacité énergétique emmagasinée dans le flux « longitudinal » global sortant des canaux fluidiques longitudinaux, comparée à l'énergie strictement nécessaire à faire admettre la globalité du flux frontal entrant dans les dits canaux longitudinaux internes, fournie par les dites motorisations internes pilotées, donne aux dites unités mobiles de réelles capacités à être propulsées et donc se mouvoir à des vitesses et accélérations qui dépendent des poids propres (massiques) de construction des dites unités, des résistances fluidiques qu'elles génèrent et des forces propulsives résultantes disponibles.
- lesdits canaux internes longitudinaux, ex [Fig.02] : Rep 2 ou [Fig.04] : Rep 2C1, Rep 2C2, Rep 2C3, Rep 2C4, comprennent chacun successivement une portion d'entrée de section convergente adaptée à l'incorporation de dispositifs « accélérateurs et/ou compresseurs » du flux « entrant », une portion intermédiaire de section sensiblement constante adaptée à l'incorporation totalement internalisée de dispositifs propulsifs (et/ou de motorisation) et une portion de sortie de section divergente, adaptée au développement de solutions techniques permettant la maîtrise des flux propulsifs au moment de leur éjection « arrière » dans le milieu fluide environnant traversé.

Ces portions dont les longueurs relatives peuvent être variables et adaptées, sont conçues avec une possibilité de se raccorder entre elles à l'intérieur même des dites unités mobiles, et se raccordent aux sections « avant » et « arrière » de l'enveloppe externe pour constituer :
plusieurs ou une multitude de sous-canaux fluidiques internes, à écoulement interne optimisé permettant le passage de la « totalité » de la veine fluide captée par la section globale « avant » de l'ensemble constitué, laquelle veine fluide est conduite
soit globalement et préférentiellement jusqu'à son échappement direct par la section « arrière » du même ensemble de canaux fluidiques « longitudinaux »
soit partiellement, et temporairement, dans des canaux internes dits « transversaux » dont les extrémités, en forme de tuyères, sont disposées par zones prédéfinies, perpendiculairement à la face ventrale aplatie des dites unités mobiles et accessoirement aux extensions de cette dite face ventrale, jusqu'à une mise en communication avec le milieu environnant ;
   Vus globalement, lesdits canaux fluidiques longitudinaux sont tels que la somme de leurs sections efficaces en termes de continuité fluidique est, en se déplaçant depuis l'avant vers l'arrière des « fuselages internes » associés, d'abord convergente, puis sensiblement constante en tenant compte de l'incorporation des dits dispositifs propulsifs, puis divergente. La continuité fluidique des dits canaux au regard des sections variables supposées par leur construction est telle que les rapports des dites sections successives répondent aux lois de la dynamique des fluides reliant les données : débits, sections de passage, vitesses, pressions (effet Venturi), et températures en tenant compte des apports énergétiques, dynamiques, mécaniques et/ou thermodynamique des motorisations associées.

Lesdits canaux fluidiques « transversaux » sont conçus comme des dérivations internes des canaux fluidiques longitudinaux, en prise de débit fluidique, notamment après les zones de motorisation et sont alimentés par des dispositifs de mise en communication pilotés et asservis aux demandes de déplacement transversal ; cette mise en communication diminue temporairement le débit de transit fluidique « arrière » des canaux longitudinaux qui les alimentent et donc temporairement les capacités propulsives « longitudinales » des canaux fluidiques concernés.

Cette particularité technique à usage intermittent est à mettre en perspective au regard de la demande moyenne des déplacements soit horizontaux soit verticaux des dites unités mobiles, en notant que la très grande majorité des déplacements sont « horizontaux » ou à tendance horizontale marquée et que les déplacements dits « verticaux » ne représentent qu'une relative faible partie d'un déplacement vu dans son intégralité ; cette spécificité, dans le domaine aéraulique, appliquée aux unités mobiles dont les fonctionnalités sont comparables à celles des hélicoptères ou celles des unités volantes dites VTOL, permet une distribution différentielle, pilotée de la puissance de motorisation totale installée dans les dites unités mobiles pour assurer leur mobilité suivant leur axe longitudinal principal mais aussi sur des trajectoires qui s'en écartent ou qui leur sont perpendiculaires par un effet direct de poussée latérale, développée par des flux propulsifs appropriés, autres que les effets de portance cités ci-dessus.

Lesdits canaux fluidiques « longitudinaux » internes, selon une disposition constructive revendiquée, peuvent se scinder en sous canaux de longueurs inférieures ou égales aux longueurs des trois portions principales, en respectant le principe de la continuité fluidique décrit ci-dessus, afin de créer des circulations fluidiques spécialisées qui peuvent servir d'écrans ou de boucliers internes thermiques, vibratoires ou sonores aux effets générés par les dispositifs propulsifs internes. Ces sous-canaux fluidiques peuvent aussi être utilisés pour guider une partie du flux « entrant » jusqu' à la troisième partie « divergente » des dits canaux internes pour constituer un sous-canal ou un ensemble de sous-canaux de guidage d'un double flux secondaire (connu pour améliorer l'efficacité propulsive des dits « réacteurs » en aéronautique).

Ces dits canaux fluidiques longitudinaux, en interne, ne sont pas nécessairement indépendants depuis la section d'entrée jusqu'à la section de sortie ; les flux qu'ils conduisent peuvent se mélanger ou se dissocier par l'action de mécanismes ou composants asservis, suivants les effets fluidiques internes recherchés pour optimiser le fonctionnement global des dites unités mobiles.

Les entrées de ces dits canaux fluidiques longitudinaux internes sont telles que la somme de leurs sections nettes sont quasiment égales à la section nette de l'avant de « l'enveloppe fuselage externe » décrite ci-dessus.

Les entrées de ces canaux fluides longitudinaux internes, à hauteur de la section la plus avancée de l'enveloppe « fuselage » externe décrite ci-dessus, sont dégagées de tout dispositif complémentaire de guidage de la ou des veines fluides entrant frontalement dans lesdites unités mobiles, afin que la totalité du fluide concerné puisse y pénétrer sans générer de forces latérales ou de turbulences qui seraient la traduction d'effets externes de traînée et de pertes énergétiques non souhaités.

La divergence de la troisième partie des canaux fluidiques longitudinaux internes est adaptée à l'incorporation de dispositifs capteurs d'énergie et de parallélisation des flux traversant et s'atténue pour tendre vers zéro au niveau de la section de raccordement du dit au moins un canal interne (ou desdits canaux longitudinaux lorsqu'ils sont multiples) avec la terminaison de l'enveloppe « fuselage » externe de ladite unité mobile ; ce raccordement est tangentiel ou quasi-tangentiel afin de minimiser les turbulences entre « flux internes traversant » éjectés et le « flux externe enveloppant », à ce point de confluence (jonction) en extrémité arrière de la dite unité mobile.

Les sorties des dits canaux longitudinaux internes sont telles que la somme de leurs sections nettes sont quasiment égales à la section nette de la partie terminale 'arrière' de l'enveloppe « fuselage » écrite ci-dessus.

Les sorties de ces canaux fluides longitudinaux internes, à hauteur de la section nette la plus reculée de l'enveloppe « fuselage » externe décrite ci-dessus et au-delà de cette section terminale, sont dégagées de tout dispositif complémentaire de guidage de la ou des veines fluides sortant de ladite unité mobile. Les dispositifs de guidage des dites veines fluides, au moment de leur éjection à l'arrière des dites unités mobiles, sont totalement internes et participent au développement des forces de poussée par effets de pression et/ou de vitesse « non axiales » au regard de l'axe longitudinal principal des dites unités, qui contribuent ainsi au changement de direction des dites unités mobiles le long d'une trajectoire imposée.

L'incorporation de conduits fluidiques dits « transversaux » tels que décrits, prévus pour permettre le développement de forces propulsives transverses ne réduit en aucune manière les caractéristiques décrites des canaux fluidiques dits « longitudinaux ». Au plan fluidique, l'alimentation de ces dits canaux transversaux, réalisée à la sortie « haute pression » des dispositifs de motorisation, préférentiellement après les dispositifs « capteurs » d'énergie (ex : turbine), se matérialise par des « vannes »pilotées à grand débit fluide (ex: [Fig. 11] Rep VGD) qui ont la capacité, à perte minimale d'énergie, dites « pertes de charge », de guider, réorienter la totalité ou une partie des flux les traversant vers les sections d' entrées des conduits fluidiques « transversaux ». Ces vannes peuvent être, par exemple, à opercules segmentés animés par des dispositifs mécaniques eux-mêmes animés par des actionneurs électriques, ou pneumatiques ou hydrauliques pilotés en fonction de la demande. Ces dites vannes, Rep VGD, synchronisées en fonctionnement avec des clapets à grande ouverture montés en vis-à-vis, en périphérie des gaines « conduits » formant localement les canaux fluidiques longitudinaux ; en position d'ouverture ils dégagent une grande section de communication entre les canaux fluidiques longitudinaux et ceux-dits transversaux, alors que les opercules précités occultent le passage fluide descendant les canaux longitudinaux ; les mouvements de ces dispositifs sont synchronisés de manière telle que les « chocs fluidiques » ( analogues à ceux dits « en coup de bélier » dans une canalisation hydraulique) soient évités ou très atténués. Les opercules précités sont aussi conçus de façon que les flux transitant dans les canaux longitudinaux principaux soient ralentis ou freinés au minimum lorsqu'ils ne sont pas sollicités en « déviation de flux ».

### C -

Dans les unités mobiles connues de l'art antérieur (voitures automobiles, bateaux, avions, par exemple), le fluide s'opposant à l'avancement de l'unité mobile est évacué et dévié totalement ou majoritairement « autour » de l'unité mobile et crée ainsi une « trainée dynamique » importante qui se traduit par un foisonnement fluidique périphérique et une dépression « arrière » dite de freinage à l'avancement. Il en résulte donc de fortes pertes énergétiques et des désagréments acoustiques dépendant des turbulences et variations de pression et vitesses créées dans le milieu fluide environnant traversé.

Les unités mobiles innovantes décrites proposent de « capter par un effet de dépression fluidique « maîtrisée », généré par des accélérateurs internes de flux, animés, actionnés par une motorisation interne adaptée, auto adaptative, efficace, la « totalité » du fluide (veine fluide « avant ») s'opposant à l'avancement de l'unité mobile , plutôt que de l'évacuer par déviation fluidique forcée autour de cette dernière, sans pour autant « augmenter significativement» la section nette frontale des dites unités mobiles et donc la section nette globale des dites enveloppes « fuselages » externes augmentée ou non de celles des composants aérodynamiques nécessaires tels que décrits qui permettent l'exploitation optimale des formes dites « winglets » et des terminaisons de canaux fluidiques transversaux, en surfaces spécifiques zonées développées le long de l'enveloppe « fuselage » externe à section constante ou à faible conicité.

Ainsi, en captant la totalité du fluide s'opposant à l'avancement des dites unités mobiles et en faisant passer le fluide environnant « frontal total » dans une pluralité de ces dits canaux internes longitudinaux (et au moins un canal longitudinal interne), présentant une forme particulière, adaptée, permettant d'obtenir une circulation fluide proche de celle obtenue en Tube dit de « Venturi », on améliore de façon très importante, sur une trajectoire « longitudinale » les performances globales énergétiques et acoustiques des dites unités mobiles :

D'une part, dans le milieu fluide environnant, lesdites unités mobiles revendiquées ne créent qu'une faible, voire très faible perturbation externe en compression et déplacement des couches fluides enveloppantes externes quelle que soit la vitesse de déplacement car:

L'enveloppe « fuselage » externe qui les définit extérieurement, de sections quasi constantes ou en faibles diminutions de sections « avant-arrière » ne produit qu'une faible (voir nulle) trainée périphérique

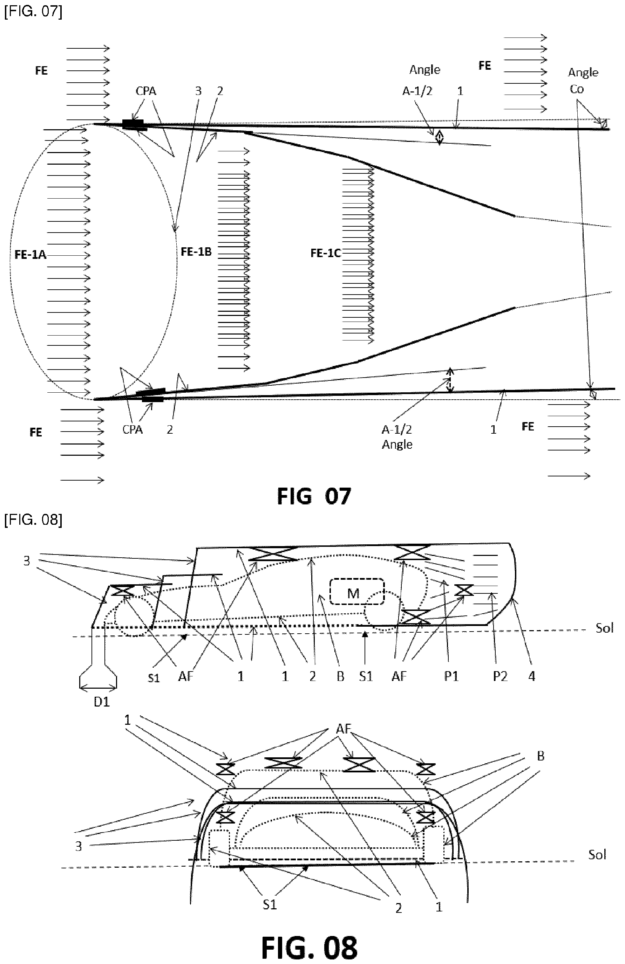

La puissance de la motorisation interne, développée par des groupes propulsifs, est « auto-adaptée » par asservissements pilotés par l'intermédiaire de capteurs (ex : [Fig.07] Rep CPA) de « pression-dépression » montés au niveau de la section entrante « avant » et permet, par l'action de dispositifs « ventilo-compresseurs » ou de pompes « avant » à grand débit, asservis, connectés aux dites motorisations, d'éviter le refoulement « avant » externe du fluide s'opposant au déplacement des dites unités mobiles.

Cette particularité constructive innovante qui évite la formation d'ondes de pression « avant » et latérales externes indépendamment de la vitesse de déplacement des dites unités mobiles, permet la construction d'unités mobiles en capacité de s'affranchir des effets d'ondes de compression « avant » externes telle que constatées en particulier, dans le domaine de l'aéraulique, en franchissement du dit « mur du son » pour un fluide traversé tel que l'air. En outre, les particularités constructives d'association d'un enveloppe « fuselage » externe de section quasi-constante, ou à faible conicité longitudinale, à des canaux fluidiques internes « longitudinaux » motorisés, absorbeurs de flux frontal qui évitent le refoulement externe de ce flux le long et autour de l'enveloppe « fuselage » externe, qui produisent un flux global interne dont l'énergie propulsive est augmentée, permettent la constitution, la conception d'unités mobiles nouvelles dont les trainées de tous ordres sont très réduites, voir minimales

Les masses fluides admises frontalement, lorsqu'elles sont compressibles (le cas en aéraulique-aéronautique) sont comprimées naturellement (effet tunnel) et mécaniquement par les dispositifs frontaux « ventilo-compresseurs » d'aide à leur admission, ce qui augmente leur énergie potentielle. Cette énergie, cumulée aux énergies de motorisation, est récupérée en phase terminale de transit fluidique, par captation mécanique (effet « turbine ») globalement associé à une décompression fluidique mise à profit en effet propulsif « arrière » au moment de l'éjection de la veine fluidique dans le milieu environnant.

Les dites unités mobiles revendiquées, conçues pour absorber la « totalité » de la veine fluide frontale s'opposant à leur déplacement, permettent la conception de vecteurs (mobiles) de transport, moins énergivores et moins perturbants ( en particulier au plan sonore) que ceux actuellement développés ( ex : avions en tous genres, véhicules terrestres, bateaux, ...), dont les vitesses d'exploitation peuvent être améliorées, notamment dans le domaine aéronautique avec des vitesses supérieures à celle dite du « mur du son», sans effet similaire au franchissement de cette limite par les mobiles connus à ce jour.

Ces unités mobiles à déplacement préférentiel « longitudinal et axial », ayant de réelles capacités de déplacements transverses, ne peuvent en aucun point de comparaison être assimilées à des « dirigeables » connus pour leur capacité à se déplacer verticalement, puis horizontalement en restant handicapés par les sections très importantes des sacs à gaz qu'ils incorporent, lesquels constituent des freins aérodynamiques connus.

D'autre part, le fluide capté par la section « avant » des dites unités mobiles passe dans plusieurs, voir un, canaux motorisés et ressort de ces derniers à une pression et une vitesse supérieure à celles qu'il avait à l'entrée de ladite unité mobile quelle que soit la vitesse propre de celle-ci. Comme indiqué ci-dessus, les portions d'entrée, intermédiaire et de sortie du ou des canaux internes de passage du fluide se comportent comme des canaux hydrauliques, aérauliques, ou mixtes, forment un assemblage de composants qui, globalement, répond au principe du « Tube dit de Venturi » et les fluides qui y sont admis sont soumis aux lois d'écoulements fluides dites de Bernoulli et donc aux lois d'écoulements fluides à faibles, moyennes et/ou grandes ou très grandes vitesses notamment dites « supersoniques » applicables en aéraulique, alors que les dites ondes de pression « avant » sont totalement absorbées par les dits canaux internes et ne peuvent se propager à l'extérieur de l'enveloppe « fuselage » externe.

Ce ou ces canaux internes longitudinaux de sections successives convergentes puis divergentes, sont conçus et profilés au plan aéraulique, ou hydraulique, ou en écoulement mixte (liquide-gaz) de façon à générer le minimum de pertes internes d'énergie par effet de turbulences et à minimiser les effets de cavitation suivant les vitesses d'écoulement du fluide au regard de la nature même de ce fluide.

En applications aérauliques, selon un aspect particulier de l'invention, ledit/les dits ensembles propulsifs incorporent un équipement d'accélération (action « ventilateur ») et de compression (action « compresseur ») (ou effet de pompe à grand débit : compresseur et accélérateur) du fluide entrant dans la zone « canal » longitudinale amont de chaque ensemble propulsif.

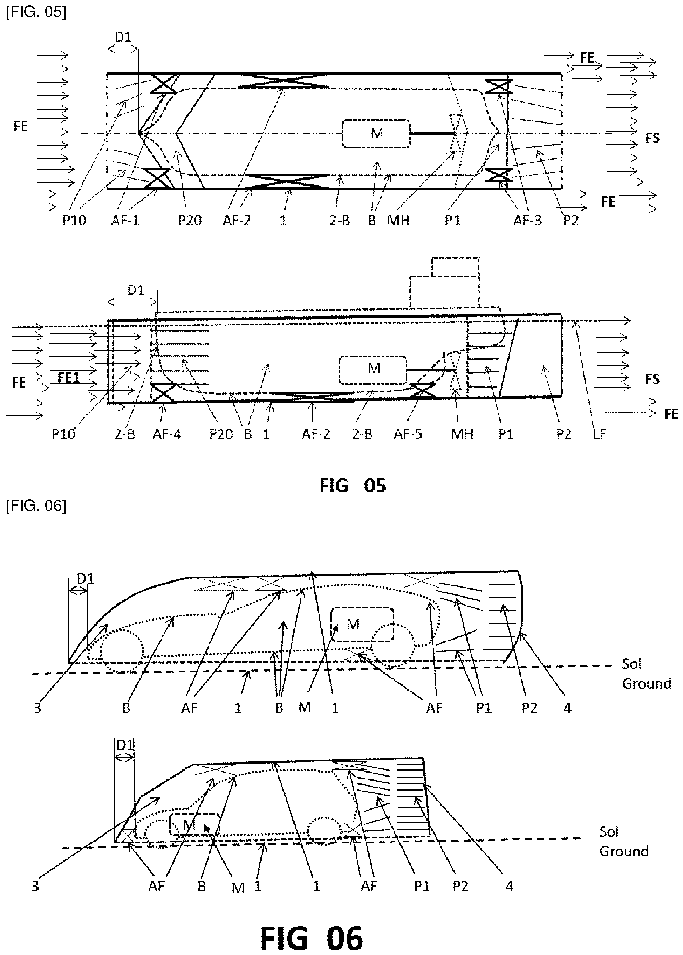

Les énergies cinétiques (vitesse) et/ou potentielles de pression développées dès l'entrée dans la première partie convergente de ces conduits fluidiques par mise en vitesses et en pressions croissantes sous l'action développée par les groupes propulsifs incorporés, lesquels actionnent une pluralité d'accélérateurs de flux et/ou de « ventilateurs-compresseurs » ' avant' ou frontaux (exemples très schématiques [Fig.02] : Rep RC1-RC2-RC3 ou [Fig.06] 08 Rep AF) , lesquels peuvent être étagés et donc à action par paliers de vitesses et/ou de pression», sont stockées dans le fluide pénétrant dans la section intermédiaire des dits conduits fluidiques.

Ces énergies sont ensuite augmentées d'un nouveau palier énergétique sous l'action motrice directe (ex : effet thermique par combustion de propergols ou autres carburants, ou d'hélices à effet progressif ...) de ce ou ces groupes propulsifs (exemples très schématiques : Rep M) agissant dans la partie centrale et dont l'effet se manifeste plus particulièrement dans la partie centrale « arrière » de ces conduits fluidiques.

Cette énergie globale acquise par le flux entrant, passé dans le/les groupes propulsifs, est libérée progressivement sous la forme d'énergie cinétique et/ou de décompression dans la troisième partie divergente de ces conduits fluidiques « longitudinaux » en développant :

sur un dispositif de type « turbine », une force « motrice » qui est mise à profit pour actionner directement ou indirectement, notamment en passant par un support « électrique » ou « hydraulique à haute pression » , les « ventilo-compresseurs » précités et tout ou partie des dispositifs internes de commandes (électriques, hydrauliques, ...) nécessaires pour assurer les fonctions internes, notamment de guidage et de contrôle des dites unités mobiles,

sur les parois internes de formes divergentes de cette troisième partie, une force résultante de « contre-réaction » par pression décroissante, et,

sur le fluide environnant périphérique rejoint et jonctionné à leur sortie de l'unité mobile, une force de « contre-réaction » cinétique et d'équilibrage des pressions, globalement propulsive.

En applications hydrauliques, lesdits dispositifs « accélérateurs de débit » sont des « pompes-turbines » qui absorbent de manière contrôlée la totalité du fluide de la zone frontale « avant ». Les groupes propulsifs agissent sur un fluide que l'on peut considérer comme étant peu compressible (voir incompressible) et qui ne peut être mis en jeu dans une réaction exothermique. Les mises en dépression « avant » de la première partie convergente des conduits fluidiques longitudinaux internes se feront sous l'action de « pompes-turbines » (ex : hélices...) actionnées par un ou plusieurs dispositifs moteurs internes, à actions étagées agissant en « accélérateurs - compresseurs » de flux ( exemple schématique [Fig.05]: Rep AF1- AF2- AF3- AF4 -AF5 ) (vitesse et pression) dont la puissance est telle que la veine frontale « avant » du fluide environnant, s'opposant à l'avancée de la dite unité mobile, soit « totalement absorbée » par le ou les conduits fluidiques « longitudinaux » mis en oeuvre. Le ou les flux aspirés et poussés de la sorte jusque dans la partie intermédiaire des dits conduits « longitudinaux »internes sont progressivement à « hautes vitesses et pressions » sur une partie de la longueur imposée par la constitution structurelle de l'unité mobile ; ces conduits « longitudinaux » internes intermédiaires peuvent, ensuite, être eux-mêmes équipés de dispositifs propulseurs (pompes-turbines, vis, ...) actionnés par un ou plusieurs dispositifs moteurs internes (électriques, thermiques, ...), les mêmes ou différents de ceux qui actionnent les hélices précitées, lesquels augmentent en un ou plusieurs points la vitesse et la pression du / des flux traversant. La qualité hydrodynamique des dispositifs mis en oeuvre sera telle qu'elle ne créera en aucun cas de phénomènes de cavitation. En troisième partie, divergente des conduits fluidiques internes, le/ les flux, mis en sortie à hautes vitesses et pression des sections intermédiaires des conduits fluidiques longitudinaux, seront ralentis et dépressurisés dans un « diffuseur-stabilisateur-parallélisateur » de flux qui minimisera les turbulences macroscopiques, réduira les gradients de vitesses et pressions dans des proportions telles que le flux total en éjection à l'arrière de la dite unité mobile sera contrôlé, en pression relativement proche de la pression environnante (minimisation des effets de turbulence d'éjection) et à une vitesse adaptée à celle souhaitée pour assurer, par « contre-réaction » sur le milieu environnant de sortie, la vitesse d'évolution souhaitée de la dite unité mobile. La section globale de sortie du flux (admis à l'avant, puis accéléré, puis ralenti) sera sensiblement égale à la section d'entrée de sorte que la totalité de la veine fluide éjectée contribue à l'effet de poussée et vitesse recherchée en ne créant qu'un minimum de turbulences sous forme de traînée turbulente qui seraient la traduction d'une dissipation énergétique mal maîtrisée. Pour certaines applications hydrauliques, lesdits conduits fluidiques ainsi que les dispositifs de propulsion hydrauliques seront construits en recherche optimale d'une minimisation des vibrations mécaniques, acoustiques, de sorte que la signature « trace hydraulique » de ces dispositifs internes se conjugue à la qualité hydrodynamique de l'enveloppe « fuselage » externe. Ces particularités constructives, pour certaines applications permettent le développement d'unités mobiles nouvelles dont la trace acoustique et vibratoire globale tend vers un minimum.

Pour certaines applications hydrauliques, lesdits canaux longitudinaux fluidiques ainsi que les dispositifs de propulsion hydrauliques seront construits de telle manière qu'une partie du flux, mis en haute pression par les dispositifs précités, soit acheminé spécifiquement dans une zone dite « chaude » des dispositifs internes de motorisation et par échange thermique, augmente son énergie potentielle, en pression et température, sans changement de phase (passage à l'état « vapeur » ), lequel serait générateur de turbulences, micro-cavitation et nuisances sonores. Ce flux spécifique dit « chauffé » est, dans le sens descendant de sa circulation, réinjecté de manière appropriée, diffuse, dans le flux principal descendant, dans la zone intermédiaire qui précède immédiatement l'entrée de la troisième partie divergente du canal fluidique correspondant ; il développe, par adaptation « égalisation progressive des pressions et températures » et mixage des flux, une accélération globale de ce flux mise à contribution pour augmenter l'effet propulsif produit dans la troisième partie divergente des dits conduits fluidiques longitudinaux est internes. Ce mixage de flux sera contrôlé de façon à éviter ou minimiser la formation de bulles de vapeur qui, en aucun cas, ne devraient encore exister au moment de son éjection finale dans le flux environnant (perte évidente d'énergie).

En applications hydrauliques et en milieux mixtes (ex : air-eau) la zone immédiate, interne qui précède l'éjection fluide dans le milieu fluide environnant sera équipée de dispositifs « internes » déflecteurs de flux, asservis aux commandes des dites unités mobiles (exemples Rep P1 et P2); Ces dispositifs développent des forces non axiales qui contribuent soit au guidage des dites unités (gouvernail), soit à leur déjaugeage (effet « foil »), soit à leur stabilité (antiroulis dynamique). Lesdits conduits fluidiques longitudinaux, dans leur troisième partie, divergente, seront conçus de manière à conduire le maximum de flux éjecté dans le milieu environnant dans sa composante dont la « densité-pression » est la plus importante, c'est-à-dire l'eau, mais aussi dans la zone dont la pression relative est la plus importante, donc le plus possible en profondeur, tout en respectant le principe de la parallélisation des flux longitudinaux traversant, avant leur éjection dans le milieu environnant des dites unités mobiles. Pour des applications hydrauliques de ces mobiles, les canaux internes « transversaux » seront alimentés, en amont comme décrit ci-dessus, en haute pression par des vannes à haut débit et faible perte de charge ; les extrémités d'échappement de ces dits canaux internes transversaux, développées en zones spécifiques à la surface de l'enveloppe « fuselage » externe seront-elles-mêmes équipées de micro-vannes dont l'ouverture est asservie à la détection du niveau de l'eau ; l'ensemble du dispositif sera piloté en relation avec les commandes de navigation

Selon un aspect particulier de l'invention, lesdits canaux fluidiques longitudinaux internes s'étendent de l'avant à l'arrière des dites unités mobiles, globalement suivant l'axe de déplacement de ladite unité mobile sans pour autant être nécessairement « centrés » au droit des sections de l'enveloppe « fuselage » externe ou strictement parallèles par tronçon à l'axe de cette enveloppe « fuselage » externe. Leurs sections d'entrée à l'avant de l'unité mobile sont globalement orientées perpendiculairement à l'axe de déplacement de l'unité mobile de sorte que le ou les canaux fluidiques longitudinaux internes sont aptes à capter le maximum, voir « la quasi-totalité » du fluide environnant s'opposant frontalement à l'avancement de ladite unité mobile, (en principe : la totalité de ce fluide).

Les dispositifs propulsifs internes qui équipent ces unités mobiles seront dimensionnés de sorte que la totalité de la veine fluide 'entrante' soit mise en dépression « avant » par rapport à la pression considérée comme constante du fluide environnant traversé par lesdites unités mobiles lorsque ces dites unités mobiles sont en accélération ou en déplacement à vitesse constante. Le principe de la mise en dépression « avant » contrôlée des dites unités mobiles n'est plus nécessairement mis en action dans le cas des décélérations (diminution de vitesse) des dites unités. Lesdits dispositifs propulsifs internes, sans déroger au principe de l'absorption de l'intégralité de la veine fluide frontale s'opposant au déplacement des dites unités mobiles, seront optimisés de façon à n'introduire dans le processus de motorisation interne suivant la vitesse instantanée souhaitée qu'une partie ou la totalité du fluide entrant admis, l'autre partie étant néanmoins admise, guidée et canalisée dans des canaux fluidiques longitudinaux secondaires, lesquels sont développés concentriques autour des canaux principaux, pour amortir les effets thermiques, vibratoires, sonores et de turbulence générés par les motorisations des groupes propulsifs internes et pour participer, en leur extrémité « aval », secondairement à l'effet propulsif par effet dit de double flux.

Selon un autre aspect particulier de l'invention, ledit/lesdits canaux longitudinaux internes comprennent, chacun, dans leur portion de sortie « divergente », une pluralité de dispositifs internes de parallélisation et/ ou de stabilisation de la globalité des veines fluides avant leur éjection dans le milieu fluide environnant. Ces dispositifs ne sont en aucun cas 'déportés' à l'extérieur de la partie divergente finale des dits canaux fluidiques internes, ni déportés au-delà de la section finale arrière du corps du « fuselage » externe ; ils ne peuvent être comparés en termes d'efficacité aux dispositifs coniques revendiqués comme innovants (voir. Brevet « US2013/0256459 A1 ») lesquels, constitués en sacs à gaz, freinent, en réalité, notablement le flux d'air admissible et/ou introduit dans le canal interne de tels « dirigeables » ; lesquels dispositifs ne sont pas revendiqués pour contribuer à la stabilisation ou à la parallélisation des flux conduits en interne dans les dits dirigeables, lesquels ne font pas partie des catégories de mobiles revendiqués par la présente demande.

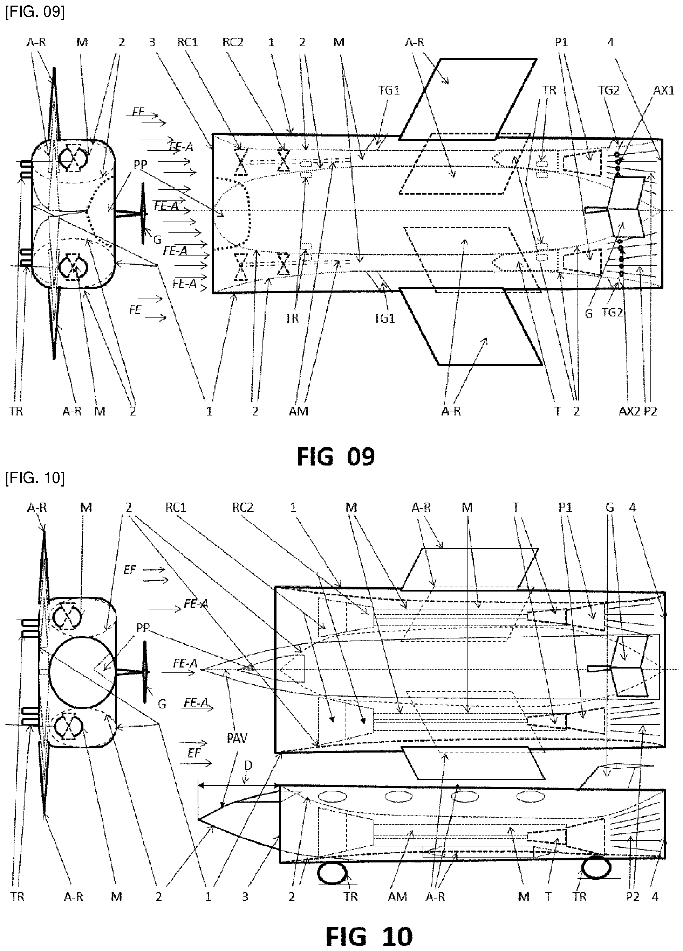

Les dispositifs de parallélisation, décrits ci-dessous, dont la section nette 'matière' qui entrave le passage du flux est aussi réduite que possible (ex : cloisons montées dans le sens d'écoulement des flux internes), se présentent :
à un premier niveau , sous la forme de conduits parallèles, serrés, accolés, de longueur significative suffisante pour contrecarrer les turbulences fluidiques qui se présentent à leur entrée et stabiliser chacun des flux unitaires les traversant et en résultante la globalité du flux qui transite dans chacun des dits canaux longitudinaux internes, montés par exemple en forme de « nids d'abeille » conçus pour résister aux effets thermiques : ( ex [Fig.11]: Diffuseurs Rep DF)), mécaniques et vibratoires développés sur ou dans la ou les veines fluides par le ou les groupes propulsifs, puis
à un second niveau, d'ensembles de volets montés pivotant autour d'axes (Exemple schématique simplifié [Fig.09]: Rep AX1 et AX2 ) dont la rotation est contrôlée par un dispositif central de stabilisation de l'unité mobile agissant, à la sortie de chaque veine fluide traversante, immédiatement avant son éjection dans le milieu environnant (Rep P1 et P2 ).

Ces dispositifs contribuent à la parallélisation du flux longitudinal traversant et sortant du ou des groupes propulsifs de façon à minimiser la trace turbulente, vibratoire et sonore globale de chaque veine fluide sortante (Rep FS) expulsée au regard de sa pénétration 'arrière' dans le fluide environnant (Ex : Rep FE).

Ces dispositifs de parallélisation permettent également d'optimiser l'effet de poussée « arrière » dans le gabarit strict et total de la veine fluide extérieure délimitée par l'extrémité arrière de l'enveloppe « fuselage » externe Rep 1.

Les dimensions de ces dispositifs propulsifs peuvent varier de sorte que le flux de fluide situé au centre du ou des canaux longitudinaux (par exemple dans le cas d'une motorisation thermique, c'est la position la plus turbulente et la plus chaude) soit maîtrisé, et de façon à minimiser les effets sonores et vibratoires mais aussi environ-nementaux sur le fluide extérieur jonctionné à l'arrière de l'unité mobile ;

Dans le cas d'applications aérauliques, ces effets sont en partie réduits par la maîtrise de la combustion complète des carburants utilisés, cela étant rendu possible par la longueur relative, « adaptée » de la section centrale des dits canaux fluidiques longitudinaux, dédiée à la motorisation.

L'intégration longitudinale interne, revendiquée, des motorisations dans la partie centrale des dits conduits fluidiques décrits, implique, notamment en aéraulique, un allongement significatif de la zone de « réaction thermique et exothermique » de la motorisation contrairement à l'effet de densification énergétique recherché dans les réacteurs et turboréacteurs mis en oeuvre sur les avions en service à ce jour « 2020 - 2021 ». Cet allongement, revendiqué, permet de minimiser les effets quasi-« explosifs » de réaction exothermique de combustion du carburant utilisé (ex : Kérosène ou autres propergols, ou même « hydrogène »), de réduire les contraintes mécaniques thermiques et sonores développées tout en assurant une meilleure combustion des carburants mis en oeuvre. Cet allongement permet, par ses avantages, de rendre « acceptable » l'intégration de ces dispositifs de motorisation à l'intérieur même des structures longitudinales canalisées des dites unités mobiles et à l'intérieur de l'enveloppe « fuselage » externe.

La conception « multicanaux » longitudinale proposée, innovante, qui consiste à permettre la circulation d'une partie du fluide admis frontalement : celle qui ne participe pas nécessairement à la combustion dans les dispositifs propulseurs, dans un ou plusieurs canaux longitudinaux concentriques à la ou aux veines fluides principales comportant des dispositifs propulsifs, est mise à contribution pour contrôler les émissions radiales sonores, vibratoires et thermiques autour des propulseurs intégrés de façon à évacuer les flux thermiques et sonores correspondants et amortir efficacement leur impact sur les compartiments périphériques et leur transmission dans les composants qui structurent les dites unités mobiles autour des dits conduits fluidiques longitudinaux internes. Ainsi de manière relative et contrôlée lesdites unités mobiles sont conçues pour neutraliser les effets négatifs, sonores et vibratoires liés à l'incorporation globale des dispositifs propulsifs au sein même des dites unités mobiles. La conception des dits canaux fluidiques longitudinaux internes prendra en compte les effets de dilatation différentielle des composants mis en oeuvre, notamment de motorisation, sur toute la longueur, ou une partie longitudinale significative, des dits canaux longitudinaux.

Les profils internes de terminaison des dits canaux fluidiques longitudinaux se raccordent quasi-tangentiellement au profil de terminaison de l'enveloppe « fuselage » externe de façon à réduire les turbulences périphériques à la sortie des dits canaux fluidiques. Cette disposition constructive est à mettre en comparaison quasi-symétrique de la disposition constructive revendiquée du bord d'attaque de l'entrée frontale du fluide décrite plus bas dans ce texte. Afin de réduire l'effet de choc fluidique de pénétration « arrière » de la/ des veines fluides internes dans l'environnement fluide périphérique dans la zone terminale de l'enveloppe « fuselage » externe, le profil de cette zone terminale sera conçu et adapté afin de minimiser les turbulences et perturbations sonores dans cette zone spécifique, par exemple en présentant un profil « arrière » différent d'une `section nette' de l'enveloppe « fuselage » par un plan perpendiculaire , mais au contraire proche d'une forme autre que continue et par exemple « sinusoïdale » ou en « zig-zag » développée par exemple autour de part et d'autre d'un plan globalement incliné sécant.

Les longueurs relatives, les sections nettes importantes mises en oeuvre dans lesdites unités mobiles dans la troisième partie divergente des dits canaux internes longitudinaux, ainsi que les dispositifs de stabilisation de flux, permettent de développer, en sortie extrême de ces dits canaux, un flux dont les gradients de vitesses, de pressions et de températures sont très nettement mieux maîtrisés qu'aux sorties des réacteurs d'avions en exploitation à ce jour (2020-2021). Leurs flux maîtrisés agissant sur la « totalité de la section nette d'éjection » dans le milieu environnant « arrière », égale à la section nette de l'extrémité « arrière » de l'enveloppe « fuselage » externe, permet, pour l'extrémité « arrière » de chaque canal longitudinal interne, le développement d'une zone d'action propulsive « arrière » efficace proche de 100% ; cette efficacité propulsive, de construction, s'applique à l'ensemble d'une unité mobile qui intègre plusieurs canaux fluidiques longitudinaux.

Comparativement, les réacteurs connus d'avions ont une section nette de poussée, réduite à la sortie « échappement » des dits réacteurs, voire très réduite, au regard de l'ensemble des sections nettes cumulées des « carlingue/fuselage+ ailes + réacteurs +empennages » des aéronefs qu'ils propulsent. La différenciation des zones de poussée et des sections nettes (notamment fuselages) mises en oeuvre sur les avions en exploitation à ce jour (2020-2021) justifie la nécessité de zones de très forte poussée à très hautes vitesses dont les gradients de températures et de pression sont très importants, non maîtrisés, avec des taux d'imbrulés « non négligeables », lesquels génèrent des pollutions notoires, des turbulences importantes mixées aux turbulences de portance (Vortex en bout d'ailes), des vibrations sonores de moins en moins admises et tolérées sur le plan environnemental, et la formation de trainées de vapeurs d'eau (qui se cristallisent en haute altitude en se développant autour des micro-particules « carbonées et sulfuriques» d'imbrulés), lesquelles sont considérées comme une manifestation de pollution atmosphérique de moins en moins 'acceptable'.

Les effets de type 'postcombustion' ou similaires « externes », connus dans les réacteurs de propulsion classique d'aéronefs, peuvent aussi être totalement ou grandement supprimés dans lesdites unités mobiles revendiquées compte tenu des grandes sections nettes `avant' et 'arrière' exploitées. En ce sens, lesdits groupes propulsifs, totalement intégrés dans la structure longitudinale des dites unités mobiles, peuvent, en applications « aérauliques », être conçus avec intégration de modules de contrôle de la combustion progressive et complète du carburant utilisé.

En applications aérauliques, les veines fluides canalisées à l'entrée de la partie intermédiaire du/des canaux fluidiques longitudinaux internes qui ne sont pas mises en oeuvre dans le processus de développement de la puissance instantanée souhaitée, sont réparties en zones d'écoulement périphérique autour de la /des veines fluides longitudinales internes qui participent directement au dit processus de motorisation. La distribution du fluide participant directement au processus de motorisation est assurée par un jeu de volets concentriques internes spécifiques (Exemple schématique [Fig.02]: Rep 32 ) placés immédiatement à l'entrée (ex [Fig.02]: Rep 31) des dispositifs propulsifs, ou étagés le long de la partie intermédiaire des canaux fluidiques internes en cas de motorisations « étagées », pilotés automatiquement en fonction de la demande instantanée de puissance souhaitée et en même temps que l'injection du carburant dans le processus de motorisation.

Cette injection, pour permettre une combustion complète, se fera après une « préchauffe » efficace du dit carburant mis en haute, voire très haute pression, telle qu'aux points d'injection, ce carburant passe instantanément d'une phase liquide « sous haute pression » à une phase gazeuse « sans particules liquides » pour assurer un mélange optimal avec l'air compressé admis dans les chambres de combustion distribuées le long de la partie intermédiaire, à section constante de chaque conduit fluidique longitudinal. Cette mise en phase gazeuse du carburant au moment même de son introduction en chambre de combustion, avant que les transferts thermiques de réaction de combustion ne prennent effet, évite la reformation par condensation de fines gouttelettes de carburant et donc la formation de particules d'imbrulés. Cette particularité innovante d'exploitation « gazeuse et à très haute pression » des carburants, appliquées aux motorisations telles que décrites et adaptées aux dites unités mobiles développées dans le domaine aéronautique est revendiquée.

La forme théorique de ladite enveloppe « fuselage » externe permet de minimiser les perturbations créées par le déplacement de l'unité mobile dans l'environnement fluide et de minimiser les pertes de charges induites ; elle serait de section constante dans le cas de vitesses relatives faibles de déplacement de ladite unité mobile dans le milieu fluide environnant. Cependant la pratique, la simulation et le calcul montrent que, plus les vitesses relatives augmentent, plus les écoulements laminaires externes de contact prennent de l'importance, se transforment progressivement en couches à écoulement turbulent qui freinent le déplacement d'une telle unité mobile. Afin de minimiser l'effet de foisonnement externe de ces écoulements laminaires devenant turbulents compte tenu de la longueur relative importante des dits fuselages externes, la section nette de cette enveloppe « fuselage » externe est progressivement réduite depuis l'avant jusqu'à l'arrière de ladite unité mobile de façon à permettre l'agrégation progressive de nouvelles masses fluides externes en écoulement laminaire se superposant à celles qui auraient tendance à devenir turbulentes. Cette particularité (voir [Fig.07]) se traduit par une forme, revendiquée, très légèrement « conique » à sections progressivement réduites, dégressives depuis l'avant jusqu'à l'arrière de l'enveloppe « fuselage » externe (voir angle Rep Co).

Selon un aspect particulier revendiqué, l'assemblage participant à la naissance du/des conduits fluidiques internes au droit de l'avant de l'enveloppe « fuselage » externe (voir [Fig.07]), c'est-à-dire l'extrémité située le plus en amont de ladite unité mobile, présente un « bord d'attaque » pour l'entrée du fluide dans ledit ou les dits canaux internes longitudinaux ayant en section transversale vue sur un plan longitudinal parallèle à l'axe principal de la dite unité mobile, un angle interne (Ex [Fig.07] : Rep A-1/2 ) aussi faible que possible ( ex : inférieur à 10° d'angle), adapté à la technologie des matériaux utilisés entre la surface extérieure de l'enveloppe «fuselage » externe de l'unité mobile et la portion d'entrée correspondante du dit ou desdits canaux internes. Ce/ ces bords d'attaque, en forme de profilé à angle d'attaque aiguë de valeur angulaire aussi faible que technologiquement possible, sont immédiatement prolongés par une structure portante qui assure la progressivité de la convergence de la première partie « entrante » de chacun des dits conduits fluidiques longitudinaux et la continuité « externe » en section de la partie la plus en `amont' de l'enveloppe « fuselage » externe, (voir angle Rep Co).

Ainsi, la forme de l'entrée d'admission du fluide dans le ou les canaux internes longitudinaux de l'unité mobile permet de minimiser la perturbation de pénétration frontale de l'unité mobile dans la masse fluide environnante. La traînée externe aéraulique, hydraulique, ou mixte générée par l'avant de l'unité mobile est minimale et est construite pour tendre vers zéro (effet de coupe comme une lame de rasoir). Afin de réduire les effets de compression frontale à hautes vitesses générés par ce dit bord d'attaque ou l'ensemble de ces dits bords d'attaque (construction multicanaux), en particulier ceux apparaissant au passage dit du « mur du son » ; la section frontale nette de ce dit bord d'attaque pourra être conçue autrement que perpendiculaire à la trajectoire suivie par ladite unité mobile, c'est-à-dire , qu'elle pourra être inclinée sur son axe principal longitudinal. Les ondes de pression ainsi générées en cette zone sont, du fait d'une telle disposition constructive, plus diffuses et progressives que celles qui apparaîtraient dans une disposition perpendiculaire. En amélioration complémentaire de ce bord d'attaque, non exclusive de la disposition précitée, une construction de ce bord d'attaque en forme de courbe irrégulière, par exemple vaguement sinusoïdale (ou de forme dite en « zig-zag » dont les angles vifs seraient atténués), permet de rompre la linéarité, la continuité des zones de pression qu'il génère et contribue à l'atténuation des effets notamment sonores produits, en particulier à Mach 1 et aux vitesses supérieures. Les technologies numériques de fabrication dans des matériaux de haute résistance thermique permettent de concevoir des ensembles de bords d'attaque répondant à ces caractéristiques de conception nouvelle.

Ce dit bord d'attaque revendiqué, est aussi caractérisé pour porter dans sa partie « amont » très proche de la section entrante et de pénétration dans le milieu fluide : Rep 3, un jeu de détecteurs, un ou plusieurs par entrée canalisante, -Rep CPA- de qui mesurent les pressions différentielles entre le flux extérieur environnant et les flux internes de pénétration dans chacun des canaux fluides longitudinaux, qui permet, par asservissements internes, ou par contre-réaction automatique de détection d'une différence de pressions, d'assurer une dépression « permanente" dans la veine fluide « entrante » par rapport à la pression du fluide environnant traversé, en agissant instantanément sur la puissance demandée à chacun des dispositifs «ventilo-compresseurs» , elle-même en relation directe avec celle demandée à chacun des dispositifs de motorisation internes. Ce dispositif, mis en oeuvre globalement dans une unité mobile « multicanaux » longitudinaux, est « essentiel et fondamental » au fonctionnement tel que revendiqué des dites unités mobiles car il donne à celles-ci la garantie de pouvoir développer une réelle capacité à fonctionner selon le principe de l'absorption frontale « totale et garantie », de l'intégralité de la veine fluide qui s'oppose à leur déplacement.

Selon un aspect particulier revendiqué, les dites unités mobiles comprennent un ou plusieurs ensembles propulsifs agissant directement ou indirectement sur la totalité du fluide traversant ledit ou lesdits canaux longitudinaux internes ; lesdits ensembles propulsifs sont positionnés de façon optimale dans le ou lesdits canaux internes , en principe à partir de la fin de la zone de convergence maximale de la / des veines fluides entrantes canalisées, dans la zone centrale des dits conduits fluidiques, et se terminent au début de la partie divergente constituant la troisième partie des dits conduits fluidiques longitudinaux internes. Cette disposition constructive n'est nullement limitative en ce qui concerne les longueurs relatives opérationnelles des trois segments de base décrits ; les contraintes de vibrations, de dilatations thermiques, de résistance mécanique aux pressions constatées et développées, de sections nécessaires pour assurer le passage des débits volumiques permettant le développement des forces motrices attendues et toutes les considérations liées à l'exploitation technique et commerciale des dites unités mobiles sont à prendre en compte pour adapter ces segments les uns aux autres en particulier au plan de leurs longueurs respectives.

La propulsion d'une unité mobile constituée de plusieurs canaux longitudinaux (voir [Fig.04]) pourra être assurée par plusieurs ensembles propulsifs, un ou plusieurs par canal. Les canaux fluidiques longitudinaux qui ne seraient pas équipés de groupes propulsifs, notamment thermiques, sont néanmoins conçus et revendiqués pour participer à l'absorption de la totalité de la veine fluide frontale qui s'oppose au déplacement de ladite unité mobile au droit de leurs entrées frontales et pour rendre dépressionnaire toutes les zones considérées comme « frontales » ; les dits conduits fluidiques qui ne seraient pas « motorisés » au plan thermique comme des « réacteurs », sont équipés, dans ce cas de figure, d'accélérateurs de flux et/ou de ventilateurs-compresseurs « avant » actionnés mécaniquement par une partie de la force motrice développée par les groupes propulsifs principaux équipant les canaux fluides motorisés, ou par une force motrice développée par les groupes propulsifs dont l'énergie est stockée transitoirement sous une autre forme que mécanique, par exemple « électrique » ou « électrochimique » (ex : batteries-accumulateurs) ou hydraulique , en passant par des générateurs mus par les motorisations principales ( par exemple thermiques et mécaniques), les quels alimentent des moteurs (électriques ou hydrauliques) qui actionnent les ventilo-compresseurs des canaux fluidiques longitudinaux dits « secondaires », en ce sens ces dits canaux sont motorisés en mode « non polluant » et participent à la propulsion globale de la dite unité mobile. Les canaux fluidiques (ex : [Fig.04] Rep C2 et Rep C3) peuvent être directement, sur le plan thermique, motorisés alors que les canaux (ex : [Fig.04] Rep C1 et Rep C4) sont équipés d'accélérateurs de flux alimentés sur le plan énergétique, par exemple électrique, par les groupes propulsifs des canaux Rep C2 et Rep C3. Ces dispositions constructives sont pour autant combinées aux asservissements décrits ci-dessus qui assurent la mise en dépression permanente de l'avant de chacune des entrées canalisantes des dits canaux fluidiques internes et par globalisation, par la mise en dépression frontale de l'ensemble de la section frontale « avant » des dites unités mobiles. Les canaux fluidiques longitudinaux dits « secondaires », décrits ci-dessus, sans motorisation « exothermique », de fonctionnement plus « apaisé » sur le plan sonore et vibratoire, développés en plus grand nombre que les canaux fluidiques principaux dits « thermiques », contribuent au développement d'unités mobiles globalement moins polluantes sur le plan des émissions sonores et de particules fines émises.

Suivant le niveau des capacités du stockage énergétique produit par les motorisations « exothermiques », lequel peut être à son maximum avant l'engagement d'une phase de décollage , s'il s'agit de batteries électriques, la gestion des dispositifs propulsifs dans leur globalité peut être adaptée en phase de décollage, de façon à minimiser l'appel de puissance orienté vers les motorisations exothermiques pour réduire les effets plus « polluants » qu'ils génèrent et pour maximiser l'appel de puissance demandé aux motorisations par exemple « électriques. Cette particularité innovante est revendiquée.

### D -

Selon un autre aspect majeur et essentiel des unités mobiles revendiquées, l'ensemble des volumes, dégagés et disponibles entre ladite enveloppe « fuselage » externe et ledit/lesdits canaux fluidiques internes, longitudinaux et transversaux, vus comme des « fuselages » internes, dont la somme des sections varie en fonction notamment des pressions et vitesses du fluide qui y circule, est construit et structuré comme un « espace utile compartimenté » ( voir [Fig.02]) et non 'comme une réserve de gaz constitutive d'une partie de dirigeable'.

Le dégagement de tels espaces, pour un homme de l'art, se conçoit aisément du fait que la veine fluide absorbée frontalement
pour un environnement fluidique compressible, est compressée et conduite à haute vitesse, en pression augmentée,
pour un environnement fluidique incompressible, est seulement accélérée et conduite à haute vitesse sous haute pression,
dans lesdits canaux fluidiques longitudinaux internes, de telle manière que la somme des sections de ces canaux fluidiques qui assurent son transit interne est inférieure à la section frontale d'entrée et que la somme des volumes occupés par ces canaux fluidiques longitudinaux internes est inférieure au volume global contenu dans l'enveloppe fuselage externe.

L'ensemble volumique « non occupé » constitué de sous-volumes ainsi rendus disponibles est structuré et optimisé sur le plan technique pour permettre :
la construction d'une ossature-support rigide de liaisons mécaniques internes entre les constituants décrits à savoir : enveloppe « fuselage » externe, les enveloppes internes formant les dits canaux fluidiques qu'ils soient longitudinaux ou transversaux, le ou les ensembles propulsifs, et
la structuration de la totalité des autres volumes disponibles et non occupés de cet espace en compartiments techniques spécifiques nécessaires ou utilisables (liste non limitative) tels que: une cellule de pilotage ou de contrôle de trajectoire, un ou plusieurs compartiments passagers, un ou plusieurs compartiments pour le transport de marchandises, un ou plusieurs compartiments de stockage d'équipements techniques ou un ou plusieurs compartiments de stockage de carburant, voire de comburant, des structures d'accueil nécessaires pour :
   le déploiement de compléments techniques et/ou d'accessoires, rétractables ou non, tels que :
   ailes rétractables, trains d'atterrissage, gouvernails, ailerons,
   dispositifs de pilotage jugés plus ou moins indispensables suivants les qualités d'évolution obtenues pour ces unités mobiles innovantes,
   tuyères de guidage ([Fig.09]: Rep TG1 et Rep TG2 ) alimentées par les canaux fluidiques transversaux internes et leurs dérivations qui conduisent des flux secondaires mis « en échappements latéraux, ponctuels », contrôlés, distribuées le long du fuselage externe, qui permettent le développement de forces externes latérales, ponctuelles, maîtrisées qui participent au pilotage des dites unités mobiles (ex : voir [Fig.09]) ;,
   ensembles « zoné » de dites tuyères, alimentées directement par les flux internes secondaires, conduits par les canaux fluidiques dits « transversaux », captés spécifiquement par dispositifs asservis au pilotage, dès la sortie des dispositifs de motorisation, en haute pression, ou alimentées par « des caissons plats pressurisés »( ex [Fig.11]) Rep CPP, agissant comme des tampons fluidiques, alimentés eux-mêmes par les canaux internes dits « transversaux » ( ex [Fig.11]) Rep CTV; ces dits « caissons plats » permettent une harmonisation de c des flux secondaires pressurisés et/ou un pilotage différentiel par zone de ces flux notamment en terme de pression. Le déploiement « zoné » de tels dispositifs « caissons plats, pressurisés » sur de grandes surfaces adaptées à la configuration de l'enveloppe fuselage « externe », en respectant le profil de l'enveloppe « fuselage » externe, permet le développement technique d'unités mobiles spécifiques dont les fonctionnalités sont comparables à celles des hélicoptères et autres mobiles volants tels que les « taxis volants » dits « VTOL ; par exemple ( [Fig.11]), sur des unités mobiles décrites pour avoir une face ventrale très aplatie, voir plane, de tels caissons pressurisés développés sur un pourcentage optimisé de cette surface permettent la mise en oeuvre de forces telles que développées sur « coussins d'air » dont l'efficacité peut être modulée suivant les puissances des flux qui y sont admis ( en débit et pression) ; équipées de la sorte les dites unités mobiles sont en capacité d'effectuer un décollage et/ou un atterrissage vertical; sur ces dites unités mobiles, le développement technique de zones différenciées de caissons pressurisés sur des surfaces à hauteur moyenne de leur axe principal, ou plus largement sur des surfaces dites « latérales »( ex [Fig.11]) Rep CPL, permet de générer des forces latérales perpendiculaires à l'axe vertical principal de l'unité mobile, déportées par rapport à celui-ci dont l'effet se traduit par un couple qui engage un mouvement de rotation du corps constitutif de la dite unité, l'intensité de ce couple dépend des débits et pressions des flux engagés dans les dits caissons pressurisés pour se faire.

L'ensemble de cette structuration interne et externe fait de ce type d'unités, des mobiles qui ne peuvent « en aucun cas » s'apparenter à des aéronefs légers de type « dirigeables » ou autres, même si la recherche globale du poids minimum soutiendra le développement technique desdites unités.

Lesdites unités mobiles ne sont en aucune manière destinées à faire spécifiquement du positionnement stationnaire dans le milieu fluide environnant, elles sont conçues pour permettre une amélioration des performances techniques combinées, par exploitation des flux internes, par transfert énergétiques à ces flux et maîtrise acoustiques et vibratoire des composants mis en oeuvre ; elles sont, une conception nouvelle des mobiles connus, autres que les dirigeables, à leur milieu d'évolution qui sont pour l'essentiel l'air et l'eau (ex : avions, hélicoptères, VTOL, bateaux, sous-marins, ...).

Les unités mobiles ainsi constituées, en amélioration de leurs performances énergétiques, sont équipées d'éléments complémentaires de stabilisation et de parallélisation du fluide les traversant longitudinalement, permettant de contrôler et de stabiliser les écoulements fluides à plusieurs niveaux, le long des conduits fluidiques internes.

Ces éléments, totalement internes, peuvent aussi avoir pour rôle de participer au guidage de l'unité mobile en agissant sur la trajectoire des fluides « immédiatement avant » leur sortie ou au moment précis de leur éjection du ou des conduits fluidiques internes, par effet de réaction sur le milieu environnant, créant un effet de flux directionnel maîtrisé "non aligné ' avec l'axe principal de la dite unité mobile, permettant de contrôler partiellement la trajectoire que doit suivre l'unité mobile sur un parcours imposé. Ces éléments, de par leur capacité à orienter le flux ou une partie de ce flux sortant du ou des canaux internes, permettent le développement de forces contribuant à la stabilité « avant-arrière » et/ou rotationnelle de l'unité mobile dans son ensemble (effets de tangage ou de roulis), tel un gouvernail de profondeur ; utilisés dans des unités mobiles évoluant en milieu mixte « air-eau » ils peuvent être commandés, pilotés par asservissements pour contrôler l'équilibre de déjaugeage de l'ensemble de l'unité mobile (effet de "foil") afin de maximiser l'efficacité propulsive rapportée à l'ensemble de l'unité mobile (exemple [Fig.05] : Rep P1 et P2 ).

A noter que ces forces directionnelles pilotées agissant sur le flux éjecté en section arrière des dites unités mobiles s'ajoutent vectoriellement aux forces de portance développées par leur enveloppe « fuselage » externe par leurs formes préférentiellement « aplaties » voir « très aplaties » décrites ci-dessus.

Ces dites formes enveloppantes très aplaties seront exploitées notamment en conjugaison avec lesdites « zones caissons plats» équipées de tuyères à éjection latérale perpendiculaire à l'axe principal des dites unités mobiles, décrites ci-dessus, alimentées en mode piloté par les dits canaux fluidiques internes transversaux ; Ces dites zones de tuyères seront développées principalement en surfaces ventrales aplaties , et/ou en zones latérales spécifiques de façon à augmenter les capacités de guidage des dites unités.

Dans un mode de réalisation, ledit ou lesdits dispositifs de motorisation, adaptés à chaque canal longitudinal interne motorisé, sont allongés ou à moteurs intégrés, et sont placés directement dans le ou les canaux fluidiques « longitudinaux » motorisés ou dans des compartiments disposés latéralement à ceux-ci, ledit dispositif de motorisation comprenant pour chaque canal longitudinal interne motorisé :
une turbine « avant », une pompe, ou une combinaison de ces équipements pour créer, dans un fluide environnant traversé « incompressible », un effet d' « accélérateurs » de flux
un « accélérateur-compresseur » agissant sur une veine fluide frontale entrant à l'avant de chaque canal longitudinal interne motorisé" pour un fluide environnant « compressible », puis,
un moteur « accélérateur » agissant sur la veine fluide en transit dans la section intermédiaire,
une « Turbine- diffuseur-détendeur-et parallélisateurs de flux » agissant sur la veine fluide en voie d'éjection dans la section de sortie divergente.

Dans un mode de réalisation, pour des applications aérauliques, telles qu'aéronautiques, ledit au moins un canal longitudinal interne motorisé ou lesdits canaux fluidiques longitudinaux internes motorisés comprennent un ou plusieurs dispositifs de motorisation « allongés », s'étendant sur la quasi-totalité de la longueur de la portion intermédiaire de ces dits canaux longitudinaux internes motorisés.

Dans un mode de réalisation, ledit au moins un canal longitudinal interne motorisés ou lesdits canaux longitudinaux internes motorisés, dans la portion de sortie, comprennent une pluralité de dispositifs d'adaptation du/des flux ayant participé à la motorisation pour optimiser leur efficacité propulsive « arrière » par ralentissement du fluide : effet « diffuseur », par parallélisation de la/ des veines fluides en voie d'éjection « arrière », en minimisant les pertes d'énergie « turbulentes » et thermiques; optionnellement, ces dispositifs de parallélisation, en application à des milieux hydrauliques ou mixtes, peuvent aussi être installés dans les portions d'entrée.

Dans un mode de réalisation, A.) l'enveloppe extérieure « fuselage » de l'unité mobile comprend une pluralité de canaux longitudinaux internes motorisés, sensiblement parallèles qui peuvent être de longueurs différentes,

B.) la section d'entrée frontale de l'enveloppe « fuselage » externe est égale à la somme des sections frontales d'entrées des canaux longitudinaux internes motorisés intégrés d'une construction « multicanaux » et ladite section de sortie de ladite enveloppe » fuselage » externe est égale à la somme des sections de sortie desdits canaux longitudinaux internes motorisés.

C.) le nombre de canaux longitudinaux dits « entrants » est différent du nombre des canaux longitudinaux dits « sortants » permettant aux flux intermédiaires des dits canaux de se mélanger et être associés,

D.) les canaux longitudinaux internes sont subdivisés soit en canaux secondaires longitudinaux dont les flux correspondants pilotés, sont utilisés pour contribuer à des effets permanents d'isolation thermique et/ou acoustique et/ou ex : de « double flux », soit en canaux secondaires « transversaux », connectés à la demande, en aval des dites motorisations, qui permettent le développement de forces latérales pilotées sur des surfaces spécifiques de l'enveloppe « fuselage » externe.

Dans un mode de réalisation, l'unité mobile présente un bord d'attaque pour l'entrée du fluide dans chaque canal longitudinal interne motorisé ) ou un ensemble de bords d'attaque pour une pluralité de canaux longitudinaux internes motorisés ) ; chaque bord d'attaque est remarquable en ce que :
- l'angle formé entre le profil de l'enveloppe « fuselage » externe et le profil de la première partie canalisante du ou des canaux fluides longitudinaux internes motorisés est minimum, de 5 degrés,
- l'arête frontale de ce bord d'attaque n'est pas nécessairement perpendiculaire à l'axe longitudinal de l'unité mobile constituée et peut avoir un profil non-linéaire, voir sinusoïdal.

Dans un mode de réalisation, l'unité mobile comprend au moins un compartiment ou une pluralité de compartiments ménagés, architecturés entre ladite enveloppe « fuselage » extérieure et ledit canal ou les dits canaux fluides longitudinaux internes motorisés et lesdits canaux fluidiques « transversaux » pour former :
- une cellule de pilotage ou de contrôle de trajectoire et de supervision du fonctionnement général,
- des compartiments spécifiques techniques,
- l'ensemble de ces compartiments sont isolés aux plans thermique, phonique et vibratoire des motorisations et canaux fluidiques internes dans le respect des normes applicables.

Dans un mode de réalisation, l'unité mobile comprend une « enveloppe » gaine externe, dans laquelle est fixé un ou plusieurs objets incorporés, lesquels peuvent être motorisés ; ladite enveloppe gaine externe, comprenant :
- une surface extérieure définissant le contour externe « fuselage » de la dite unité mobile, et
- une surface intérieure de ladite gaine définissant, avec les surfaces externes du ou des dits objets connus incorporés lesdites portions d'entrée, intermédiaires et de sortie d'au moins un canal longitudinal interne motorisé ;
la motorisation propre à l'objet incorporé participe à la mise en accélération et circulation du flux fluide depuis l'avant du canal interne formé jusqu'à l'arrière de celui-ci par l'alimentation énergétique de dispositifs.

Dans un mode de réalisation, ledit au moins un canal longitudinal interne motorisé comprend une pluralité de sections d'entrée successives, formant des sous-canaux, disposées de façon imbriquée et étagée depuis l'extrémité la plus en amont de l'objet Rep « B » incorporé, vers à la fois ladite enveloppe extérieure et l'aval de l'unité mobile qui peut aller au-delà de la terminaison de l'objet incorporé.

Dans un mode de réalisation, l'unité mobile incorpore, dans une partie ou la totalité de ses canaux longitudinaux internes motorisés, des motorisations « longues », non compactes, insonorisés, qui entraînent directement ou indirectement « des turbines » qui permettent le développement de ressources électriques nécessaires
- à l'entraînement indirect des « ventilo-compresseurs avant »,
- à l'entraînement des motorisations totalement « électriques » d'une partie des canaux longitudinaux internes,
- à la mise en oeuvre des autres fonctions internes nécessaires telles que dispositifs de pilotage et autres fonctions techniques, ....

Dans un mode de réalisation, la surface de l'enveloppe « fuselage » externe, comprend, par zones spécifiques, des caissons plats :
- totalement intégrés dans le volume contenu dans l'enveloppe « fuselage » externe,
- pressurisés et alimentés, à la demande, soit par déviation d'une partie des flux sortants, captés après motorisation, à haute pression, conduits dans les canaux fluidiques « transversaux », soit par des surpresseurs d'air,
- munis d'une multitude de points d'échappement fluide, régulièrement répartis, agissant chacun comme une mini ou micro-tuyère, qui développent localement et globalement des forces latérales de poussée qui s'appliquent à l'ensemble de ladite unité mobile constituée.

Dans un mode de réalisation, l'unité mobile est « sans trains de roues », pour des décollages et atterrissages en mode vertical ou en mode tangentiel « glissé », piloté, sur coussin fluidique « pressurisé ».

Dans un mode de réalisation, des zones surfaciques planes de l'enveloppe « fuselage », équipées de caissons plats pressurisés décrits, alimentés par les canaux fluidiques « transversaux » décrits, dont les flux pilotés à la demande, développent, sur l'ensemble de l'unité constituée, des forces de poussée latérales, directionnelles, réparties, dont les combinaisons permettent d'obtenir efficacement des effets de
- décollage vertical, alors que les flux produits par un ou plusieurs des canaux fluidiques longitudinaux internes sont totalement dirigés vers les canaux fluidiques transversaux internes
- de guidage permanent, par activation pilotée de caissons plats pressurisés spécifiques,
- de transfert progressif de puissance propulsive disponible en mouvement horizontal par activation pilotée des canaux fluidiques longitudinaux internes motorisés non sollicités en décollage, ou par diminution progressive des flux mis en oeuvre dans les canaux fluidiques transversaux internes et par redirection pilotée de ces flux vers la sortie du/des canaux fluidiques longitudinaux internes motorisés qui les produisent,
- d'ajustement permanent ou impulsionnel des trajectoires parcourues, par activation pilotée de l'ensemble du dispositif mis en oeuvre pour le décollage vertical et pour le guidage omnidirectionnel ;
les unités mobiles ainsi constituées, revendiquées comme innovantes, ont des capacités en termes de manoeuvrabilité omnidirectionnelles applicables dans de nombreux domaines.

Dans un mode de réalisation, en applications spécifiques aéronautiques, en ce que l'unité mobile passe d'un mode subsonique, à un mode supersonique, à un mode stratosphérique puis à un éventuel mode « suborbital »,
- par une injection progressive, notamment à partir du mode stratosphérique, dans les dispositifs propulsifs, d'oxygène pur embarqué, ou d'un autre comburant que l'oxygène,
- alors qu'en modes subsonique et supersonique le comburant, non embarqué puisé dans le flux environnant traversé est l'oxygène de l'air, de sorte que des unités mobiles du type « lanceur » suborbital ou spatial s'affranchissent de l'emport du comburant dans les phases de lancement les plus consommatrices d'oxygène.

Dans un mode de réalisation, en réalisations spécifiques, en ce que l'unité mobile est structurée comme une association d'unités mobiles pilotées centralement, rendues autonomes par étapes, constituée de
- une unité mobile centrale, à usage ultime, réutilisable ou non
- des unités mobiles associées latéralement à l'unité mobile centrale, indépendantes, montées symétriquement par rapport à l'axe principal de l'unité mobile centrale, détachables et récupérables,
   pour former une unité mobile de lancement
- d'un module à usage unique, détachable de l'unité mobile centrale, qui peut être un satellite, une navette spatiale, alors que ladite unité mobile centrale peut être récupérée, ou
- d'une cellule de transport en très haute altitude telle que « suborbitale », intégrée à la dite unité mobile centrale, prévue pour un retour rapide sur terre ;
ces unités mobiles assemblées en un seul « lanceur », revendiquées, sont à décollage et atterrissage verticaux en mode « glissé » sur coussin fluidique pressurisé.

Dans un mode de réalisation, l'unité mobile comprend en outre, des équipements rétractables, optionnels, contenus dans l'enveloppe « fuselage » externe, tels que :
- voilures, gouvernails et ailerons et G),
- dispositifs d'appui temporaire au sol,
- capteurs venant en saillie et à l'extérieur de l'enveloppe externe,
- dispositifs motorisés spécifiques, rétractables qui permettent l'amorçage d'un mouvement perpendiculaire à l'axe longitudinal principal de ladite unité mobile ;
- dispositif de mise en protection provisoire ou permanente, totale ou partielle de l'ensemble des entrées frontales de ladite unité mobile contre des objets portés par le flux entrant actionnés automatiquement sous l'impulsion d'un détecteur approprié.

### Exposé de modes de réalisation

Une gamme complète d'unités mobiles totalement innovantes peut être développée en construisant ces mobiles sur la base du/ des principes de base développés ci-avant, à savoir :
Des aéronefs de toutes tailles à un ou plusieurs passages (canalisés, centraux ou latéraux) d'air,
Avions et dérivés de tous types (y compris drones et pseudo-planeurs à faible motorisation), de tous gabarits, à motorisations internes de tous types (y compris partiellement ou totalement motorisés en mode électrique), à usages divers, notamment militaires, de commerce, de tourisme. Les unités mobiles correspondantes peuvent être développées « avec » ou sans ailes porteuses, ou avec ailes « repliables » ou escamotables dans le corps principal du fuselage principal revendiqué, avec ou sans dispositif de type « gouverne dite de profondeur» ou « gouvernail dit directionnel ».

Aéronefs spécifiques dont les trajectoires se développent principalement sous l'action de forces propulsives « longitudinales » dites « arrières » mais aussi sous l'action de forces propulsives « transversales » pilotées et zonées ; ces dites unités mobiles, -
pour leurs parcours « longitudinaux » de grande amplitude, sont conçues pour avoir un ensemble d'entrées canalisantes et un ensemble de sorties propulsives perpendiculaires aux trajectoires longitudinales suivies ;
pour leurs parcours « transversaux » de plus faible amplitude, sont conçues pour intégrer une combinaison de canaux fluidiques internes dits « transversaux » tels que décrits dont les sorties sont parallèles à leur axe longitudinal principal qui permettent le développement de forces de poussée perpendiculaires à cet axe longitudinal, latérales, pilotées qui augmentent les capacités de manoeuvrabilité transversales des dites unités mobiles les rendant comparables aux Hélicoptères et autres « taxis volants » (VTOL) ; en notant que, pendant ces parcours ou trajectoires, une partie ou la totalité de la puissance des motorisations des canaux longitudinaux est orienté vers l'alimentation des canaux internes transversaux par l'intermédiaire de « vannes à grand débit ( ex : [Fig.11]) Rep VGD,
pour leur parcours en combinaison des deux types de trajectoires décrites ci-dessus, par un pilotage manuel ou automatisé asservis à des commandes manuelles ou calculées, les deux ensembles de canaux longitudinaux et transversaux sont mis en oeuvre simultanément en minimisation optimale de la traînée, mesurée suivant l' axe principal longitudinal, de l'unité mobile spécifique ainsi développée.

Ces unités mobiles nouvelles sont particulièrement remarquables en ce que, sur les trajectoires horizontales les plus longues (majorité des trajets), leurs traînées aérodynamiques sont très réduites en comparaison de celles produites par les hélicoptères et les taxis volants (VTOL) qui n'intègrent que rarement des dispositifs de canalisation interne des flux que leurs motorisations développent. Le mode de propulsion transversal innovant proposé ne se développe que temporairement (phases de décollage ou atterrissage vertical) ou par plages de changement d'altitude ou de direction, sans que la qualité « aérodynamique » longitudinale ne soit dégradée. En effet, sur lesdites unités, l'entrée fluidique frontale globale demeure inchangée, la sortie propulsive "arrière" est réduite, sous contrôle piloté (ex [Fig.11]) Rep VGD, pour alimenter les canaux internes transversaux, et les sorties propulsives transversales sont développées sans modification du profil de l'enveloppe « fuselage » externe. A noter que ce type d'unités mobiles peut être structuré sur une base « multicanaux » longitudinaux dont seulement une partie de ces canaux sont construits en capacité d'être connectés aux dits canaux internes transversaux de telle sorte qu'une partie réduite du potentiel de la motorisation globale installée peut être appliquée aux phases d'utilisation des mouvements transversaux, donc de décollage et/ou d' atterrissage ; les canaux longitudinaux internes mis en veille pendant les phases de mouvements verticaux sont progressivement mis en action pour activer les mouvements horizontaux, alors que progressivement l'alimentation des canaux internes transversaux est réduite et que progressivement les flux correspondants participent à la propulsion longitudinale. Ce type de configuration, avec des motorisations spécialisées par groupes de canaux internes longitudinaux, permet de développer les dits mouvements transversaux avec une motorisation non polluante, par exemple électrique, alors que les mouvements longitudinaux peuvent être en motorisation électrique ou thermique ou mixte, adaptée à la phase du mouvement engagé. Ainsi lesdites unités sont conçues pour tenir compte des spécificités des aires d'atterrissage et de décollage et des environnements urbanisés ou non de ces aires.

Un développement spécifique de telles unités innovantes, adaptées à des aires d'amerrissage est envisageable par une conception de caissons plats en partie immersibles telle qu'en phase de décollage soit prévu une première sous phase de mise en pression de ces dits caissons pendant laquelle l'eau qui s'y serait introduite soit évacuée, avant l'engagement du décollement définitif des surfaces considérées en prise avec le milieu aquatique, de sorte que l'unité mobile considérée n'emporte pas de masse liquide inutile. Des dispositifs étanches complémentaires seront mis en place de manière telle que les canaux fluidiques transversaux exposés ne soient pas submergés.

Des bateaux et insubmersibles de tous types et de toutes tailles nouveaux ou connus et adaptés avec à un ou plusieurs canaux de passages d'eau (canalisés, centraux ou latéraux, ou enveloppant une coque de forme prédéfinie), équipés d'un ou plusieurs dispositifs de motorisation, à usages divers, notamment de transport ou d'attaque (militaires), de commerce, de plaisance (tourisme).

Nota : des bateaux conçus avec un ou plusieurs passages canalisés d'eau existent déjà sur le marché ; cependant leur conception n'intègre pas le principe de l'absorption de « l'intégralité » de la zone frontale « avant » s'opposant à leur avancement, ni le principe du carénage externe permettant la délimitation de ladite section frontale concernée et la continuité, en section externe quasi constante ou à faible conicité, de ce carénage en forme de coque uniforme externe depuis l'avant jusqu'à l'arrière des dits bateaux. Les passages canalisés exploités sur ces bateaux sont à échappement fluide non-maitrisé, non parallélisé, à fortes voir très fortes turbulences, dans le milieu fluide environnant. Les dispositifs de motorisation de ces bateaux, mêmes adaptés en termes de carénage comme proposé, ne sont pas asservis à un signal émis par des capteurs de pressions différentielles tels que proposés, montés sur le bord d'attaque de l'entrée fluidique principale frontale, qui permet de maintenir cette entrée frontale en dépression « maîtrisée ».

Des mobiles sous-marins de tous types, de toutes tailles à un ou plusieurs passages (canalisés, centraux ou latéraux) d'eau, équipés d'un ou plusieurs dispositifs de motorisation et des dispositifs de parallèlisation précités, à usages divers, notamment militaires, de commerce, de tourisme. Il est à noter que, pour un submersible dont la coque externe est renforcée en fonction des profondeurs d'exploitation visées, l'adjonction d'une enveloppe périphérique constituant le fuselage externe revendiqué n'entraine pas nécessairement un renforcement équivalent de l'épaisseur de ladite enveloppe « fuselage » externe, que par ailleurs les zones dites équipées de caissons plats pressurisés, alimentées par les canaux internes transversaux, développés sur la surface de ladite enveloppe externe ne sont pas nécessairement renforcées, mais sont seulement tenues en pression différentielle adaptée à la profondeur pour laquelle elles doivent entrer en action.

### Mais aussi :

Des mobiles « non volants » de toutes tailles comportant un ou plusieurs passages canalisés (centraux ou latéraux) d'air , dont une partie ou la totalité des forces de poids propre est repris par des mécanismes d'appui au sol (ex : roues, des patins, appuis pneumatiques "genre hydroglisseurs', appuis magnétiques, ...,) équipés d'un ou plusieurs dispositifs de motorisation, à usages divers, notamment militaires, de commerce, de tourisme, assimilables à des Motocyclettes, Vélos motorisés, Automobiles, Camions, Autobus, Hydroglisseurs, Trains de voyageurs et/ou de marchandises (sur chemin de fer ou assimilés) quelque soient leurs modes de traction (thermique, électrique, ...) y compris les trains montés des dispositifs dits « à sustentation magnétique » ou sur coussins d'air, et y compris ceux, innovants, prévus pour circuler dans des conduits dépressurisés ; ces derniers sont prévus pour circuler dans une veine fluide à faible densité mais n'intègrent pas, pour autant de canaux fluidiques internes motorisés tels que revendiqués, qui permettent d'en améliorer les performances par réduction de traînée. Ces mobiles non-volants, pour être assimilés aux unités mobiles décrites sont adaptés et complémentés d'une enveloppe externe d'un seul tenant ou composée de plusieurs éléments segmentés enveloppants, constituant une des composantes des conduits internes longitudinaux canalisant la veine frontale d'air captée par le déplacement de ces dits mobiles ; ils doivent aussi intégrer une motorisation asservie à un signal de pression différentielle frontal qui permet de maintenir en dépression la zone frontale de pénétration de l'unité mobile dans le milieu environnant même si celui-ci est par avance dépressurisé.

Une gamme complète d'unités mobiles peut être développée en construisant celles-ci par adjonction à un type de « mobile connu classiquement » d'une enveloppe externe conforme aux enveloppes « fuselages » externes décrites précédemment; le profil spécifique de l'objet incorporé (mobile connu classiquement), sans avoir à redéfinir nécessairement la forme extérieure de l'objet incorporé, formera avec la « surface intérieure » de l'enveloppe externe rapportée, la structure du/des dits conduits ou canaux fluidiques internes longitudinaux constitutifs de la nouvelle unité mobile considérée.

Pour rentrer dans le champ des unités mobiles innovantes revendiquées et être performantes de telles unités mobiles, devront, obligatoirement, être équipées de dispositifs spécifiques, tels que « accélérateurs de flux » (notés Rep AF dans les figures « dessins » proposées) permettant d'obtenir de façon « significative » une dépression « avant » qui garantisse que la trainée externe latérale et périphérique de ladite unité mobile soit très réduite voir quasi nulle. Ces dispositifs, accélérateurs de flux Rep AF, seront, soit intégrés à l'intérieur de l'ensemble « gaine externe » rapportée, soit développés spécifiquement dans le mobile connu intégré et spécialement adapté. Ces dispositifs, accélérateurs de flux Rep AF doivent, dans tous les cas, être asservis à une détection de la mise en dépression « avant » de l'entrée de la /des canaux fluidiques internes par l'intégration de capteurs ou de dispositifs à contre réaction automatique sur la puissance demandée aux dits accélérateurs de flux Rep AF. Dans cette configuration les motorisations asservies des accélérateurs de flux sont totalement ou partiellement déconnectées des mécanismes de motorisation qui participent à une mise en déplacement des dits véhicules en s'appuyant au sol, par exemple sur des roues.

Selon un mode de réalisation particulier revendiqué, l'unité mobile comprend un objet mobile classique (par exemple une automobile), un avion (formes extrapolées), un vélo, un bateau ...etc.) autour duquel est ajouté une pluralité de gaines externes participant à la constitution de conduits fluidiques superposés, qui peuvent être longitudinalement « décalés » dans leur pénétration dans le fluide environnant. Ainsi, est constituée une pluralité de canaux de circulation du fluide autour de l'objet incorporé, de sorte que le milieu fluide environnant dans lequel l'unité mobile se déplace soit peu, voire très peu, perturbé à l'extérieur de la gaine « enveloppe » la plus externe. Les canaux de circulation du fluide entre l'objet initial « classique connu » intégré et la pluralité de gaines externes formant un ensemble « enveloppe » de section externe sensiblement constante, qui peuvent aussi être de longueurs étagées et décalées différentes, s'adaptent aux profils « avant » et/ou « arrière » de l'objet mobile « classique connu » ainsi adapté pour optimiser l'ensemble des écoulements fluides périphériques, enveloppant le dit objet mobile classique connu.

Le principe de l'invention peut ainsi être aisément adapté pour être mis en oeuvre sur des objets mobiles de formes connues et/ou évolutives à concevoir, pour en faire des objets mobiles innovants revendiqués.

Des unités mobiles moins performantes « en appui au sol », du type de celles décrites précédemment, par incorporation dans une forme enveloppe externe de section quasi constante ou légèrement conique d'un objet mobile connu classique se rattachent au principe de l'invention à condition que l'adjonction de la dite enveloppe externe canalise au maximum le fluide qui s'oppose frontalement au déplacement de l'unité mobile globalement constituée « alors qu'aucun dispositif spécifique » ne contribue significativement à la formation d'une zone dépressionnaire « avant ». La position suffisamment décalée vers l'avant de la section d'entrée de l'enveloppe externe rapportée par rapport à l'avant du mobile classique incorporé suffit, en écoulement aéraulique à relative faible vitesse, à mettre en pression puis en accélération les zones fluides frontales globalement intéressées par le déplacement du mobile pour créer les conditions d'un écoulement de type `Tube de Venturi' à la sortie duquel les énergies cinétiques et potentielles accumulées sont restituées en énergies de décompression et de « contre-réaction » qui contribuent à mieux propulser la dite unité mobile. Cet apport énergétique « fluidique » n'est cependant pas autosuffisant au point d'envisager des unités mobiles dépourvues de dispositifs de motorisation tels que décrits qui agissent en accélérateurs « thermomécaniques » ou à motorisation électrique sur les veines fluides conduites dans les dits canaux longitudinaux internes.

Les unités mobiles de ce type, inspirées des principes innovants de base revendiqués, moins performantes, sont aussi innovantes et revendiquées.

La mise en oeuvre d'une pluralité de portions d'entrée, débouchant chacune dans un canal interne indépendant ou dans un même canal interne principal ou dans un ensemble réduit (en nombre) de canaux, en regroupement de canaux entrants, consiste à former une entrée de canal interne segmentée (Ex : [Fig.08] - 01 et -02). La segmentation de l'entrée du fluide dans l'unité mobile permet d'optimiser la continuité des écoulements du fluide « au plus près » de l'objet « classique connu » incorporé, situé dans cette structure de gaines « avant » externes décalées et superposées ou imbriquées, et donc de minimiser les perturbations dans le ou les dits canaux internes. Cette segmentation permet, en outre, d'obtenir une canalisation progressive du fluide dont le fonctionnement est similaire à celui d'une superposition étagée, voire concentrique de tubes de Venturi. Les unités mobiles de ce type, en adaptation du modèle principal d'unités mobiles décrites lesquelles incorporent les motorisations nécessaires, sont aussi innovantes et revendiquées.

### Brève description des figures

Figure 1 :« Tunnel classique d'essais aérodynamiques - Principe »
Figure 2 : Figure-dessin « Schéma de principe - Forme monocanal motorisée ; Schéma général du principe des unités mobiles / vue en coupe longitudinale »
Figure 3 :Figure-dessin « Unité mobile bi-canaux / Vue Frontale Forme Bi-canaux - Principe »
Figure 4 :Figure-dessin « Unité mobile à 4 canaux/ vue frontale et vue de dessus - Principe »
Figure 5 :Figure-dessin « Unité mobile incorporant un bateau »
Figure 6 : Figure-dessin « Unité mobile incorporant une automobile (2 schémas) »
Figure 7 : Figure-dessin « Représentation simplifiée du bord d'attaque frontale - Principe »
Figure 8 : Figure-dessin « Unité mobile incorporant une automobile avec entrée « canal » étagée et segmentée »
Figure 9 : Figure-dessin « Unité mobile Bi-canaux de type « aéronef » + accessoires »
[Fig. 10] : Figure-dessin « Unité mobile de type « aéronef » intégré (avion) »
[Fig.11] : Figure-dessin « Unité mobile de type « aéronef à capacité de décollage vertical et de guidage omnidirectionnel » avec canaux transversaux ».

### Description des modes de réalisation

La présente innovation propose des unités mobiles conformes à la description faite dans les pages précédentes, dont la forme globale minimise les trainées « avant » générées par leurs déplacements et les trainées périphériques externes, capte « la quasi-totalité » de la veine qui s'oppose frontalement à leur déplacement longitudinal suivant leur axe principal, canalise cette veine fluide dans des canaux internes longitudinaux en écoulement optimisé (à effet 'Venturi' par exemple), sous l'action d'un ou plusieurs dispositifs de motorisation internes, et restitue la dite veine fluide captée frontalement dans le milieu environnant sous la forme de flux « arrière » éjectés, accélérés, parallélisés et propulsifs à haut rendement énergétique et à nuisances vibratoires (ex : sonores) réduites.

La présente invention divulguée est relative à des unités mobiles motorisées, autopropulsées, performantes, totalement structurées et architecturées, entre une forme enveloppe « fuselage » externe rigide de section externe constante ou légèrement conique vers l'arrière et des formes enveloppes « fuselages » internes, canalisantes, constituant les dits canaux internes longitudinaux incorporés, combinées entre elles qui constituent des ensembles à « fuselages inversés » captant « l'intégralité » de la veine fluide frontale s'opposant à leur mouvement dans le milieu fluide environnant dans lequel elles se déplacent en générant le minimum de perturbations fluidiques périphériques et restituant un flux éjecté « arrière » de section maximale dont la poussée est optimisée . Ces dits canaux internes « longitudinaux » sont connectés par des vannes pilotées à des canaux dits « transversaux » qui alimentent des dispositifs de manoeuvre spécifiques développés sur la surface externe de ladite enveloppe « fuselage ».

La présente invention divulgue aussi la constitution de la majorité des objets mobiles dont la ou les formes aérauliques ou aéronautiques et/ou hydrodynamiques et/ou mixtes qui sont une matérialisation simple ou extrapolée des formes principales de principe, divulguées.

La nouveauté principale divulguée par la présente invention, pour les unités mobiles revendiquées, consiste à incorporer de façon nouvelle et indissociable :
- une enveloppe externe formant un « fuselage » de section à faible conicité ou quasi-constante et de traînée externe très réduite, constituée sur toute la longueur des dites unités mobiles,
- plusieurs (ou une) formes « fuselage » internes longitudinales, canalisantes, s'étendant de l'avant jusqu'à l'arrière des dites unités mobiles, dites « canaux » fluidiques, optimisés, équipés chacun de
- un ou plusieurs dispositifs propulsifs, asservis à
- des capteurs de pressions différentielles disposés à l'« avant » interne dits canaux longitudinaux et externe de la dite enveloppe « fuselage » externe,
- plusieurs ou un ensemble de canaux internes dits transversaux, alimentés à la demande par une partie ou la totalité des dits canaux internes longitudinaux à partir des zones à haute pression de ces derniers, au moyen de vannes pilotées, lesquelles peuvent être à grand débit,
constituant globalement une unité mobile nouvelle (« représentation de principe très schématique » : exemple non limitatif présenté en [Fig.02], dans laquelle ne figurent pas les dits canaux internes transversaux)

Lesdites formes « fuselage » internes servent de support à un ou plusieurs canaux fluidiques longitudinaux internes qui chacun d'eux est constitué en trois parties ; successivement depuis l'avant jusqu'à l'arrière, la première est de sections progressivement convergentes, la seconde est de sections constantes, la troisième est de sections progressivement divergentes et sont construites en continuité de passage du flux qui les traverse.

Lesdites formes « fuselage » internes servent de support à un ou plusieurs canaux fluidiques longitudinaux internes, sont « motorisés » chacun d'eux par un ou plusieurs dispositifs propulsifs (exemple simplifié et très schématique [Fig.02]: Rep M1- Rep M2- Rep M3) tels que :

Sous l'action des dispositifs propulsifs internes, l'avant des dits « fuselages » internes sont mis globalement et constamment en dépression par rapport à la pression constatée dans le fluide environnant traversé par ladite unité mobile,

les écoulements fluides internes impulsés par la/les motorisations internes Rep M1-M2-M3, et le déplacement de ladite unité mobile répondent au principe des écoulements fluides optimisés comparables à ceux constatés en « Tube de Venturi » motorisés,

les écoulements fluides externes, sous influence de la forme « fuselage » externe à faible, voire très faible conicité sont à trainée externe minimale même pour des déplacements allant jusque de hautes, voire très hautes vitesses compte tenu de la section progressivement réduite, de l'avant vers l'arrière, de ces formes externes ce qui minimise la transformation des écoulements laminaires de surface en écoulements turbulents,

Sous l'action des dispositifs propulsifs internes efficaces, asservis en puissance au maintien d'une dépression « avant » frontale contrôlée par des capteurs de dépression ex : Rep CPA, les veines fluides captées à l'avant des dites unités mobiles, sont mises en dépression et vitesse par un dispositif « accélérateur de flux » ou un ensemble « ventilo-compresseur » (exemple simplifié et très schématique [Fig.02] : Rep RC1, Rep RC2, Rep RC3) en liaison avec le/les dispositifs de motorisation ; elles sont de la sorte d'abord accélérées et compressées pour assurer leur continuité de transfert dans le ou lesdits canaux fluidiques longitudinaux internes en tenant compte de leurs formes d'abord convergentes,

Sous l'action des dispositifs propulsifs internes (exemple simplifié et très schématique Rep M1, Rep M2, Rep M3), les veines fluides conduites dans la partie intermédiaire des dits canaux fluidiques longitudinaux internes, contribuant totalement ou partiellement aux réactions de motorisation (par exemple sous forme de comburant, par effet de réaction exothermique), sont propulsées énergiquement (augmentation de l'énergie cinétique et potentielle (ex : de pression)), par effets mécanique et/ou thermique (ex : de combustion d'un carburant ou autres combinés), vers la partie descendante, divergente des dits canaux fluidiques internes, après un éventuel passage forcé dans un dispositif de récupération d'énergie motrice.

Les veines fluides ainsi mises en mouvement, développent sur les parois de cette troisième partie des canaux fluidiques longitudinaux, divergente, des forces de pression dont la résultante est une réaction de poussée vers l'avant de l'ensemble de ladite unité mobile.

A la sortie des conduits fluidiques, dans la zone terminale de ceux-ci, les veines fluides éjectées dans le milieu environnant à des vitesses et pressions supérieures à celles de ce milieu développent, sur une surface proche de 100% de la section « Arrière » de l'enveloppe « fuselage », des forces de contre-réaction sur ce milieu, dont la résultante se traduit par une poussée vers l'avant de l'ensemble de ladite unité mobile.

Les veines fluides transitant dans la partie divergente de dits conduits fluidiques longitudinaux sont stabilisées sur le plan directionnel par des dispositifs internes de parallélisation afin de transformer les énergies fluides de turbulence en énergie propulsive, orientée dans le sens de l'écoulement fluide traversant globalement ladite unité mobile. Ces dispositifs de stabilisation rotationnelle et vibratoire des veines fluides turbulentes contribuent notamment à minimiser l'impact vibratoire et /ou sonore des veines fluides éjectées à l'arrière des dites unités mobiles dans la masse fluide environnante traversée et à maximiser leur efficacité propulsive.

Les veines fluides en voie d'éjection des dits conduits fluidiques sont orientées par des dispositifs tels que des ailettes ou ailerons (ex [Fig.09] : Rep AX1, Rep AX2) , voir des tuyères spécifiques alimentées par le ou les groupes propulsifs principaux décrits ou des groupes propulsifs spécifiques de fonction spécialisée adaptée au guidage des dites veines fluides sortant des dites unités mobiles, de façon à générer sur l'arrière des dites unités des forces de guidage latérales par contre réaction sur ces éléments de guidage (ailettes ou tuyères ) et des forces de contre-pression latérales sur la masse fluide environnante. Ces forces 'non-axiales' sont développées à la demande par des asservissements en liaison avec le dispositif de pilotage de ladite unité mobile.

Les veines fluides transitant dans la partie divergente de dits conduits fluidiques, en applications de type « aéronefs », sont contributives (en totalité ou partiellement) à la production d'énergie en actionnant des capteurs d'énergie motrice qui peuvent être moteurs (ex : turbines Rep T, ..., alternateurs « générateur d'électricité » ex :[Fig.11] Rep GE) qui sont en liaison :
- avec les dispositifs « ventilo-compresseurs » situés dans la première partie convergente des dits conduits fluidiques internes,
- avec des dispositifs « d'accumulation d'énergie » eux-mêmes en liaison avec des « ventilo-compresseurs » situés dans des conduits fluidiques dont la motorisation est autre que thermique, par exemple « à motorisation électrique ».

Les veines fluides captées frontalement sont, ainsi que décrit, transférées intégralement vers 1' « arrière » de la seconde partie des canaux fluidiques internes des dites unités mobiles, avec une forte augmentation d'énergies potentielle et cinétique lesquelles et sont libérées dans la troisième partie « arrière » divergente des canaux fluidiques internes pour un retour dans le milieu fluide environnant marqué par un différentiel maîtrisé de pressions, de vitesses et de turbulences sur tous les segments de la section « arrière » finale des canaux internes qui s'ajustent à la section « arrière » du fuselage « externe, produisant de la sorte le développement de « forces parallélisées de poussée agissant sur la totalité de la section arrière », qui assurent la propulsion et la mobilité de l'unité constituée avec une efficacité augmentée.

Les dispositifs de motorisation décrits sont connus dans leur principe de fonctionnement ; cependant ils sont adaptés par des dispositions constructives nouvelles qui améliorent leur rendement global et permettent leur intégration dans une structure globale nouvelle de canaux fluidiques allant de la section « avant » jusque la section « arrière » des dites unités mobiles

La seconde nouveauté divulguée est relative à la forme aérodynamique ou hydraulique externe particulière des unités mobiles décrites.

Le principe de cette forme « fuselage » externe consiste en un ensemble des profils se définissant théoriquement comme suit :

Section nettes « avant » : une courbe plane, fermée, quelconque ou une association de courbes planes fermées tangentes ou sécantes dont les segments intérieurs en recouvrement peuvent être supprimés de façon à ne conserver que leur ensemble périmétrique le plus externe ;

Section nettes « arrière » ; une courbe homothétique de la section « avant » réduite de quelque pourcent, parallèle à celle-ci, constituant avec la section nette décrite ci-dessus un support au développement de la surface externe (« fuselage externe ») décrite ci-dessous,

Surface externe : celle qui se déduit d'un ensemble continu de génératrices qui « s'appuient » sur les profils des sections nettes « avant » et « arrière » décrites ci-dessus, perpendiculaires aux plans des dites sections, formant un cylindre continu légèrement conique de puis l'avant jusqu'à l'arrière, de section variable telle que décrite ci-dessus, et de longueur limitée et adaptée à l'application technique visée dont les sections utiles d'entrée et de sortie ne sont pas nécessairement planes, ni perpendiculaires aux génératrices formant l'enveloppe externe décrite ci-dessus.

Les dites sections nommées « amont » et « aval » pour un même unité mobile ne sont pas nécessairement identiques, ni parallèles, ni homothétiques, ni homogènes : une section 'amont' « droite » pouvant par exemple être couplée à une section 'aval' « oblique » ou « quelconque » ; la définition des profils « fuselage » externes et des sections « amont » et « aval »des dits unités mobiles sont libres et non interdépendantes et n'ont de contraintes qu'en ce qui concerne la relative constance de leur forme externe, pour constituer un cylindre parfait ou à faible conicité, laquelle contribue à minimiser les effets de turbulence générés à haute vitesse par la déstructuration des écoulements laminaires au contact des surfaces externes des dites unités mobiles.

Les enveloppes « fuselages » des unités mobiles multicanaux, dont les longueurs sont différentes, sont vues comme une association d'enveloppes « fuselages », chacune conforme à la définition faite ci-dessus, mais de longueurs différentes adaptées aux canaux fluides qu'elles intègrent (Exemple schématique : ([Fig.04])

Ces formes aérodynamiques ou hydrodynamiques définissent les profils externes des dites unités mobiles. Elles sont telles que lesdites unités mobiles constituées, déplacées dans un milieu fluide (gazeux ou liquide) lui-même statique ou en mouvement, les turbulences générées par le contact des dites formes externes avec le fluide environnant soient « macroscopiquement minimales » et que donc leur traînée fluidique soit minimale.

Les effets de pression « externe avant » développés par le déplacement desdites unités sont quasi nuls sous l'effet de dépression « avant » généré par le ou les dispositifs propulsifs internes décrits ci-dessus (ventilo-compresseurs « avant ») et dépendent de la qualité 'aérodynamique' ou 'hydrodynamique' du bord d'attaque de la section 'avant' des dites unités mobiles (voir exemple non limitatif [FIG .07]).

Ces bords d'attaque sont donc profilés aussi finement que possible avec un angle de pénétration dans le fluide environnant de faible valeur qui respecte la faible conicité de la forme extérieure décrite, et en interne la forme convergente première des canaux à équiper, ils sont donc constitués en amorce progressive des formes intérieures des dits canaux internes décrites. L'angle d'attaque est représenté en Rep « A- 1/2 » entre l'enveloppe extérieure à faible conicité « Rep 1 » et l'amorce de l'enveloppe intérieure, d'un canal interne, Rep « 2-A » segment de jonction entre ces enveloppes. Le profil de ces dits bords d'attaque peut être frontalement aussi fin qu'une lame de rasoir, adossé à un substrat dont la base s'élargit pour épouser les surfaces à connecter comme indiqué ci-dessus.

En développement d'applications aérauliques (aéronautique) et hydrauliques, afin d'augmenter les caractéristiques de manoeuvrabilité des dites unités mobiles, les formes externes des dites enveloppes « fuselage » de section quasi-constante ou de faible conicité seront préférentiellement « aplaties », voir « très aplaties », allant jusqu'à présenter un face ventrale totalement plane, de façon à ce qu'elles développent dans le milieu fluide environnant traversé des forces de « portance » propres qui s'ajoutent vectoriellement aux forces de poussée « arrière »du/des flux traversant lorsque celui-ci est orienté à la demande, « piloté », pour suivre une trajectoire imposée.

Dans le domaine aéraulique (aéronautique), à faibles vitesses d'évolution dans le milieu fluide traversé, les formes « fuselage » revendiquées, même aplaties, ne pourraient développer les forces de portance suffisantes pour contrecarrer les forces de pesanteur (ce qui conduirait à la chute des dites unités mobiles). Pour vaincre cette difficulté technique, lesdites unités mobiles revendiquées peuvent être construites

Soit avec l'incorporation d'ailes pour une portance augmentée qui puissent être escamotables

Soit avec l'incorporation à / dans la dite face « ventrale » des dites unités, de caissons plats, (voir très plats ou plans) pressurisés et alimentés temporairement par déviation d'une partie des flux internes, captés après motorisation, à moyenne ou haute pression, lesquels sont conduits par des canaux internes « transversaux » décrits ci-dessus ; Ces dits caissons plats sont munis d'une multitude de points d'échappement fluide agissant comme des mini-tuyères dont l'action globale se traduit par une poussée surfacique « verticale » ( ex : [Fig.11] Rep 'P') , perpendiculaire à la surface sur laquelle elle est développée et à l'axe principal longitudinal de l'unité mobile ; cette poussée surfacique permet de compenser le manque de portance constaté à faibles vitesses et est aussi mise en application, comme exposé ci-dessus, pour développer de nouvelles fonctionnalités qui rendent les dites unités mobiles utilisables dans des domaines réservés aux hélicoptères et autres « taxis volants dits VTOL ».

Sur le plan de la motorisation, la particularité innovante revendiquée pour les unités mobiles décrites consiste, à incorporer le/les dispositifs de propulsion dans le corps même des unités mobiles constituées et dans le ou les canaux longitudinaux internes décrits, « en les allongeant sur une partie significative de la longueur de ces dits canaux », ou à les intégrer aux volumes disponibles le long de ces dits canaux longitudinaux en y exposant que les éléments techniques directement nécessaires à la propulsion.

Ces dispositions constructives nouvelles permettent la séparation des fonctions « ventilo- compression 'avant' », « chambre de combustion », « diffusion-décompression primaire arrière ». La longueur relative des canaux fluidiques internes, sensiblement égale à la longueur totale des dites unités mobiles, est telle qu'elle permet la « déstructuration technique longitudinale » des réacteurs « connus » (sur les avions) pour les adapter aux caractéristiques innovantes des dites unités mobiles. Cette déstructuration longitudinale permet entre autres avantages techniques d'améliorer la « qualité de la combustion » des comburants utilisés :

en préparant le carburant utilisé par une mise en très haute pression associée à une nette élévation de température (« sur-pressurisation »), telles que l'injection de ce carburant se fasse uniquement en phase gazeuse, sans microgouttelette liquide, de telle façon que la combustion se fasse sans générer de particules fines de pollution,

en multipliant et en allongeant les chambres de combustion, voire en les distribuant sur des profils, par exemple en hélice, tels que les ondes de pression développées par la combustion soient progressives, non-planes, se développant dans une pluralité de chambres de combustion primaire dans lesquelles une partie du fluide « comburant » est admis après avoir été préchauffé afin de réduire les risques de re condensation du carburant mis en phase gazeuse , puis dans des chambres de post-combustion alimentées du reste du plein débit fourni par la partie centrale des canaux fluidiques « longitudinaux » principaux,

en maîtrisant les turbulences de combustion ainsi produites en les réduisant et en diminuant les effets sonores générés (combustion efficace et moins rapide, moins explosive), lesquels effets sont adoucis par le fait qu'ils se développent dans une colonne fluidique bien plus longue (effet de type `rampes à gaz' ou du type 'chalumeaux').

La disposition constructive multicanaux revendiquée permet d'envelopper le/les canaux principaux « longitudinaux » motorisés par des sous-canaux (voir exemple non limitatif [Fig.02] : Rep GTS) qui participent à la maîtrise « amortissante » des effets ci-dessus mentionnés (thermiques et sonores) : (voir exemple non limitatif Rep 30 ) et à l'efficacité propulsive recherchée, comme dans un réacteur connu dit « à double flux », en particulier dans les zones longitudinales qui jouxtent et prolongent lalles zones de motorisation concernées par les réactions internes de combustion.

La déstructuration technique, technologique, longitudinale des réacteurs connus exploités, revendiquée, est rendue possible, à titre d'exemple, par une architecture nouvelle de l'arbre moteur principal traversant les dits réacteurs, lequel, au lieu d'être monobloc, est multi-composants, à rupture axiale (ex : avec joints élastiques, ...), ou préférentiellement physiquement dématérialisé en utilisant des technologies à base d'hydraulique ou d'électricité (ex : arbre électrique, ...) ; cette technique permet entre autre de les multiplier.

Les grandes surfaces des entrées canalisantes des canaux fluidiques décrits peuvent ainsi être segmentées, et/ou être exploitées par recouvrement de ventilo-compresseurs multiples décalés les uns des autres axialement et angulairement. Cette technique évite la construction de ventilo-compresseurs « avant » de très grand diamètre, fragiles, techniquement difficilement réalisables.

Les unités mobiles telles que décrites ci-dessus, au-delà de la/des zones propulsives décrites (partie intermédiaire), reçoivent, en « sortie » de ladite zone intermédiaire du/ des dits canaux « longitudinaux » internes,

des vannes à grand débit, montées optionnellement, pilotées, qui permettent par déviation d'une partie ou de la totalité du flux propulsé par le dit canal « longitudinal » interne, l'alimentation d'un ou plusieurs canaux internes dits « transversaux » ; Ces vannes pilotées à grand débit sont constituées d'opercules montés en segments articulés, animés par des dispositifs à action mécanique, hydraulique ou électrique et sont construites pour générer un minimum de perte de charges, elles sont en outre couplées à des ouvertures latérales disposées en paroi des canaux fluidiques longitudinaux qui assurent par leurs mouvements conjugués le passage du (/ des flux) intégral ou partiel d'un canal longitudinal à un ou plusieurs canaux transversaux.

des équipements « diffuseurs » de flux et de « stabilisation + parallélisation » des turbulences dans le flux sortant comme décrits ci-dessous, avant sa mise en échappement dans la masse globale du fluide environnant.

Les équipements « diffuseurs » sont principalement du type « Turbine à gaz », connus dans les réacteurs `aéronautiques 'en exploitation et/ou dans les centrales de production d'électricité. Cependant lesdites turbines, appliquées aux dites unités mobiles lesquelles libèrent, dans le fluide environnant, le / les flux traversant à des vitesses et pressions très inférieures à celles comparées des réacteurs « classiques », opèrent sur une plage plus large de variations de vitesses, pressions et températures et sont donc plus efficaces en production d'énergie ; elles entraînent mécaniquement, immédiatement dans le sens descendant du flux, chacune une génératrice de courant électrique incorporée au centre du dispositif « aval » suivant(ex [Fig.11]/11) Rep GE . Au deuxième degré, ces `turbines', en captant l'énergie potentielle du flux qui les traverse, en abaissant les températures, vitesses et pressions de ce fluide, le libèrent nécessairement dans un état de turbulences non maîtrisées, d'où la nécessité du dispositif de 'parallèlisation' descendant suivant le sens d'écoulement fluide, décrit ci-dessous.

Les dispositifs de parallélisation sont matérialisés en plusieurs niveaux en suivant le sens des écoulements fluides :
- a dès l'entrée dans la zone terminale divergente des dits conduits fluidiques, à la sortie immédiate de la zone de motorisation (portion intermédiaire), ou généralement immédiatement après le dispositif « Turbine » décrit ci-dessus (ex [Fig.11]) Rep DF, en dégageant en son centre une alvéole circulaire pour la génératrice électrique précitée, par une structure « serrée », occupant l'intégralité du passage de la veine fluide en transit, construite pour résister aux turbulences du flux (en sortie des dispositifs de motorisation ou de « Turbine »), aux gradients de température du fluide correspondant, y compris dans les phases transitoires de démarrage, et ne présentant face au flux propulsé qu'une section nette « matière » minimale ; un exemple de construction de ce type de dispositif de parallélisation peut s'appuyer sur des structures de type « nid d'abeilles » en Carbone ou en Fibres de Carbone,
- b un ensemble de jeux d'ailettes, notamment deux jeux, montés perpendiculairement l'un à l'autre, soit fixes, soit pilotés, asservis aux fonctions de guidage des dites unités mobiles, en orientant le/les flux en sortie des dits canaux, immédiatement avant leur éjection dans l'espace fluide environnant, et « non » à l'extérieur et après la terminaison de l'enveloppe « fuselage » externe,
- c optionnellement, à un niveau intermédiaire entre les deux ensembles d'ailettes décrits ci-dessus, ou en troisième niveau immédiatement avant l'éjection de la / des veines fluides dans le fluide environnant, un jeu de tuyères alimentées soit par les dispositifs principaux de motorisation, soit par des motorisations secondaires spécifiques. Ces tuyères sont conçues pour être orientables et pilotées en direction et en débit de façon à influencer significativement la direction d'éjection du flux principal de chaque canal fluide. Ce dispositif optionnel est à considérer en fonction des modes de guidage retenus pour le « pilotage » de ladite unité mobile.

Le résultat final de l'action produite, par l'ensemble de ces dispositifs « Turbine + Parallélisateurs » sur le flux traversant le /les dits canaux internes, est de restituer ce flux avec une efficacité maximale au moment de sa sortie « arrière » au point de sa jonction avec le flux 'externe', environnant, enveloppant ladite unité mobile. Cette efficacité est recherchée et développée sur les points suivants : atténuation des « turbulences », et parallélisation des veines fluides élémentaires, réduction des « températures », et adaptation des « vitesses » et « pressions » du flux les traversant avant éjection.

Ainsi lesdites unités mobiles sont propulsées à partir d'une surface égale à la totalité de la zone « arrière » contenue dans le périmètre de l'enveloppe « fuselage » externe, et il est évident, pour un homme de l'art averti, de comprendre que la force propulsive nécessaire pour maintenir une vitesse « imposée, pilotée », s'obtient pour un flux de sortie dont :
- la section propulsive « efficace » est maximale, égale à la section arrière de l'enveloppe externe,
- la vitesse d'éjection est maîtrisée, contrôlée, supérieure à la vitesse d'entrée frontale, mais relativement proche de la vitesse imposée par pilotage à l'ensemble de la dite unité mobile,
- la pression est supérieure mais relativement proche de la pression régnant dans le fluide environnant, (évitement d'un effet de détonation et donc agissant en réduction des nuisances sonores),
- la température est aussi basse que possible, compte tenu des process mis en oeuvre, de façon que la perte d'énergie thermique « éjectée » soit minimale par, notamment, l'optimisation de l'effet double flux décrit, et la captation d'énergie par l'entraînement de turbines adaptées.

Ces conditions d'exploitation de l'ensemble du dispositif propulsif proposé, exposées ci-dessus, permettent de comprendre son efficacité alors qu'il est incorporé dans une unité mobile dont la traînée aéraulique (aérodynamique) externe est minimale du fait de son enveloppe « fuselage » externe de faible conicité sur tout sa longueur (ou de section quasi-constante), en rappelant que la zone dépressionnaire frontale 'avant' est permanente et gérée par l'asservissement de l'ensemble du dispositif innovant divulgué.

Des dispositifs télécommandés complémentaires, innovants (dans le cadre de leur incorporation aux dites unités mobiles), sont mis à contribution pour maîtriser les opérations de stabilisation et de gouverne des dites unités dans leur conduite pour suivre une trajectoire de parcours imposé. Ces dispositifs sont connectés à la demande aux canaux internes transversaux décrits, lesquels sont alimentés par les canaux principaux longitudinaux, leurs sorties « fluide » orientables ou fixes débouchent à des points spécifiques de l'enveloppe « fuselage » externe cylindrique à faible conicité, de façon à développer des forces latérales maîtrisées agissant en orientation de trajectoire ou de giration des dites unités mobiles. (Voir détails de construction non limitative possible ex : [Fig.09] : Rep TG1 et /ou Rep TG2).

Accessoirement lesdites unités mobiles, afin qu'elles soient d'une manoeuvrabilité augmentée, en modification de leur section externe globalement légèrement conique, pourront être équipées de dispositifs nécessaires ou optionnels, apparaissant temporairement ou en permanence, en saillie externe de ladite enveloppe externe, notamment

En applications aérauliques :
caissons porteurs incorporés à la dite face « ventrale » des dites unités, voire très plats ou plans (ex : [Fig.11] Rep CPP), pressurisés et alimentés temporairement par les canaux fluidiques transversaux ( ex : [Fig.11] Rep CTV), développant une poussée surfacique verticale qui permet de compenser le manque de portance constaté à faibles vitesses,
caissons plats, pressurisés, identiques à ceux précédemment décrits, développés sur des surfaces spécifiques de l'enveloppe « fuselage » externe, autres que la surface dite « ventrale » (ex [Fig.11] Rep CPL), qui développent des forces de réaction pilotées, zonées, perpendiculaires à ces surfaces (ex : [Fig.11] Rep PL), qui permettent une utilisation des unités mobiles ainsi équipées dans des domaines similaires ou proches de celui des hélicoptères et des taxis volants (VTOL) avec des capacités de réaction directionnelle augmentée en terme de puissance et de maniabilité, sans nécessiter le recours à des dispositifs antigiratoires
ailes porteuses externes fixes ou rétractables qui augmentent la portance propre des dites unités dans leurs parcours à faibles et/ou moyennes vitesses,
ailes ou ailerons d'orientation de type « gouvernail » de contrôle de trajectoire,
ailerons de contrôle et maîtrise des effets de giration de tous ordres,
mini-organes propulsifs spécifiques, alimentés par les canaux fluidiques transversaux, actionnés par impulsion ou de manière prolongée et contrôlée, à effet d'orientation et de guidage ou effet de contrôle des mouvements de giration,
organes rétractables nécessaires aux opérations de décollage ou d'atterrissage (ex : trains de roues, ...),
capteurs de navigation ou des dispositifs de repérage associés à des radars ou des dispositifs de prises d'images ou de vidéo-surveillance de l'environnement amont, aval et immédiat de la trajectoire,
dispositifs de dégivrage lorsqu'ils sont nécessaires,
équipements et accessoires connus adaptables par l'homme de l'art dans le domaine aéronautique ou de la fluidique (Liste non limitative)

En applications hydrauliques et en milieu mixte (ex : air-eau) :
La plupart des équipements et accessoires précités applicables dans le domaine de l'aéraulique peuvent être transposés en milieu hydraulique en tenant compte des spécificités de ces milieux à fortes viscosité et densité, incompressibles, dans lesquels les composantes,
« flottabilité » notamment, liée à la densité,
« viscosité » liée aux vitesses mises en oeuvre risque de générer des effets de cavitation,
doivent être prises en compte à tous les niveaux de conception.

Ces accessoires montés fixes ou escamotables viendront augmenter définitivement ou temporairement la trainée fluidique de l'enveloppe externe desdites unités mobiles sans pour autant réduire leur caractère innovant de base, par associations non revendiquées.

Lesdites unités mobiles décrites, sans perdre leur caractère innovant de base, en respectant la faible conicité de l'enveloppe « fuselage » externe et les formes des conduits fluidiques internes décrits:

pourront être équipées, en interne de tous les matériels de navigation nécessaires connus adaptés aux domaines d'applications possibles (aéronautique, mobiles au sol, marine profonde et de surface),

seront construits, dans tous les volumes aménagés et/ou aménageables disponibles, entre le fuselage « externe » et les formes « canaux fluidiques » internes, en espaces techniques, qui ne sont en aucune façon assimilables à des sacs à gaz, qui auraient pour fonction de recevoir:

l'ensemble des éléments de structuration mécanique des dites unités mobiles : Ossatures principales, Supports mécaniques des ensembles et composants internes (Ces ossatures et supports intègrent tous les composants issus de toutes les technologies modernes adaptées à l'usage fait des dites unités mobiles),
l'ensemble des cellules techniques nécessaires au pilotage et au développement de toutes les fonctions de motorisation, de guidage et commerciales prévues dès leur conception. ; les volumes techniques associés, développés pour architecturer lesdites unités mobiles seront :
- soit adossés à la structure de l'enveloppe externe définie et composés d'un ou plusieurs sous-volumes développés, conçus néanmoins pour intégrer les structures dédiées à la constitution des canaux internes décrits
- soit constitués d'un seul ou plusieurs volumes placés au centre du tunnel principal en laissant passer, régulièrement réparti ou non, l'ensemble de l'écoulement fluide.

Les volumes et formes développées pour constituer les canaux fluidiques internes sont optimisés de telle sorte que leurs pertes de charge (traînée) « internes » hydrauliques ou aérauliques ou mixtes propres soient minimales

Les unités mobiles décrites, agrémentées de toutes combinaisons ou associations des dits volumes aménagés, des équipements et/ou accessoires techniques connus et adaptables, sont des extensions innovantes induites en variantes des innovations principales de base divulguées.

En présentation schématique de l'innovation, sans que la description qui suit du croquis simplifié présenté en [Fig.02], à simple titre d'exemple d'une unité mobile « très schématique » décrite se déplaçant dans le sens indiqué par la flèche repérée « SD » (sens du déplacement) , ne puisse être considérée comme une version restrictive ou limitative de la généralité des unités mobiles divulguées, évolue, dans le milieu d'environnement noté Rep FE, entre le flux entrant repéré FE1 et le flux de sortie repéré FS, en repères :
- 1 un exemple simplifié très schématique de forme « fuselage » extérieure Rep 1, à section légèrement conique,
- 2 un exemple de forme intérieure schématique, évolutive, en forme de conduit fluidique « unique » (quatre points Rep 2),
- 3 un exemple de section d'entrée Rep 3, de la veine fluide captée par l'avant du dit mobile. Cette section, à titre d'exemple, est rudimentairement représentée de forme « ovale », en section transversale (non représentée) ;
- 4 un exemple de section de sortie Rep 4, de la veine fluide éjectée de l'arrière du dit mobile ;
- A1 à l'avant du dit mobile, sans empreinte sur le profil « fuselage » extérieur légèrement conique, une représentation très schématique de la cellule de pilotage ;
- A2 une représentation très schématique du compartiment servant de cellule de contrôle de la trajectoire de vol ;
- B1- B2 - B3 -B4 - une représentation très schématique de compartiments de 'Passagers';
- C1 - C2 - C3 une représentation très schématique de compartiments `Fret';
- D2 une représentation très schématique d'un compartiment technique
- E1 - E2 une représentation très schématique de compartiments d'équipements techniques de stockage de fluides
- F1 - F2- une représentation très schématique de compartiments de stockage cloisonné de carburant ;
- G1 - G2- une représentation très schématique de compartiments de commande d'actionneurs permettant la manoeuvre des équipements décrits en repère « P1 - P2 » ;
- P1 - une représentation très schématique d'un ensemble « guides-diffuseurs » / parallélisateurs de flux
- P2 une représentation très schématique d'un jeu d'éléments de Volets mobiles / parallélisateurs de flux, pivotant autour d'axes
- M1-M2-M3 une représentation très schématique de l'ensemble propulsif du mobile, présenté en position centrale
- RC1-RC2-RC3 L'ensemble propulsif proposé permet de capter la totalité de la veine fluide entrant par l'avant du mobile et, pour ce faire, peut être doté d'un équipement de « ventilo-compression » 'avant', éventuellement étagé ;
- GTS Dans le cas ou une partie seulement de la veine fluide entrant dans le mobile est conduite vers le dispositif de motorisation, une veine fluide périmétrique (Rep « GFA » ou « Rep 30 ») conduite par un sous-canal (Rep « GTS ») de guidage de l'air admis depuis l'avant du mobile, sert d'écran thermique et sonore aux vibrations aérauliques générées par le dispositif de motorisation et participe au développement d'un dispositif dit « double flux » et de post combustion ;
- T une représentation très schématique d'une Turbine (capteur-moteur), qui actionne directement ou indirectement tous les équipements internes de l'unité mobile constituée par l'intermédiaire d'un générateur électrique ([Fig.11] Rep « GE ») ou hydraulique, accouplé à ladite Turbine.

Sur cette figure ne sont pas schématisés les canaux fluidiques « transversaux » ni les caissons plats qui leur sont connectés ;

Le positionnement relatif des composants, dispositifs et cellules de l'ensemble des éléments précités n'est en aucun cas limitatif, ni restrictif et n'altère en rien les fonctionnalités de base recherchées, revendiquées dans le cadre de leur adaptation aux dits canaux internes et à l'ensemble des unités mobiles constituées.

En [Fig.03], est représentée la vue « avant » d'une unité mobile avec une section apparente de forme « Ovale aplatie » de forme dérivée de l'association d'un « ovale » et d'une surface quasi-plane, marquée sur la face ventrale de ladite unité.

Ce type d'association revendiquée permet d'obtenir des formes « fuselages » externes qui, en aéraulique notamment, non seulement à relatives basses vitesses, développent sur la face ventrale des dites unités mobiles des forces de pression qui s'ajoutent aux forces de dépression dorsale ;

En complément de la représentation schématique faite par les [Fig.02] et [Fig.03], la [Fig.04] présente, à titre d'exemple très schématique, non limitatif, une unité mobile comportant plusieurs canaux (quatre) :
deux canaux latéraux Rep C1 et Rep C4 d'admission de la partie de veine fluide frontale se présentant face à ces canaux, chacun de ces canaux étant équipé d'un dispositif de motorisation propulsive à base de combustion interne,
deux canaux centraux Rep C2 et Rep C3 d'admission de la partie de veine fluide frontale se présentant face à ces canaux, équipés de tous les dispositifs tels que décrits relatifs au croquis-[Fig.02], y compris les dispositifs notés : Rep RC1, Rep RC2, Rep RC3, actionnés par exemple des moteurs électriques, sans dispositif de motorisation propulsive thermique tels que notés Rep M1- Rep M2- Rep M3.

Les sections nettes « avant » des différentes 'entrées' des canaux constitués ne sont pas nécessairement dans le même plan frontal et peuvent être décalées comme représenté, à titre d'exemple non limitatif, dans la [Fig.04], les longueurs relatives des différentes éléments constitutifs de l'enveloppe extérieure Rep 1 ne sont pas identiques et sont adaptées aux longueurs `utiles' des canaux fluidiques englobés ; (cette représentation n'est nullement restrictive, ni limitative).

A titre d'exemple d'applications :
pour les catégories d' « unités mobiles connues » évoluant dans un milieu mixte « hydraulique et aéraulique » tels que les navires, bateaux de toutes sortes y compris les voiliers mono ou multicoques, jet-skis, la présente innovation considérée consiste à ajouter aux coques connues de ces mobiles une coque complémentaire, constituant l'enveloppe externe décrite, de « section externe à faible conicité », depuis l'avant du mobile jusqu'à l'arrière de celui-ci, sans que ces points dits « avant » ou « arrière », des dites unités mobiles connues, soient pris strictement en référence (voir en Figure . 05 -01 et [Fig.05] -02, le Rep D1 et en [Fig.10] le Rep D). L'espace dégagé entre l'intérieur de cette enveloppe externe et l'extérieur de la coque conventionnelle d'un mobile connu, matérialise le tunnel externe à celui-ci, canalise les écoulements hydrauliques et aérauliques concernés par l'avancement propulsif du dit mobile et évite les dispersions énergétiques de l'effet de traînée dans le milieu environnant (ex : les vagues qui se forment à partir de l'étrave d'un bateau).

Afin d'assurer une convergence du flux entrant dans ledit tunnel, lequel peut se subdiviser en une pluralité de canaux indépendants et/ou interconnectés, il est nécessaire de générer une dépression « avant » significative dans ladite veine fluide « entrante » en utilisant des dispositifs Rep AF, accélérateurs de flux, comme figurant sur les dessins croquis de principe joints (ex- [Fig.05], [Fig.06] et [Fig.08]). Ces dispositifs Rep AF, de mise en dépression « avant » de la veine fluide frontale, peuvent être asservis à la mesure permanente du différentiel de pression entretenu entre cette zone fluide « entrante » et le milieu fluide environnant extérieur traversé (voir capteurs Rep CPA sur [Fig.07]). Ces dispositifs Rep AF peuvent aussi être adaptés pour assurer une dépression permanente et régulière le long des parties dites intermédiaires des dits canaux fluides longitudinaux et permettre l'amenée optimisée, en pression augmentée de la totalité du flux fluide conduit, lui-même pouvant être subdivisé, jusqu'à l'entrée de la troisième partie divergente des dits conduits fluidiques. L'entrée de cette troisième partie peut être équipée d'un ou plusieurs dispositifs propulsifs classiques, (ex : hélice « turbine » de bateau ; voir Rep MH sur : [Fig.05] -01 et 02), et alimentée comme indiqué ci-dessus par un ou plusieurs canaux ou sous canaux fluidiques. Dans le sens descendant du flux, cette troisième partie du/des conduits fluidiques est munie de dispositifs de parallélisation et diffuseurs de flux (voir ex : Rep P1 et P2 sur [Fig.05]- 01 et - 02 , sur FIG .08 ) qui permettent l'harmonisation du/des gradients de pressions et vitesses du flux, la réduction des turbulences non axiales qui y apparaissent ; ainsi, se développent contre les parois divergentes de cette troisième partie canalisante des forces de poussée « arrière » qui s'ajoutent aux forces de contre réaction de l'ensemble de la veine fluide éjectée dans le milieu fluide environnant autour et à l'arrière de ladite unité mobile dans le prolongement de sa trajectoire. La surface intéressée par ces forces de poussée et de contre-réaction est celle de la section nette d'éjection arrière de la totalité de la veine fluide qui est elle-même équivalente à celle de la section d'admission frontale, diminuée de l'effet de faible conicité (voir ex : [Fig.07] Rep Co) de l'enveloppe « fuselage » externe.

Pour ce type d'unités mobiles évoluant en milieu mixte dont la surface séparative entre les deux fluides n'est pas stabilisée (le cas des milieux marins principalement, mais aussi fluviaux), la présente innovation décrit aussi l'adjonction aux dispositions constructives déjà décrites, d'éléments de structures de stabilisation et de parallélisation des écoulements fluides à l'intérieur du tunnel principal créé entre la coque principale conventionnelle connue de ces mobiles et la coque externe à section constante ou à faible conicité divulguée. Ces structures internes complémentaires peuvent être segmentées et reproduites à plusieurs emplacements le long du tunnel d'écoulement créé le long du mobile et notamment à l'avant et à l'arrière des dites unités (Voir ex : [Fig.05] : Rep P10, Rep P20 et Rep P1, Rep P2); ces représentations ne sont pas limitatives.

Ces structures de stabilisation et de parallélisation des écoulements fluides décrites, dont l'orientation générale par rapport à celle des fluides externes à l'unité mobile peut être infléchie par des actionneurs pilotés, ont pour rôle complémentaire de participer au guidage du mobile en agissant principalement sur la trajectoire des fluides éjectés à la sortie immédiate du/des tunnels constitués, créant un effet de gouvernail directionnel par rapport au plan de la surface sur laquelle évolue le mobile. Les structures « arrière » divulguées, par leur capacité à orienter le flux sortant du tunnel constitué, peuvent aussi permettre le développement de forces contribuant à la stabilité 'avant-arrière' du mobile dans son ensemble (effet de tangage), tel un gouvernail de profondeur qui permet de contrôler l'équilibre de « déjaugeage » de l'ensemble de l'unité mobile constituée

Ces dispositifs de parallélisation peuvent être perfectionnés par exemple par un jeu de tuyères orientables, pilotées et/ou asservies et alimentées soit par les dispositifs principaux de motorisation, soit par des motorisations secondaires spécifiques.

Les dispositions constructives de la structure 'arrière' de parallélisation des flux à la sortie du ou des tunnels internes du mobile constitué sur la base de la disposition constructive divulguée, peuvent aussi s'appliquer à des structures de parallélisation « avant », en dispositif d'amélioration de l'efficacité de guidage ou de pilotage de l'ensemble de l'unité mobile

Ces dispositifs de parallélisation et de guidage de flux, agissant comme des déflecteurs, ne sont en aucun cas assimilables à des cônes de guidage tels que décrits et revendiqués dans le brevet US0256459/2013.

Ces dispositifs de parallélisation des flux en interne ou en éjection « arrière » permettent de :
maximiser l'efficacité des effets de réaction de sortie des flux émis par les organes propulsifs en réduisant notablement les effets de turbulences internes, de
diminuer la trainée globale arrière des dits mobiles en générant dans les zones de sortie un flux dont le gradient des « vitesses » soit optimisé afin de et réduire les ondes de pression génératrices des turbulences et ondes sonores et/ ou thermiques à 1' « arrière », de
déstructurer les ondes de pression perpendiculaires au sens du déplacement des unités mobiles décrites, et de
maximiser le rendement propulsif des dites unités mobiles et de
réduire les traces turbulentes, sonores et/ ou thermiques des dits mobiles décrits.

La section 'avant' opérationnelle de l'enveloppe cylindrique externe constituée autour du mobile connu incorporé à adapter pourra être décalée soit vers l'avant soit vers l'arrière de la « pointe extrême avant » du mobile connu à adapter et/ou incorporer (voir Rep D1 [Fig.08] - 02), afin d'optimiser la captation des ondes de pression « avant » développées par celui-ci pour réduire la « traînée externe » développée par l'ensemble constitué, dès l'extrémité « avant » de l'enveloppe « fuselage » externe, et la faire tendre vers zéro. Comme revendiqué, cette structure, correctement dimensionnée et positionnée, a pour rôle de canaliser la totalité de la masse fluide s'opposant au déplacement de ladite unité mobile dans le milieu fluide environnant, (Voir ce décalage « avant » Rep D1 [Fig.08] - 02).

Toutes les unités mobiles, dont la forme interne de section variable, constitutive du ou des canaux longitudinaux les traversant, serait adaptée au point de faire ressortir une ou plusieurs parties proéminentes, saillantes par l'avant du dit mobile, Rep B, connu intégré, au-delà de la section nette d'entrée telle que décrite, sans perturber notablement le flux principal « entrant » , capté par la section nette « Avant » de l'enveloppe « fuselage » externe, sont des adaptations admissibles en extension « dérogation » ou variantes aux principes développés dans la présente demande de brevet ( voir Rep D [Fig.10]). Dans le cas représenté en [Fig.10], la pointe « avant », Rep PAV, proéminente de l'objet mobile incorporé (ici un avion), pour être acceptable et conforme aux objectifs d'efficacité aérodynamique visés, suppose que le mobile considéré est prévu pour ne générer que des ondes de pressions contenues dans un cône allant de l'extrémité de cette pointe jusqu'aux entrées frontales Rep3 des conduits fluidiques longitudinaux ex : Rep 2 (voir [Fig.10]). Dans ce cas représenté, la longueur Rep D, telle que figurée en amont de l'entrée Rep 3, indique une pointe « avant » proéminente, les vitesses maximales de déplacement supposées du mobile seraient nécessairement « subsoniques ».

Pour une configuration telle que la longueur Rep D soit nulle ou négative (pointe « avant », en retrait, en deçà de la section Rep 3), les vitesses maximales de déplacement supposées du mobile peuvent être supersoniques. L'efficacité aérodynamique supposée d'une telle construction ne sera maîtrisée que si les capteurs de mesure ( ex : [Fig.07] : Rep CPA) de la dépression frontale au périmètre « avant » (bord d'attaque) de l'enveloppe fuselage (voir [Fig.07]) donne une information de réelle « dépression » différentielle frontale entre les flux admis dans les tunnels/ canaux longitudinaux internes et le flux externe environnant traversé. L'asservissement de la motorisation interne de propulsion servira à limiter la vitesse maximale « économique » de ladite unité mobile constituée.

A cette famille des mobiles connus s'ajoute toutes les unités mobiles de conception nouvelle dont l'efficacité propulsive s'appuie sur la mise en oeuvre et l'exploitation des dits « tunnels et /ou canaux longitudinaux internes motorisés ou non et l'enveloppe de section externe à faible conicité voir quasi-constante » et notamment les unités mobiles conçues comme un assemblage d'unités mobiles revendiquées pouvant intégrer plusieurs « corps solides » agrémentés d'une ou plusieurs enveloppes répondant à la disposition constructive de base divulguée. Lesdites unités mobiles, variantes des unités mobiles de base revendiquées, sont aussi globalement revendiquées.

Les unités mobiles divulguées par l'adjonction d'une « enveloppe externe de section extérieure à faible conicité voir quasi-constante » aux mobiles connus, sont un sous-ensemble d'une famille complète divulguée de mobiles répondant aux dispositions constructives de base considérées.

Toutes les unités mobiles connues et implémentées de ladite disposition constructive « Tunnel(s) interne(s) motorisé(s) sous contrôle d'asservissements par capteur de dépression, enveloppe de section externe à faible conicité voir quasi-constante » divulguée, agrémentée de toutes ou parties des dispositions constructives complémentaires décrites, sont considérées comme ayant une forme nouvelle, innovante, revendiquée contribuant à leur meilleure efficacité propulsive dynamique en milieux fluides homogènes ou mixtes de nature gazeuse, hydraulique ou mixte.

Les dispositifs de convergence des flux avant « entrant » et de parallélisation des flux arrière- « sortant » sont particulièrement importants afin de permettre une conception efficace, compacte et innovante de l'ensemble du dispositif « tunnel » ajouté aux formes déjà connues de mobiles tels que les automobiles.

Voir à titre d'exemples non limitatifs, pour les automobiles, la [Fig.06]. annotées avec les mêmes repères que sur la FIG .02, le repère Rep2 formant paroi du canal interne est remplacé en partie par le profil extérieur du véhicule automobile (Rep B) mis en canal aérodynamique de section extérieure de faible conicité voir quasi-constante, Rep 1. La section « Avant » Rep 3 de l'enveloppe de section constante « tunnel » Rep 1 encapsulant le véhicule Rep B, selon les effets de design recherchés, peut être plus ou moins inclinée sur l'axe de ladite enveloppe ; la section de sortie « Arrière » de l'enveloppe « tunnel » Rep 4 sera conçue en intégrant les composants de parallélisation du flux aéraulique Rep P1 et Rep P2 à l'arrière du véhicule automobile Rep B. Dans le cas précis de véhicules terrestres (automobiles, camions, ...) ce dispositif de parallélisation « arrière » pourra être conçu de façon à contribuer à l'adhérence au sol des dits mobiles en infléchissant par le haut, la trajectoire du flux « arrière » éjecté de façon à développer une force spécifique d'appui au sol ; cette force pourra être constante ou être modulée par asservissements ou par action de pilotage.

Les formulations simplifiées de la globalité ou d'une partie caractérisante des structures innovantes revendiquées sont, dans tous les cas, des présentations en sub-sidiarité de la présente innovation globale revendiquée.

Les dispositions constructives décrites peuvent aussi s'appliquer aux mobiles s'apparentant aux ensembles mobiles constitués d'unités mobiles compartimentées accrochées les unes aux autres (ex : wagons ou voitures). Sur ce type de mobiles pour lesquels la longueur globale est très supérieure aux dimensions de la section nette, les surfaces en contact avec le flux d'écoulement laminaire développé par l'adjonction d'une enveloppe externe segmentée, développent des forces de contact et de freinage (en écoulement laminaire) telles que l'efficacité du dispositif décrit pourrait être remis en cause.

Une conception nouvelle de ces modes de transport, développée pour de nouvelles lignes et de nouveaux réseaux de transport non assujettis à des contraintes de gabarits permettra de développer des mobiles s'apparentant aux ensembles mobiles constitués de mobiles compartimentés accrochés les uns aux autres, avec une
« variante-dérogation », relative au principe de la faible conicité de l'enveloppe externe (non applicable). Dans cette application considérée, cette continuité sera segmentée à la longueur des modules (ex : Wagons) constitutifs de l'ensemble de ladite unité mobile.

Une disposition constructive divulguée pour ce type de mobile à section externe à très faible conicité ou quasi-constante par segments, intégrant un ou une pluralité de tunnels aérodynamiques internes, pouvant être segmentés, consiste à équiper ce ou ces tunnels de moyens propulsifs, placés dans chacun des modules du mobile segmenté, mais aussi et préférentiellement dans le segment de queue, agissant globalement sur lal les veines d'air canalisées par aspiration dépressionnaire frontale, sous l'action d'un ou plusieurs dispositifs ventilo-compresseurs « avant » placés prioritairement à l'avant du module de tête de l'ensemble constitué ; leur intégration et leur efficacité s'entend comme étant dépendante de la structure « avant » du ou des canaux internes à alimenter à partir de la « totalité de la surface frontale » de la dite unité.

Une proportion notable des adaptations des dispositifs divulgués appliqués aux mobiles « véhicules » connus, pour des raisons évidentes de maîtrise de leur conduite, notamment « vision directe » de l'environnement extérieur, sera réalisée au moins partiellement, notamment latéralement, en matériaux transparents adaptés. Cette disposition constructive « transparente » sur la partie « Avant » et sur les parois latérales de l'enveloppe formant le cylindre extérieur à très faible conicité du mobile constitué est une variante innovante des unités mobiles revendiquées ; elle sera utilement complémentée d'une vision s'appuyant sur des caméras numériques qui permettent de s'affranchir de la vision directe.

La segmentation par anneaux successifs d'entrées fluide décalées en gradin du tunnel extérieur appliqué aux mobiles connus, est innovante comme étant une extension appliquée de la construction de base « enveloppe extérieure à faible conicité, ou de section quasi-constante, associée à un ou plusieurs canaux fluidiques longitudinaux internes » divulguée.

Ce modèle particulier de construction qui segmente les entrées fluidiques en bandes ou anneaux successifs, ou en une succession d'entrées décalées les unes des autres contribuant à maîtriser le flux de la veine fluide qui s'oppose au déplacement du dit mobile est une disposition constructive, variante de la construction de base décrite précédemment. La [Fig.08] (« 08-1 Vue Frontale » et « 08-2 Vue de côté ») représente un mobile connu, ex- « automobile », mis en « conduit-canal » dont l'entrée est segmentée en deux sous-canaux constitués, l'un plus petit que l'enveloppe externe, l'autre plus petit que le premier sous-canal. L'ensemble constitué canalise progressivement les flux aérauliques se présentant frontalement au mobile de base connu et participe à la définition de l'unité mobile nouvelle divulguée.

La variante constructive en bandes ou anneaux successifs décalés en gradins, décomposant en éléments associés l'entrée « canal » de l'unité mobile ainsi conçue, est applicable à des structures rigides et/ou déformables semi-rigides ou souples dont la mise en forme définitive par effet de pression « avant » s'effectue automatiquement à partir d'un seuil de pression et/ou de vitesse, les deux étant liés selon les lois de la mécanique des fluides. Ce type de structure d'entrée canalisante déformable, en forme de conduits souples superposés, constitués de membranes enveloppantes reliées entre elles par des cloisons souples, associées, pour former globalement une entrée « canal » segmentée de l'unité mobile ou multicanaux, est aussi décrite comme innovante.

La prise en compte de cette variante constructive d'entrée « canal » segmentée induit aussi une variation constructive de la partie descendante du dit canal qui peut être construit soit en autant de sous-canaux qu'il y a de segments dans l'entrée canalisante, soit en sous-canaux descendants, lesquels peuvent être de longueurs différentes, qui regroupent les flux de plusieurs segments « entrées » tels que décrits ci-dessus. Cette disposition constructive élaborée par expérimentation, qui ne fait pas appel à l'exploitation de dispositifs internes de motorisation, (la force propulsive étant externe), ni à des asservissements par capteurs dépressionnaires (ex : [Fig.07] :Rep CPA-), en variante innovante telle que décrite, est aussi revendiquée.

L'allongement revendiqué des motorisations pour des applications aérauliques est transférable, dans le principe, aux motorisations pour des applications hydrauliques ou mixtes.

Ensemble d'Unités mobiles caractérisées en ce qu'elles comprennent une « enveloppe » gaine externe, relativement mince Rep 1 ( voir exemples schématiques, non limitatifs) dans laquelle est fixé un ou plusieurs objets Rep B de formes et configurations connues ou nouvelles (exemples non-limitatifs : Bateaux ou automobiles, ou autres) ; la surface extérieure de ladite gaine définissant l'enveloppe extérieure Rep 1 de ladite unité mobile, et la surface intérieure de ladite gaine définissant, avec les surfaces externes du ou des dits objets connus incorporés Rep B, lesdites portions d'entrée, intermédiaires et de sortie dudit ou des dits canaux internes; les dits canaux internes ainsi constitués, peuvent être accessoirement équipés d'une pluralité de dispositifs de motorisation : Rep AF (exemples : accélérateurs de flux, de parallélisation Rep P1, Rep P2) du fluide entrant Rep FE1 et/ou sortant Rep FS. Le ou les objets Rep B, fixés en interne, constituent dans ces ensembles, une réalisation particulière ou synthétique des compartiments ménagés revendiqués en N°«7 »- ; ils peuvent servir de support à une motorisation interne propre dont l'action peut se développer dans les dits canaux internes constitués en maîtrise des flux s'opposant à l'avancement des dites unités mobiles et/ou , accessoirement, sur des appuis autres que le fluide environnant, notamment au sol dans le cas d'incorporation d'objets Rep B, qui peuvent être, non limitativement des mobiles motorisés tels que des automobiles, des camions, des motocyclettes, des vélos motorisés ( ex : surmontés d'un cycliste englobé dans la forme enveloppe externe). Les dispositifs de parallélisation du flux traversant, éjecté, sont caractérisés pour pouvoir participer à l'amélioration de l'adhérence au sol des dits véhicules ; dans ce cas précis l'éjection « arrière » du flux traversant sera infléchi par des dispositifs fixes ou asservis qui orientent le dit flux vers le « haut » en développant une force complémentaire de contre réaction d'appui au sol. Cette disposition constructive et celles qui en sont une traduction évidente (ex : développement de forces latérales de guidage) sont aussi revendiquées.

Unités mobiles caractérisées en ce que ledit au moins un canal interne comprend une pluralité de portions d'entrée Rep 3, successives, formant des sous-canaux, disposées de façon imbriquée et étagée depuis l'extrémité la plus en amont de l'objet Rep B incorporé, vers à la fois ladite enveloppe extérieure Rep 1 et l'aval Rep 4 de l'unité mobile qui peut aller au-delà de la terminaison de l'objet Rep B incorporé (voir exemple « automobile sur [Fig.08]). Lesdits « sous-canaux » peuvent être agencés de façon à permettre une fusion des flux admis, de sorte que le nombre de portions de flux « entrants » ne soit pas nécessairement égal au nombre de portions de flux « sortants » alors que la totalité du/des flux « sortants » est égale au total du/des flux « entrants »

Unités mobiles développées pour des applications dans le domaine aéronautique, telles qu'elles incorporent des motorisations « longues », non compactes, qui entraînent directement ou indirectement « des turbines » qui permettent le développement des ressources électriques nécessaires à l'entraînement indirect des « ventilo-compresseurs avant » décrits et aux fonctions complémentaires internes souhaitées.

Ces Unités mobiles sont caractérisées en ce que l'entraînement indirect décrit ci-dessus, non nécessaire dans les motorisations très compactes des avions connus, en exploitation à ce jour, dont les motorisations sont déportées dessous les ailes, s'avère nécessaire pour des configurations de canaux fluidiques longitudinaux internes simples ou multiples qui n'ont pas un axe linéaire continu qui soutent chacune de leur définition tridimensionnelle. Ces entraînements indirects peuvent être développés en mode électrique ou hydraulique.

Dans les unités mobiles revendiquées incorporant un mobile connu de l'art antérieur, les entraînements des « accélérateurs de flux » tels que décrits et revendiqués sont quasiment tous indirects de même nature que ceux -décrits ci-dessus et revendiqués.

Unités mobiles appliquées aux domaines aéronautique et/ou spatial, mais aussi hydraulique, caractérisées par l'incorporation à une ou plusieurs surfaces de l'enveloppe « fuselage » externe, et plus précisément, en aéronautique, à ladite face « ventrale » des dites unités mobiles assimilables à des aéronefs, de « caissons plats », totalement intégrés dans le volume contenu dans l'enveloppe « fuselage » externe, se développant soit sur des surfaces spécifiques, soit sur la totalité de la face ventrale, pressurisés et alimentés temporairement par les canaux fluidiques transversaux décrits, soit alimentés par des surpresseurs d'air, munis d'une multitude de points d'échappement fluide, régulièrement répartis, agissant comme des mini ou micro-tuyères dont l'action globale se traduit par une poussée surfacique verticale (ex [Fig.11] Rep P ) qui permet de compenser le manque de portance constaté à faibles vitesses des dites unités mobiles. Cette spécificité caractérisante, revendiquée, poussée jusqu'au bout de ses possibilités techniques potentielles, donne aux dites unités mobiles une capacité à effectuer un décollage vertical, qui se complète d'une mise en assiette à angle positif suffisant pour engager l'amorçage d'un glissement aérodynamique qui développe, par augmentation de la vitesse horizontale, les effets de portance nécessaires pour engager un réel décollage maîtrisé, sans avoir recours à l'utilisation de trains de roues . Les unités mobiles, appliquées à l'aéronautique, caractérisées pour effectuer un décollage s'appuyant sur un ensemble « zoné » de caissons ventraux pressurisés, ne disposant pas de trains de roues tels que connus et exploités, sont revendiquées comme étant nouvelles.

Les techniques de pilotage et d'asservissement notamment informatisées permettent, d'initier une phase de mini-décollage qui s'appuie sur les dits caissons plats, relayée par un décollage aérodynamique qui se développe en prenant appuis, en vitesse progressive augmentée, sur la partie plane ventrale de l'enveloppe fuselage externe laquelle génère les forces de portance nécessaires.

Les unités mobiles, appliquées à l'aéronautique, et plus spécifiquement comparables aux hélicoptères et autres taxis volants (dits VTOL), dans la technique spécifique innovante proposée, comprennent (ex [Fig.11]):

une enveloppe « fuselage » externe, conçue avec une surface ventrale « plane » et des formes profilées latérales symétriques (Rep CPL), développées au-dessus de la ligne « barycentre » longitudinale des sections transverses de l'unité mobile constituée,

un ou plusieurs canaux longitudinaux internes (sur [Fig. 11], représentation avec deux canaux longitudinaux internes motorisés), dont les motorisations, au-delà de deux, peuvent être différenciées, soit thermiques, soit électriques

un ou une pluralité de canaux « transversaux » internes connectés à la demande « en amont » à un ou plusieurs canaux longitudinaux par des vannes à grand débit (Rep VGD), immédiatement après les zones dites de motorisation à haute pression, « en aval » à des caissons pressurisés (Rep CPP), alimentés spécifiquement par pilotage et/ ou asservissements, répartis

sur la totalité ou une partie de la surface ventrale plane de l'enveloppe « fuselage » externe, qui développent des forces de poussée perpendiculaires à la surface ventrale plane, à tendance verticale « ascensionnelle », permettent la mise en oeuvre de forces ascensionnelles dont l'efficacité peut être modulée suivant les puissances des flux qui y sont admis

sur les surfaces spécifiques inférieures des formes profilées latérales symétriques (Rep CPL) décrites, qui développent des forces de poussée obliques (Rep PL), à composante ascensionnelle, et/ou directionnelle, déportées par rapport à l'axe principal vertical de la dite unité qui génèrent un couple de mise en rotation « directionnel » globale de celle-ci.

Les canaux fluidiques longitudinaux motorisés, non contributifs au développement des forces ascensionnelles sont mis en attente de sollicitation pour développer les forces maximales de propulsion horizontales ; les canaux fluidiques longitudinaux motorisés connectés à la demande aux canaux fluidiques transversaux sont sollicités séquentiellement les premiers pour développer d'abord les forces ascensionnelles de décollage puis contribuer à l'amorçage des forces propulsives horizontales.

Ainsi construites lesdites unités mobiles peuvent être dirigées efficacement dans toutes les directions et conservent leur efficacité aérodynamique en traînée réduite quand la puissance propulsive maximale est demandée pour les canaux fluidiques longitudinaux, alors que la puissance absorbée par les canaux internes « transversaux » n'est pas nécessairement réduite à zéro. La stabilité en termes de maintien de l'assiette de telles unités s'obtient en développant des formes spécifiques de l'enveloppe « fuselage » externe équipées de zones munies des dits caissons pressurisés telles que les forces qu'elles permettent de développer trouvent un barycentre situé au-dessus du « possible » point de retournement de ladite unité sur elle-même.

Ces particularités caractérisantes décrites pour des unités mobiles développées dans le domaine aéronautique peuvent, pour l'homme de l'art averti, sur des unités mobiles telles que revendiquées, être équipées de zones « caissons plats » propulsives, adaptées et reconduites dans les domaines d'applications hydrauliques, notamment en perfectionnement des dispositifs de guidage précédemment décrits ou voir classiques :
soit sur des bateaux ou mobiles dits de surface, par développement de forces latérales horizontales en zones située en dessous de la ligne de flottaison,
soit sur des « sous-marins » et tous mobiles de la même catégorie par développement de forces latérales multidirectionnelles,
les dits caissons, dans ces applications, sont aussi alimentés de manière contrôlée et asservie au dispositif central de pilotage, par des flux sous pression déviés des flux principaux longitudinaux décrits, conduits dans des canaux « transversaux » internes.

Cette particularité technique, décrite ci-dessus, peut encore se caractériser par un zonage des caissons pressurisés décrits ci-dessus, tel que les poussées développées par ces zones soient différentielles et pilotées qui, en aéronautique, autorisent une mise en angle d'assiette positif quasi instantanée, autorisant une mise en vitesse immédiate sur lame d'air « ventrale » prise entre sol et face ventrale « plate» de l'enveloppe « fuselage » externe, alors que les motorisations installées sont actionnées à pleine puissance.

La particularité technique exposée ci-dessus : « zonage de la face ventrale plate » de l'enveloppe « fuselage » externe des dite unités mobiles, peut aussi se caractériser par une adaptation maîtrisée de celle-ci et mise à profit en phase de décollage, pour développer des capacités nouvelles applicables en phase d'atterrissage.

Les dites unités mobiles nouvelles, sans train de roues, sont aussi caractérisées par des appuis au sol, multiples, de faible hauteur, totalement rétractables, pilotés, qui, en mode déployé, assurent une stabilité statique et donnent à la totalité de la surface ventrale concernée par les dits caissons pressurisés un positionnement initial qui, par rétractation conjuguée avec leur mise en pression , autorise le démarrage instantané de phases de mise en déplacements horizontaux, à faible vitesse (positionnement lents 'aéroportuaires'), puis en déplacements accélérés à vitesses croissantes de décollage en mode « glissé » sur le coussin fluidique développé par les dits caissons pressurisés mis en action.

La capacité technique telle que revendiquée de développer des unités mobiles sans « trains de roues » et à décollages et atterrissages très rapides, sur coussins d'air et/ou fluide à pression augmentée, contrôlée et pilotée, permet de réduire nettement la longueur des pistes de « décollage-atterrissage » et donc l'impact, notamment écologique, de l'emprise en surface nette au sol des aéroports.

Cette spécificité caractérisante, poussée jusqu'au bout de ses possibilités techniques potentielles, donne aux dites unités mobiles une capacité à effectuer un décollage vertical partiel et limité.
- L'efficacité, sur une faible hauteur, de ce décollage, peut s'avérer suffisant pour réduire ou supprimer la demande technique liée à l'utilisation de trains de roues
- Les techniques de pilotage et d'asservissement notamment informatisées, appliquées à cette configuration, permettent :
   initialement en phase de décollage, un basculement d'une partie des débits fluides internes alimentés par une partie de la puissance de motorisation installée dans les canaux fluides principaux des dites unités mobiles vers les dits canaux fluidiques transversaux qui alimentent les dits caissons plats,
   puis progressivement, l'alimentation à pleine puissance des sorties principales « arrière », qui développent la poussée nécessaire pour engager une prise de vitesse horizontale qui, elle-même, permet d'augmenter les forces de portance propre des dites unités revendiquées (en raison du fait qu'une partie de l'enveloppe « fuselage » externe, notamment ventrale, est « aplatie ou très aplatie, voire totalement plate »),
   alors qu'en même temps la puissance demandée pour alimenter les dits caissons plats est diminuée au fur et à mesure que la prise de vitesse assure aux dites unités mobiles le développement d'une force de portance qui augmente (au carré de la vitesse), telle que progressivement l'effet de poussée surfacique ventrale, développée par les dits caissons plats pressurisés, soit de moins en moins nécessaire et puisse être réduit à « zéro »

Ces particularités caractérisantes décrites pour des unités mobiles développées dans le domaine aéronautique peuvent, pour l'homme de l'art averti, être adaptées et reconduites dans les domaines d'applications tels que
- véhicules terrestres se déplaçant sur coussins d'air
- véhicules marins (ex : sous-marins de poche ou de défense, jets-ski, bateaux dits 'hors-bords', ...), notamment en perfectionnement des dispositifs de guidage

Ce dispositif « caissons plats pressurisés » peut être amélioré par un zonage des surfaces sur lesquelles ils peuvent être constitués, tel que les poussées développées par ces zones soient différentielles et pilotées.

Ainsi, pour des unités mobiles appliquées à l'aéronautique, en phase de décollage, la pression surfacique développée par des caissons plats dits de 'zone « avant »' de la surface ventrale, et donc la poussée correspondante peut être 'augmentée' alors que la poussée verticale demandée à d'autres caissons plats, dits de zone « arrière » peut être relativement diminuée. La différenciation des poussées ventrales par 'zones' permet de donner immédiatement aux dites unités mobiles une assiette positive qui améliore les capacités de décollage rapide, voire très rapide.

L'exploitation de ce dispositif « caissons plats pressurisés » incorporé à la face ventrale de ladite enveloppe externe pour des formes aplaties voir très aplaties (applications aérauliques - aéronautiques) qui offrent des possibilités nouvelles en termes de décollage et d'atterrissage « rapides » permet la conception d'unités mobiles qui peuvent être mises en oeuvre sans que l'on ait recours à des trains de roues, notamment repliables dans lesdites unités mobiles.

En effet, la mise en assiette positive immédiate des dites unités, au fur et à mesure de leur prise de vitesse horizontale permet l'engagement très rapide, aérodynamique, d'une lame d'air « ventrale » qui s'introduit dessous l'unité mobile, par effet de sol, en forme de « coussin d'air » dont l'épaisseur augmente très rapidement compte tenu de la prise d'assiette initiale et de l'augmentation progressive de vitesse horizontale, laquelle peut être très rapide compte tenu des spécificités aérodynamiques globales décrites ci-dessus.

La particularité technique exposée ci-dessus peut se reconduire en une adaptation maîtrisée de celle-ci qui permet le développement de capacités nouvelles applicables en phase d'atterrissage.

En effet, le zonage surfacique ventral décrit ci-dessus, permet aussi d'assurer aux dites unités mobiles une capacité à se présenter à faible hauteur , en atterrissage, avec une assiette positive maîtrisée, d'abord sur un coussin fluide ( d'air) aérodynamique 'épais' par effet de portance, puis au fur et à mesure de la diminution de son épaisseur par perte d'altitude et par perte de portance liée de à la diminution de la vitesse , compensée par un durcissement progressif de ce coussin « fluidique » par l'apport fluide de pression surfacique augmentée, émis par les dits caissons ventraux pressurisés, jusqu'à la phase terminale de l'atterrissage ; cet atterrissage pouvant se prolonger par un possible déplacement horizontal en mode 'glissé' sur coussin fluide activé par les dits « caissons ventraux pressurisés ».

Le concept du développement de forces de poussée « ventrales » différenciées, lié à la mise en oeuvre de caissons plats, ventraux, pressurisés munis de micro-tuyères qui éjectent un flux piloté et maîtrisé, sous pression, émis temporairement par les motorisations centrales, conduit par les canaux fluides « transversaux » internes, permet des allègements de structures, de poids, de conception des dites unités mobiles, au regard de la « suppression des dits trains de roues ». Cette potentialité technique nouvelle se traduit aussi en efficacité énergétique globale liée à la suppression d'un dispositif aussi lourd et encombrant que les trains de roues

A noter cependant que la suppression des points d'appui au sol que représentent les trains de roues, met en évidence la nécessité de les remplacer par des points d'appuis simples et rétractables qui permettent de donner aux dites unités mobiles une stabilité statique ; pour ce faire les dites unités mobiles peuvent se caractériser par des appuis multiples de faible hauteur, totalement rétractables , pilotés, qui viennent soutenir l'unité mobile lors qu'elle est à l'arrêt (déplacement horizontal 'nul').Ces appuis, en mode déployé, par ailleurs, permettent d'assurer à la totalité de la surface ventrale concernée par les dits caissons pressurisés, un positionnement initial tel qu'aussitôt ceux-ci mis en pression l'ensemble des micro-tuyères qu'ils portent puisse être opérationnel, autorisant le démarrage des phases de mise en déplacements horizontaux à faible vitesse (positionnement lents 'aéroportuaires', appuis décrits ci-dessus 'rétractés') par des forces latérales temporaires, générées par des caissons plats pressurisés développés sur les faces latérales de l'enveloppe « fuselage » externe.

Cette spécificité technique, poussée jusqu'au bout de ses possibilités techniques potentielles, donne aux dites unités mobiles une capacité à effectuer un mini décollage vertical, qui se complète d'une mise en assiette à angle positif suffisant pour engager l'amorçage d'un glissement aérodynamique qui développe, par augmentation de la vitesse horizontale, les effets de portance nécessaires pour engager un réel décollage maîtrisé, sans avoir recours à l'utilisation de trains de roues.

La capacité technique telle que revendiquée de développer des unités, sans « trains de roues » et à décollages et atterrissages très rapides, sur coussins d'air et/ou fluide à pression augmentée, contrôlée et pilotée, permet de réduire sans difficulté la longueur des pistes de « décollage-atterrissage » des aéroports. Cette potentialité technique nouvelle, appliquée aux unités mobiles de type aéronefs revendiqués, se traduit aussi en efficacité énergétique globale augmentée, liée à la suppression d'un important dispositif tel que les trains de roues dont le poids « mort », inutile en phase de vol après décollage, est pénalisant en termes de charge utile nette 'perdue' et d' « augmentation relative de volume des carlingues qui les abritent», tout le long des parcours effectués, la vie durant des aéronefs 'connus' ainsi équipés.

Cette technicité exposée ci-dessus, globalement innovante, permet le développement d'unités mobiles aérauliques, aéronautiques dites « sans train de roues » dont l'intérêt « économique » est évident : gain de poids, gain de place rendue disponible, gain en consommation de carburant, pour toute la durée de vie des dites unités mobiles ainsi constituées.

Les unités mobiles revendiquées peuvent être conçues pour être exploitées dans les domaines aéronautique et spatial, notamment pour des vitesses de déplacements supersoniques, stratosphériques, de vols suborbitaux, jusqu'aux limites des vols spatiaux, dont les fonctionnalités pour un lancement suborbital, voir spatial, se développent en séquentiel comme suit :
- a) décollage horizontal en utilisant
   une configuration multicanaux spécifiques telle que l'enveloppe « fuselage » externe i puisse se scinder en sous-enveloppes qui chacune est construite pour avoir les caractéristiques de base décrites, par étapes programmées et telle que des sous-ensembles monocanaux soient prévus détachables encours de vol, après un usage « premier » intensif sélectif qui privilégie la structure centrale pour la poursuite du lancement ; la première phase de lancement est assurée par les modules monocanaux les plus éloignés du module central porteur d'un satellite ou d'une navette spatiale ; ces modules sont prévus être munis de zones « caissons » pressurisés alimentés par les canaux internes transversaux décrits, ils permettent le décollage horizontal progressif de l'ensemble constitué ; ils sont aussi conçus avec un dispositif de pilotage autonome qui permet leur retour en zone d'atterrissage pour permettre leur réutilisation ;
   les dispositifs techniques revendiqués ci-dessus agrémentés de composants spécifiquement développés pour un décollage « unique » fixes et/ou délestables immédiatement après usage ; sont conçus pour être réutilisables.
- b)- puis en trajectoire pilotée, ascensionnelle optimisée, par utilisation de la poussée maximale développée par la combinaison de l'enveloppe « fuselage » externe décrite et revendiquée, de l'entrée frontale canalisante utilisée à pleine section en mode dépressionnaire, des canaux internes motorisés, des motorisations nouvelles allongées revendiquées et adaptées ; le pilotage est assuré par des modules « caissons plats » répartis de manière optimisée sur l'enveloppe « fuselage » externe de l'unité mobile centrale, alimentés par des canaux fluidiques « transversaux » propres.
- les premières étapes d'un tel lancement, s'appuient sur les motorisations atmosphériques telles que décrites ci-dessus, en mode subsonique et en mode supersonique, puis
- en mode stratosphérique, lorsque la quantité de comburant (oxygène) nécessaire engagée par l'entrée frontale, pour assurer la continuité de la propulsion « classique », devient insuffisante (en très haute atmosphère, ou en stratosphère) et que doivent être mis en oeuvre des moyens de propulsion améliorés, par exemple par une injection d'oxygène sous-pression embarqué et d'un propergol adapté plus efficace , puis,
- en mode suborbital, lorsque la résistance frontale qui s'oppose au déplacement des dites unités tend vers zéro, la continuité de la propulsion est relayée par des dispositifs propulsifs spatiaux spécifiques adaptés, connectés au module lancé jusqu'à ce qu'il atteigne sa trajectoire de destination.
- en fin de trajectoire suborbitale, l'unité mobile centrale, encore connectée au module lancé, est réactivée pour engager la phase de ralentissement par l'action de caissons pressurisés spécialement conçus pour ce faire, et les phases de descente et atterrissage de l'ensemble « unité mobile » constitué.

Lesdites unités mobiles, pour cette utilisation, dans les premières phases « atmosphériques » de décollage ne transportent pas de « comburant » spécifique puisqu'elles utilisent l'oxygène de l'air environnant traversé et sont donc allégées d'autant comparativement aux lanceurs suborbitaux ou spatiaux connus. L'efficacité propulsive des dites unités se développe sur la totalité de leur section « arrière » et les prédispose à un usage de type « lanceur » revendiqué.

Le passage du mode supersonique au mode stratosphérique puis à un mode « suborbital » se fait grâce à une injection progressive dans les dispositifs de motorisation primaire, d'air comprimé (lequel peut être embarqué à l'état liquide) ou d'oxygène pur embarqué (en très haute pression, ou à l'état liquide), ou d'un autre comburant spécifique embarqué. Dans ce mode « suborbital », la contrainte fluidique liée à la résistance frontale du milieu environnant tend vers zéro et l'unité mobile exploitée dans ces conditions peut être progressivement assimilée à un vaisseau spatial.

Dans la phase transitoire de passage du mode stratosphérique au mode « suborbital », des propulseurs spécifiques développés pour le domaine « spatial » peut être progressivement mis en action ; leurs tuyères d'éjection gazeuse peuvent être conçues en connections simples voir évidentes avec la terminaison de la seconde partie ou le début de la troisième partie des canaux fluidiques « longitudinaux » revendiqués du module « unité mobile central » lanceur.

Lesdites unités mobiles revendiquées, conçues pour assurer un passage « discret » des modes subsonique à supersonique, puis mode stratosphérique, puis en mode« suborbital », sont dotées de toutes les fonctionnalités de guidage développées par l'usage de canaux secondaires « transversaux » tels que décrits et revendiqués dont les tuyères d'éjection aboutissent le long de l'enveloppe « fuselage » externe et permettent de développer des forces latérales mises à contribution pour développer et suivre une trajectoire imposée.

Lesdites unités mobiles revendiquées, appliquées au domaine spatial, peuvent intégrer un mobile spécifique connu ou à développer, positionné en s'inspirant de l'insertion revendiquée d'un objet Rep B, conçu pour se détacher de l'unité de base, principale, par la mise en oeuvre adaptée de dispositifs de désarrimage ; le dit mobile intégré devient en fin de lancement le « vaisseau spatial » propulsé. Dans ce mode d'exploitation, « spatial », lesdites unités de base, principales seront conçues, en version « multicanaux », pour pouvoir être segmentées en modules indépendants qui puissent être détachés, par étapes programmées, du module central qui incorpore l'objet Rep B conçu comme « module spatial ». Chacun des modules indépendants détachables peut s'inscrire dans une phase complémentaire finale de redirection pilotée sur terre ou en mer, pour une opération de réutilisation ultérieure.

La technicité ci-dessus exposée, permet le développement d'unités mobiles nouvelles, réutilisables, économiques, adaptées à des lancements astronautiques, revendiquées.

Les Unités mobiles conformes aux points techniques exposés ci-dessus, caractérisés pour être des variantes de réalisations, en dérogation des formes et des dispositifs revendiqués d'amélioration des performances aérodynamiques (ou aérauliques) ou hydrodynamiques, qui sont équipées d'accessoires « nécessaires » ou optionnels, à usage permanents ou temporaires, montés fixes ou escamotables (se repliant dans l'enveloppe « fuselage » externe Rep 1, tels que ( voir [Fig.10]) :

voilures, gouvernails et ailerons (exemples schématiques [Fig.10] : Rep A-R et Rep G,
trains de roues ou dispositifs d'appui au sol (exemples schématiques : Rep TR ,
tuyères d'éjection latérale, voir perpendiculaire, à l'enveloppe « fuselage » externe d'une partie du flux « entrant » capté dans l'une ou l'autre des parties du ou des canaux internes, avant ou après motorisations, télécommandées, pour assurer des fonctions de guidage augmenté, de nécessaire, (exemples schématiques : Rep TG1 et Rep TG2 et Rep G,
capteurs venant en saillie et à l'extérieur de l'enveloppe externe (1) (exemples : capteurs d'images (caméras, ...), de température, de vitesses, ...) ; ces capteurs pouvant être placés en toutes positions utiles et judicieuses,
dispositifs motorisés spécifiques, rétractables ou non et incorporés qui permettent l'amorçage d'un mouvement perpendiculaire à l'axe longitudinal principal des dites unités mobiles,
dispositifs de mise en protection provisoire ou permanente, totale ou partielle de l'ensemble des entrées frontales des dites unités mobiles contre des objets portés par le flux entrant ( ex [Fig.09] et 10:Rep FEA) (exemples non limitatifs : dans l'air (oiseaux), dans l'eau (poissons, objets flottants)), actionnés automatiquement sous l'impulsion de détecteurs appropriés ou sous actions appropriées de pilotage. Ces protections sont adaptées suivant les milieux fluides environnants traversés et les risques que représentent les objets à éloigner de la trajectoire à emprunter par lalles dites unités mobiles,
qui intègrent une partie ou la totalité des dispositifs cités ci-dessus ou équivalents, considérés comme étant utiles, et/ou nécessaires pour l'homme de l'art, sont aussi revendiquées.

Les Unités mobiles conformes aux points techniques exposés caractérisées pour être des réalisations extrapolées des dits points techniques principaux exposés (un ou plusieurs) et dont le fonctionnement s'appuie sur une pluralité des objectifs de base recherchés :
de conduction interne, en un ou plusieurs canaux, de la quasi-totalité de la veine fluide frontale s'opposant au déplacement des dites unités
d'entrainement du flux frontal capté par une motorisation appropriée des dits `canaux', laquelle est éventuellement asservie à des capteurs de pressions différentielles disposés à l'entrée des dits canaux
de trainée périphérique externe « minimale » comme revendiqué par la constitution fonctionnelle d'une enveloppe « fuselage externe » de section légèrement conique ou quasi-constante
sont aussi revendiquées.

### Domaines d'applications

La constitution innovante d'unités mobiles à enveloppe « fuselage » externe et canaux internes motorisés, tels que décrits précédemment amène à des conceptions innovantes

D'unités mobiles totalement nouvelles propres aux domaines aéronautique, astronautique, maritime, sous-marin, du transport terrestre, des équipements (vêtements) sportifs,

D'unités mobiles « connues » dont la technicité est établie dans tous les domaines d'applications pratiques, adaptées ou réadaptées sur les bases des principes de constructions proposés et décrits, dans l'aéronautique, le secteur maritime, les moyens de transports terrestres, ... (Liste non limitative). Les dispositions constructives décrites ci-dessus en segmentation de l'entrée « canal » sont applicables :

Aux mobiles connus déjà listés, adaptés, modifiés pour intégrer une enveloppe extérieure, notamment les mobiles en appui sur le sol (automobiles, camions, ...) dont la motricité de conception initiale connue (par exemple par « trains de roues » motorisés) peut être conservée comme telle ou adaptée à une distribution d'énergie vers les accélérateurs de flux Rep AF, décrits ci-dessus, eux-mêmes pilotés (ou non) par un asservissement conduit sur la base d'informations de « dépression-pression » frontale « avant » fournies par des capteurs de type Rep CPA décrits ou fonctionnellement équivalents.

A des équipements portés ou disposés en peaux comme des « survêtements »

A tous les modèles réduits connus, y compris les jouets, adaptés par une mise en oeuvre des conceptions innovantes décrites.

## Revendications

1. Unité mobile, autre qu'un dirigeable, motorisée, consistant en cinq sous-ensembles indissociables A, B, C, D , E :
A) une enveloppe extérieure « fuselage », de section plus grande à l'avant qu'à l'arrière, ou constante, préférentiellement aplatie sur sa face ventrale, de longueur finie supérieure à la plus grande dimension transversale nette de ladite enveloppe extérieure « fuselage »,
B) une pluralité de canaux longitudinaux internes motorisés, les dits canaux internes motorisés traversent longitudinalement ladite unité mobile, et sont incorporés dans le volume de l'enveloppe extérieure « fuselage », de façon à assurer la circulation interne de la quasi- « totalité du fluide » s'opposant au déplacement frontal de ladite unité mobile, lesdits canaux longitudinaux internes motorisés étant équipés chacun d'un ou plusieurs dispositifs propulsifs de motorisation interne centrale, complétés d'un équipement amont et d'un équipement aval, asservis de façon à ce que les vitesses et pressions du flux global sortant desdits canaux longitudinaux internes motorisés soient supérieures aux vitesses et pressions du flux global entrant, lesdits canaux longitudinaux motorisés présentant chacun, successivement, dans le sens de la circulation interne du fluide transféré,
C)
un ensemble de portions d'entrée de sections convergentes (3, 2, 21), un ensemble de portions intermédiaires de section constante (21, 2, 22), et
un ensemble de portions finales de sortie, de sections divergentes (22, 2, 4),
une portion d'entrée de section convergente dans au moins un canal interne motorisé (3, 2, 21), comprenant :
- des dispositifs « ventilo-compresseurs » en applications aérauliques ou
- des dispositifs d'accélérateur de flux (AF1 et AF4) en applications hydrauliques,
- des capteurs de pression différentielle entre flux entrant et flux environnant externe (CPA à ladite enveloppe, montés sur un bord d'attaque frontal séparatif entre flux environnant externe à ladite enveloppe et flux admis dans chacun des dits canaux internes motorisés,
une portion intermédiaire de section constante comprenant :
- un ou plusieurs dispositifs de motorisation, propulsifs, agissant directement sur une veine fluide canalisée par chaque canal longitudinal interne motorisé et positionnés le long de la portion intermédiaire de section constante,
- une enveloppe secondaire longitudinale canalisante optionnelle (GTS), qui conduit en interne, autour de chaque veine fluidique motorisée, un flux concentrique, amortissant, s'étendant au minimum sur toute la longueur de la portion intermédiaire de section constante, une portion finale de sortie de sections divergentes située en aval de chaque canal longitudinal interne motorisé de l'unité mobile, s'étendant de la sortie des portions intermédiaires jusqu'à l'extrémité arrière de l'enveloppe « fuselage » « externe », et comprenant
- des dispositifs capteurs d'énergie tels que turbines et générateurs électriques associés,
- des diffuseurs, et
- des parallélisateurs du/ des flux sortant de la /des portions intermédiaires motorisées et des flux canalisés par les enveloppes secondaires canalisantes (GTS),
D) une pluralité de canaux fluidiques internes dits « transversaux », non motorisés, connectés, à la demande d'un moyen de pilotage, en « amont », aux canaux internes motorisés, à hauteur de la sortie de leurs motorisations , ou après les dispositifs capteurs d'énergie, débouchant en « aval » sur des zones surfaciques spécifiques de l'enveloppe « fuselage » externe pour y assurer une distribution contrôlée de flux captés à partir des canaux « longitudinaux » internes motorisés et y développer des forces de poussée maîtrisées, dites « latérales » ; ces canaux fluidiques "transversaux" étant reliés à l'enveloppe de manière totalement internalisée dans l'enveloppe « fuselage », leur extrémité « amont » et leurs extrémités « aval », ont, sur leurs parcours, des sections variables liées au débit des flux qu'ils doivent conduire,
E) un ensemble de volumes internes « disponibles » entre l'enveloppe « fuselage » externe et la globalité des volumes internes occupés par les dits canaux fluidiques internes longitudinaux motorisés et transversaux non-motorisés, l'ensemble des volumes internes comprenant des équipements fonctionnels, structuré en sous-ensembles techniques d'exploitation de l'unité mobile.

2. Unité mobile selon la revendication 1, **caractérisée en ce que** ledit ou lesdits dispositifs de motorisation, adaptés à chaque canal longitudinal interne motorisé, sont allongés (M1, M2, M3) ou à moteurs intégrés (MH et M), et sont placés directement dans les canaux longitudinaux internes motorisés ou dans des compartiments disposés latéralement à ceux-ci, ledit dispositif de motorisation comprenant pour chaque canal longitudinal interne motorisé :
une turbine « avant », une pompe, ou une combinaison de ces équipements pour créer, dans un fluide environnant traversé « incompressible », un effet d' « accélérateurs » de flux (Rep « AF») un « accélérateur-compresseur » agissant sur une veine fluide frontale entrant à l'avant de chaque canal longitudinal interne motorisé, (RC1, RC2, RC3), pour un fluide environnant « compressible », puis,
un moteur « accélérateur » agissant sur la veine fluide en transit dans la section intermédiaire (M1, M2, M3),
une « Turbine- diffuseur-détendeur-et parallélisateurs de flux » (T, P1, P2) agissant sur la veine fluide en voie d'éjection dans la section de sortie divergente, (4).

3. Unité mobile selon les revendications 1 et 2, **caractérisée en ce que**, pour des applications aérauliques, telles qu'aéronautiques lesdits canaux longitudinaux internes motorisés comprennent un ou plusieurs dispositifs de motorisation (M1, M2, M3) « allongés », s'étendant sur la quasi-totalité de la longueur de la portion intermédiaire de ces dits canaux longitudinaux internes motorisés.

4. Unité mobile selon les revendications 1 à 3, **caractérisée en ce que** lesdits canaux longitudinaux internes motorisés, dans la portion de sortie (22-2-4), comprennent une pluralité de dispositifs d'adaptation des flux ayant participé à la motorisation pour optimiser leur efficacité propulsive « arrière » par ralentissement du fluide c'est à dire par « diffuseur » (DF), par parallélisation (P1, P2) de lal des veines fluides en voie d'éjection « arrière » (FS), en minimisant les pertes d'énergie « turbulentes » et thermiques; optionnellement, ces dispositifs de parallélisation, en application à des milieux hydrauliques ou mixtes, peuvent aussi être installés dans les portions d'entrée (3, 2, 21).

5. Unité mobile selon les revendications 1 à 4, **caractérisée en ce que** :
A.) les canaux longitudinaux internes motorisés (C1, C2, C3, C4) sont sensiblement parallèles et peuvent être de longueurs différentes,
B.) la section d'entrée frontale de l'enveloppe « fuselage » externe est égale à la somme des sections frontales d'entrées des canaux longitudinaux internes motorisés intégrés (C1-3, C2-3, C3-3, C4-3) d'une construction « multicanaux » et ladite section de sortie de ladite enveloppe » fuselage » externe est égale à la somme des sections de sortie (C1-4, C2-4, C3-4, C4-4) desdits canaux longitudinaux internes motorisés.
C.) le nombre de canaux longitudinaux dits « entrants » est différent du nombre des canaux longitudinaux dits « sortants » permettant aux flux intermédiaires des dits canaux de se mélanger et être associés,
D.) les canaux longitudinaux internes sont subdivisés soit en canaux secondaires longitudinaux dont les flux correspondants pilotés, sont utilisés pour contribuer à des effets permanents d'isolation thermique et/ ou acoustique et/ou ex : de « double flux », soit en canaux secondaires « transversaux », connectés à la demande, en aval des dites motorisations, qui permettent le développement de forces latérales pilotées sur des surfaces spécifiques de l'enveloppe « fuselage » externe.

6. Unité mobile selon les revendications 1 à 5, **caractérisée en ce qu'**elle présente
un bord d'attaque pour l'entrée du fluide dans chaque canal longitudinal interne motorisé (Rep 2 (A/1- A/2, B/1- B/2)) ou un ensemble de bords d'attaque pour une pluralité de canaux longitudinaux internes motorisés (Rep (2 - A/1- A/2- B/1 - B/2)) ;
chaque bord d'attaque est **caractérisé en ce que** :
- l'angle formé entre le profil de l'enveloppe « fuselage » externe et le profil de la première partie canalisante du ou des canaux fluides longitudinaux internes motorisés est minimum, de 5 degrés (Rep 'A-1/2'),
- l'arête frontale de ce bord d'attaque n'est pas nécessairement perpendiculaire à l'axe longitudinal de l'unité mobile constituée et peut avoir un profil non-linéaire, voir sinusoïdal.

7. Unité mobile selon les revendications 1 à 6, **caractérisée en ce qu'**elle comprend au moins un compartiment ou une pluralité de compartiments (A1, A2, B1, B2, B3, B4, C1, C2, D1, D2, F1, F2, G1, G2) ménagés, architecturés entre ladite enveloppe « fuselage » extérieure (1) et lesdits canaux longitudinaux internes motorisés (2) et lesdits canaux fluidiques « transversaux » pour former :
- une cellule de pilotage ou de contrôle de trajectoire et de supervision du fonctionnement général,
- des compartiments spécifiques techniques,
- l'ensemble de ces compartiments sont isolés aux plans thermique, phonique et vibratoire des motorisations et canaux fluidiques internes dans le respect des normes applicables.

8. Unité mobile selon les revendications 1 à 7, **caractérisé en ce qu'**elle comprend une « enveloppe » gaine externe, (1) dans laquelle est fixé un ou plusieurs objets incorporés (B), lesquels peuvent être motorisés ; ladite enveloppe gaine externe, comprenant :
- une surface extérieure définissant le contour externe « fuselage » (1) de la dite unité mobile, et
- une surface intérieure de ladite gaine définissant, avec les surfaces externes du ou des dits objets connus incorporés (B) lesdites portions d'entrée, intermédiaires et de sortie d'au moins un canal longitudinal interne motorisé ;
la motorisation propre à l'objet incorporé (B) participe à la mise en accélération et circulation du flux fluide depuis l'avant du canal interne formé jusqu'à l'arrière de celui-ci par l'alimentation énergétique de dispositifs (AF).

9. Unité mobile selon les revendications 1 à 8, **caractérisé en ce qu'** au moins un canal longitudinal interne motorisé comprend une pluralité de sections d'entrée (3) successives, formant des sous-canaux, disposées de façon imbriquée et étagée depuis l'extrémité la plus en amont de l'objet Rep « B » incorporé (B), vers à la fois ladite enveloppe extérieure (1) et l'aval de l'unité mobile qui peut aller au-delà de la terminaison de l'objet incorporé (4).

10. Unité mobile selon les revendications 1 à 9, **caractérisée en ce qu'**elle incorpore, dans une partie ou la totalité des canaux longitudinaux internes motorisés, des motorisations « longues », non compactes, insonorisées, qui entraînent directement ou indirectement « des turbines » qui permettent le développement de ressources électriques nécessaires
- à l'entraînement indirect des « ventilo-compresseurs avant »,
- à l'entraînement des motorisations totalement « électriques » d'une partie des canaux longitudinaux internes,
- à la mise en oeuvre des autres fonctions internes nécessaires telles que dispositifs de pilotage et autres fonctions techniques, ....

11. Unité mobile selon les revendications 1 à 10, **caractérisée en ce que** la surface de l'enveloppe « fuselage » externe, comprend, par zones spécifiques, des caissons plats :
- totalement intégrés dans le volume contenu dans l'enveloppe « fuselage » externe,
- pressurisés et alimentés, à la demande, soit par déviation d'une partie des flux sortants, captés après motorisation, à haute pression, conduits dans les canaux fluidiques « transversaux », soit par des surpresseurs d'air,
- munis d'une multitude de points d'échappement fluide, régulièrement répartis, agissant chacun comme une mini ou micro-tuyère, qui développent localement et globalement des forces latérales de poussée qui s'appliquent à l'ensemble de ladite unité mobile constituée.

12. Unité mobile selon les revendications 1 à 11, **caractérisée en ce qu'**elle est « sans trains de roues », pour des décollages et atterrissages en mode vertical ou en mode tangentiel « glissé », piloté, sur coussin fluidique « pressurisé ».

13. Unité mobile selon les revendications 1 à 12, **caractérisé en ce que**
- des zones surfaciques planes de l'enveloppe « fuselage », équipées de caissons plats pressurisés décrits, alimentés par les canaux fluidiques « transversaux » décrits, dont les flux pilotés à la demande, développent, sur l'ensemble de l'unité constituée, des forces de poussée latérales, directionnelles, réparties, dont les combinaisons permettent d'obtenir efficacement des effets de
- décollage vertical, alors que les flux produits par un ou plusieurs des canaux longitudinaux internes sont totalement dirigés vers les canaux fluidiques transversaux internes
- de guidage permanent, par activation pilotée de caissons plats pressurisés spécifiques,
- de transfert progressif de puissance propulsive disponible en mouvement horizontal par activation pilotée des canaux longitudinaux internes motorisés non sollicités en décollage, ou par diminution progressive des flux mis en oeuvre dans les canaux fluidiques transversaux internes et par redirection pilotée de ces flux vers la sortie du/des canaux longitudinaux internes motorisés qui les produisent,
- d'ajustement permanent ou impulsionnel des trajectoires parcourues, par activation pilotée de l'ensemble du dispositif mis en oeuvre pour le décollage vertical et pour le guidage omnidirectionnel ;
les unités mobiles ainsi constituées, revendiquées comme innovantes,
ont des capacités en termes de manoeuvrabilité omnidirectionnelles applicables dans de nombreux domaines.

14. Unité mobile selon les revendications 1 à 13, caractérisée, en applications spécifiques aéronautiques, en ce qu'elle passe d'un mode subsonique, à un mode supersonique, à un mode stratosphérique puis à un éventuel mode « suborbital »,
- par une injection progressive, notamment à partir du mode stratosphérique, dans les dispositifs propulsifs, d'oxygène pur embarqué, ou d'un autre comburant que l'oxygène,
- alors qu'en modes subsonique et supersonique le comburant, non embarqué puisé dans le flux environnant traversé est l'oxygène de l'air, de sorte que des unités mobiles du type « lanceur » suborbital ou spatial s'affranchissent de l'emport du comburant dans les phases de lancement les plus consommatrices d'oxygène.

15. Unité mobile selon les revendications 1 à 14, caractérisée, en réalisations spécifiques, en ce qu'elle est structurée comme une association d'unités mobiles pilotées centralement, rendues autonomes par étapes, constituée de
- une unité mobile centrale, à usage ultime, réutilisable ou non
- des unités mobiles associées latéralement à l'unité mobile centrale, indépendantes, montées symétriquement par rapport à l'axe principal de l'unité mobile centrale, détachables et récupérables, pour former une unité mobile de lancement
- d'un module à usage unique, détachable de l'unité mobile centrale, qui peut être un satellite, une navette spatiale, alors que ladite unité mobile centrale peut être récupérée, ou
- d'une cellule de transport en très haute altitude telle que « suborbitale », intégrée à la dite unité mobile centrale, prévue pour un retour rapide sur terre ;
ces unités mobiles assemblées en un seul « lanceur », revendiquées, sont à décollage et atterrissage verticaux en mode « glissé » sur coussin fluidique pressurisé.

16. Unité mobile selon les revendications 1 à 15, **caractérisée en ce qu'**elle comprend en outre, des équipements rétractables, optionnels, contenus dans l'enveloppe « fuselage » externe, tels que :
- voilures, gouvernails et ailerons (A-R) et G),
- dispositifs d'appui temporaire au sol,
- capteurs venant en saillie et à l'extérieur de l'enveloppe externe,
- dispositifs motorisés spécifiques, rétractables qui permettent l'amorçage d'un mouvement perpendiculaire à l'axe longitudinal principal de ladite unité mobile ;
- dispositif de mise en protection provisoire ou permanente, totale ou partielle de l'ensemble des entrées frontales de ladite unité mobile contre des objets portés par le flux entrant (FE1) actionnés automatiquement sous l'impulsion d'un détecteur approprié.

## Patentansprüche

1. Motorisierte mobile Einheit, ausgenommen Luftschiffe, bestehend aus fünf untrennbaren Unterbaugruppen A, B, C, D, E:
A) eine äußere "Rumpfhülle" mit einem größeren Querschnitt vorn als hinten oder mit gleichbleibendem Querschnitt, vorzugsweise abgeflacht auf der Bauchseite, mit einer endlichen Länge, die größer ist als die größte Nettoquerabmessung der äußeren "Rumpfhülle",
B) Eine Vielzahl von inneren motorisierten Längskanälen, wobei die genannten inneren motorisierten Kanäle die genannte bewegliche Einheit in Längsrichtung durchqueren und in das Volumen der äußeren Hülle "Rumpf" eingebettet sind, um die interne Zirkulation von nahezu "dem gesamten Fluid" zu gewährleisten, das der Frontbewegung der genannten beweglichen Einheit entgegenwirkt, wobei die genannten inneren motorisierten Längskanäle jeweils mit einer oder mehreren zentralen inneren Antriebsvorrichtungen ausgestattet sind, ergänzt durch eine vorgeschaltete und eine nachgeschaltete Ausrüstung, die so gesteuert werden, dass die Geschwindigkeiten und Drücke des Gesamtstroms, der aus den genannten inneren Längskanälen austritt, höher als die Geschwindigkeiten sind Drücke des einströmenden Gesamtstroms, wobei die motorisierten Längskanäle jeweils nacheinander in Richtung der inneren Strömung des übertragenen Fluids aufweisen:
C) eine Anordnung von Eingangsabschnitten konvergierender Abschnitte (3, 2, 21), eine Anordnung von Zwischenabschnitten konstanten Abschnitts (21, 2, 22),
und
eine Reihe von Auslassendabschnitten mit divergierenden Abschnitten (22, 2, 4), Einlassabschnitt mit konvergierendem Querschnitt in mindestens einem motorisierten Innenkanal (3, 2, 21), der Folgendes umfasst:
- "Gebläse-Kompressoren" in der Luft oder
- "Beschleuniger" (AF1 und AF4) in hydraulischen Anwendungen,
- Differenzdrucksensoren zwischen dem einströmenden Strom und dem externen Umgebungsstrom (CPA) an der Hülle, die an einer Vorderkante angebracht sind, die zwischen dem externen Umgebungsstrom an der Hülle und dem in jeden der genannten motorisierten internen Kanäle einströmenden Strom trennt,
Ein Zwischenabschnitt mit konstantem Querschnitt, bestehend aus:
- eine oder mehrere Antriebsvorrichtungen, die unmittelbar auf eine Fluidader einwirken, die durch jeden inneren Längskanal kanalisiert ist und entlang des mittleren Abschnitts mit konstantem Querschnitt angeordnet ist,
- eine optionale, in Längsrichtung kanalisierende Sekundärhülle (GTS), die innen um jede motorisierte Fluidader einen konzentrischen, dämpfenden Fluss führt, der sich mindestens über die gesamte Länge des Zwischenteils mit konstantem Querschnitt erstreckt,
einem Endabschnitt des Auslasses divergierender Abschnitte, der sich stromabwärts von jedem inneren motorisierten Längskanal der beweglichen Einheit vom Auslass der Zwischenabschnitte bis zum hinteren Ende des äußeren Rumpfes erstreckt und
- Energiesensoreinrichtungen wie Turbinen und damit verbundene elektrische Generatoren, - Diffusoren und
- der Parallelisatoren des/der aus dem/den motorisierten Zwischenteil/en austretenden Stroms/Ströme und der durch die sekundären Rohrleitungsgehäuse (GTS) geleiteten Stromflüsse;
D) eine Vielzahl innerer, nicht motorisierter, so genannter "transversaler" Fluidkanäle, die auf Anforderung eines Steuerungsmittels "stromaufwärts" mit den motorisierten, inneren Kanälen in Höhe der Ausgänge ihrer Motorisierungen oder nach den Energiesensoreinrichtungen verbunden sind und "stromabwärts" in bestimmte Oberflächenbereiche des äußeren Rumpfes münden, um dort eine kontrollierte Verteilung der von den motorisierten inneren "longitudinalen" Kanälen aufgefangenen Ströme zu gewährleisten und dort kontrollierte, so genannte "seitliche" Schubkräfte zu entwickeln; diese "transversalen" Fluidkanäle sind mit dem Gehäuse vollständig internalisiert in dem Gehäuse verbunden "Rumpf' das "stromaufwärts" und das "stromabwärts" gelegene Ende des Rumpfs haben auf ihren Laufbahnen variable Querschnitte, die mit dem Durchsatz der von ihnen zu führenden Ströme zusammenhängen;
E) eine Reihe "verfügbarer" interner Volumina zwischen dem äußeren Rumpfmantel und den gesamten internen Volumina, die von den genannten inneren, nicht motorisierten längsgerichteten und transversalen Fluidkanälen belegt werden, wobei die gesamten internen Volumina funktionelle Ausrüstung umfassen und in betriebstechnische Untergruppen der mobilen Einheit strukturiert sind.

2. Fahrbare Einheit nach Anspruch 1, **dadurch gekennzeichnet, dass** die mindestens eine Antriebsvorrichtung, die an jeden inneren motorisierten Längskanal angepasst ist, länglich (MI, M2, M3) oder mit integrierten Motoren (MH und M) ist bzw. sind und direkt in den motorisierten Längskanälen oder in seitlich zu diesen angeordneten Abteilungen angeordnet ist bzw. sind, wobei die Antriebsvorrichtung für jeden inneren motorisierten Längskanal :eine "vordere" Turbine, eine Pumpe oder eine Kombination dieser Vorrichtungen aufweist, um in einem umgebenden, durchströmten, "nicht komprimierbaren" Fluid einen Effekt eines "Beschleunigers" des Flusses (Rep "AF") zu erzeugen an einer vorderen, vor jedem inneren, motorisierten Längskanal eintretenden Fluidader (RC1, RC2, RC3) für ein "kompressibles" Umgebungsfluid und dann an einem auf die im Zwischenabschnitt (ML, M2, M3) durchströmende Fluidader wirkenden "Beschleunigermotor", an einer auf die im Ausströmabschnitt ausströmende Fluidader wirkenden "Diffusor-Expansions-Turbine und Strömungsparallelisierer" (T, PI, P2), an der im Ausströmabschnitt ausströmenden Fluidader (4).

3. Mobile Einheit nach den Ansprüchen 1 und 2, **dadurch gekennzeichnet, dass** die inneren motorisierten Längskanäle für Luftfahrtanwendungen, wie Luftfahrtanwendungen, eine oder mehrere "langgestreckte" Motorisierungseinrichtungen (ML, M2, M3) umfassen, die sich über nahezu die gesamte Länge des Zwischenabschnitts dieser inneren motorisierten Längskanäle erstrecken.

4. Bewegliche Einheit nach den Ansprüchen 1 bis 3, **dadurch gekennzeichnet, dass** die inneren motorisierten Längskanäle im Auslassabschnitt (22-2-4) eine Vielzahl von an der Motorisierung beteiligten Flussanpassungsvorrichtungen umfassen, um ihre "hintere" Antriebsleistung durch Verlangsamung des Fluids zu optimieren, d.h. durch "Diffusor" (DF), durch Parallelisierung (PI, P2) des/der "hinteren" Ausstoßströmungstrakt(e), durch Minimierung der "turbulenten" und thermischen Energieverluste; wahlweise diese Parallelisierungsvorrichtungen, durch Anwendung In den Eingangsbereichen (3, 2, 21) können auch hydraulische oder gemischte Medien eingebaut werden.

5. Mobile Einheit nach den Ansprüchen 1 bis 4, **dadurch gekennzeichnet, dass**
A) Die inneren motorisierten Längskanäle (CI, C2, C3, C4) sind im Wesentlichen parallel und können unterschiedlich lang sein
B) Der vordere Eingangsabschnitt des äußeren Rumpfgehäuses ist gleich der Summe der vorderen Eingangsabschnitte der integrierten inneren motorisierten Längskanäle (C 1-3, C2-3, C3-3, C4-3) einer "Mehrkanalkonstruktion" und der Ausgangsabschnitt des äußeren Rumpfgehäuses ist gleich der Summe der Ausgangsabschnitte (C 1-4, C2-4, C3-4, C4-4) der inneren motorisierten Längskanäle.
C) die Zahl der so genannten "eingehenden" Längskanäle von der Zahl der so genannten "ausgehenden" Längskanäle abweicht, die es ermöglichen, dass die Zwischenströme der so genannten Kanäle miteinander vermischt und miteinander verbunden werden;
D) Die inneren Längskanäle sind entweder in längliche Sekundärkanäle unterteilt, deren entsprechende gesteuerte Ströme verwendet werden, um zu dauerhaften thermischen und/oder akustischen Dämmeffekten beizutragen und/oder z.B. "Doppelströme" zu erzeugen, oder in "transversale" Sekundärkanäle, die nach den genannten Motorisierungen bedarfsabhängig verbunden sind und die Entwicklung von gesteuerten Seitenkräften auf bestimmten Flächen des äußeren Rumpfes ermöglichen.

6. Fahrbare Einheit nach den Ansprüchen 1 bis 5, **dadurch gekennzeichnet, dass** sie eine Vorderkante für den Eintritt des Fluids in jeden inneren motorisierten Längskanal (Rep 2 (A/ 1-A/2, B/I- B/2)) oder einen Satz von Vorderkanten für eine Vielzahl von inneren motorisierten Längskanälen (Rep (2 - AII- A/2- B/I - B/2)) aufweist;
Jede Vorderkante ist **gekennzeichnet durch**:
- der Winkel zwischen dem Profil des äußeren Rumpfmantels und dem Profil des ersten kanalisierenden Teils des oder der inneren motorisierten Längsfluidkanäle mindestens 5° beträgt (Rep 'A-1/2'),
- Die Vorderkante dieser Vorderkante ist nicht unbedingt senkrecht zur Längsachse der gefertigten beweglichen Einheit und kann ein nichtlineares, ja sinusförmiges Profil aufweisen.

7. Mobile Einheit nach den Ansprüchen 1 bis 6, **dadurch gekennzeichnet, dass** sie mindestens eine Kammer oder eine Vielzahl von Kammern (AI, A2, BI, B2, B3, B4, CI, C2, DI, D2, F1, F2, G1, G2) aufweist, die zwischen der äußeren "Rumpfhülle" (I) und den inneren motorisierten Längskanälen (2) und den "transversalen" Fluidkanälen ausgebildet sind, um:
- eine Flugsteuerungs- oder Flugwegkontrollstelle und die Überwachung des allgemeinen Betriebs,
- spezielle technische Kompartimente,
- Alle diese Abteile sind unter Einhaltung der geltenden Normen thermisch, akustisch und schwingungsmäßig von internen Motoren und Fluidkanälen isoliert.

8. Mobile Einheit nach den Ansprüchen 1 bis 7, **dadurch gekennzeichnet, dass** sie eine äußere Hülle (1) umfasst, in der ein oder mehrere eingebaute Gegenstände (B) befestigt sind, die motorisiert werden können; wobei die äußere Hülle umfasst:
- eine Außenfläche, die die Außenkontur des Rumpfes (1) der beweglichen Einheit definiert, und
- eine Innenfläche des Mantels, die zusammen mit den Außenflächen des oder der eingebauten bekannten Gegenstände (B) die Eingangs-, Zwischen- und Ausgangs-Abschnitte mindestens eines motorisierten inneren Längskanals definiert; die dem eingebauten Gegenstand (B) eigene Motorisierung ist an der Beschleunigung und Zirkulation des Fluidstroms von der Vorderseite des durch die Energieversorgung von Vorrichtungen (AF) gebildeten inneren Kanals zu dessen Rückseite beteiligt.

9. Mobile Einheit nach den Ansprüchen 1 bis 8, **dadurch gekennzeichnet, dass** mindestens ein motorisierter innerer Längskanal eine Vielzahl von aufeinanderfolgenden, Unterkanäle bildenden Einlassabschnitten (3) umfasst, die in einer geschachtelten und abgestuften Weise vom stromaufwärtigsten Ende des eingebetteten Rep "B"-Objekts (B) zu sowohl der äußeren Hülle (1) als auch der stromabwärtigen Seite der mobilen Einheit angeordnet sind, die über das Ende des eingebetteten Objekts (4) hinausgehen kann.

10. Fahrbare Einheit nach den Ansprüchen I bis 9, **dadurch gekennzeichnet, dass** sie in einem Teil oder in der Gesamtheit der inneren motorisierten Längskanäle "lange, nicht kompakte, schalldichte Antriebe, die direkt oder indirekt Turbinen antreiben", die die Entwicklung der erforderlichen elektrischen Ressourcen ermöglichen, enthält
- den indirekten Antrieb der "Frontventilatoren" »,
- zum Antrieb der vollständig "elektrischen" Antriebe eines Teils der inneren Längskanäle,
- die Durchführung anderer notwendiger interner Funktionen wie Steuerungssysteme und andere technische Funktionen.

11. Fahrbare Einheit nach den Ansprüchen 1 bis 10, **dadurch gekennzeichnet, dass** die Oberfläche des äußeren Rumpfmantels in spezifischen Bereichen flache Kisten aufweist:
- vollständig in das Volumen des äußeren Rumpfes integriert sind,
- unter Druck gesetzt und auf Anforderung entweder durch Umleitung eines Teils der Abgasströme, die nach der Motorisierung unter hohem Druck in die "quer verlaufenden" Fluidkanäle geleitet werden, oder durch Luftverdichter gespeist werden,
- mit einer Vielzahl gleichmäßig verteilter, fluider Auspuffstellen versehen sind, die jeweils als Mini- oder Mikrodüse fungieren und die örtlich und global seitliche Schubkräfte entwickeln, die auf die gesamte aus ihr bestehende bewegliche Einheit anwendbar sind

12. Fahrbare Einheit nach den Ansprüchen 1 bis 11, **dadurch gekennzeichnet, dass** sie "radzugfrei" für Starts und Landungen im vertikalen Modus oder im tangentialen Modus "Gleitend", gesteuert, auf einem Fluidkissen "unter Druck" ist.

13. Mobile Einheit nach den Ansprüchen 1 bis 12, **dadurch gekennzeichnet, dass**
- flache Bereiche des Rumpfgehäuses, die mit den beschriebenen, durch die beschriebenen "transversalen" Fluidkanäle gespeisten Druckgefäßen ausgestattet sind, deren auf Anforderung gesteuerte Ströme über die gesamte Einheit verteilt seitliche Druckkräfte erzeugen, deren Kombination eine wirksame Wirkung von
- vertikaler Start, wobei die von einem oder mehreren der inneren Längskanäle erzeugten Ströme vollständig auf die inneren querverlaufenden Fluidkanäle gerichtet sind
- durch gesteuerte Aktivierung bestimmter Flachdruckkästen,
- allmähliche Übertragung der in horizontaler Bewegung verfügbaren Antriebsleistung durch gesteuerte Aktivierung der inneren motorisierten Längskanäle, die beim Start nicht beansprucht werden, oder durch allmähliche Verringerung der in den inneren querverlaufenden Fluidkanälen eingesetzten Ströme und durch gesteuerte Umleitung dieser Ströme zum Ausgang des/der inneren motorisierten Längskanäle, die sie erzeugen,
- zur dauerhaften oder impulsweisen Anpassung der Flugbahnen durch gesteuerte Aktivierung der gesamten Vorrichtung für den vertikalen Start und die Rundstreckenführung; die so gebildeten mobilen Einheiten, die als innovativ bezeichnet werden, verfügen über Fähigkeiten in Bezug auf die Rundstreckenmanövrierbarkeit, die in vielen Bereichen anwendbar sind.

14. Mobile Einheit nach den Ansprüchen 1 bis 13, **dadurch gekennzeichnet, dass** sie von einem subsonischen Modus in einen Überschallmodus, in einen stratosphärischen Modus und dann in einen eventuellen "suborbitalen" Modus übergeht,
- durch schrittweise Einspritzung, insbesondere aus der Stratosphäre, reinen Sauerstoffs oder eines anderen Oxidationsmittels als Sauerstoff in die Antriebssysteme,
- während im Unterschall- und Überschallmodus das Oxidationsmittel, das nicht in das Fahrzeug eingebaut und aus dem durchströmten Umgebungsstrom entnommen wird, der Sauerstoff aus der Luft ist, sodass mobile Einheiten des suborbitalen oder räumlichen "Trägerraketentyps" das Mitführen des Oxidationsmittels in den sauerstoffintensivsten Startphasen vermeiden.

15. Mobileinheit nach den Ansprüchen 1 bis 14, **gekennzeichnet durch** spezifische Ausführungen, **dadurch** gekennzeichnet, dass sie als eine stufenweise verselbstständigte, zentral gesteuerte Mobileinheit-Kombination strukturiert ist, bestehend aus
- eine mobile Zentraleinheit, die letztendlich verwendet werden kann, wiederverwendbar ist oder nicht
- seitlich der mobilen Zentraleinheit zugeordnete, unabhängige, symmetrisch zur Hauptachse der mobilen Zentraleinheit angebrachte bewegliche Einheiten, die abnehmbar und rückstellbar sind, um eine bewegliche Starteinheit zu bilden
- einem von der mobilen Zentraleinheit abnehmbaren Einwegmodul, bei dem es sich um einen Satelliten oder ein Raumschiff handeln kann, wobei die mobile Zentraleinheit abgeholt werden kann, oder
- einer Transportzelle in sehr hoher Höhe wie "suborbital", die in die so genannte mobile Zentraleinheit integriert ist und für eine schnelle Rückkehr an Land bestimmt ist
- diese mobilen Einheiten, die in einer "einzigen Trägerrakete" zusammengebaut sind, nach Patentanspruch vertikal starten und landen, im "Gleitend"-Modus auf einem Fluiddruckkissen.

16. Mobile Einheit nach einem der Ansprüche 1 bis 15, **dadurch gekennzeichnet, dass** sie ferner umfasst:
- optionale einziehbare Ausrüstung, die in der äußeren Hülle des Rumpfes enthalten ist, wie - Segel, Ruder und Flossen (A-R) und G),
- Einrichtungen zur zeitweiligen Abstützung am Boden,
- Sensoren, die aus der Außenhülle herausragen und diese verlassen,
- spezifische, einziehbare motorisierte Einrichtungen, die eine Bewegung senkrecht zur Hauptlängsachse der beweglichen Einheit auslösen ·
- Vorrichtungen zum vorübergehenden oder dauerhaften vollständigen oder teilweisen Schutz sämtlicher Stirneingänge der beweglichen Einheit gegen einströmende Objekte (FE1), die durch geeignete Sensoren automatisch betätigt werden.

## Claims

1. Mobile unit, other than an airship, powered, consisting of five inseparable sub-assemblies A, B, C, D E:
A) an outer "fuselage" envelope, of larger section at the front than at the rear, or constant, preferably flattened on its ventral face, of finite length greater than the largest net transverse dimension of said outer "fuselage" envelope,
B) plurality of motorised internal longitudinal channels, said motorised internal channels passing longitudinally through said mobile unit, and are incorporated in the volume of the outer "fuselage" envelope, so as to ensure the internal circulation of virtually "all of the fluid" opposing the frontal movement of said mobile unit, said motorised internal longitudinal channels each being equipped with one or more central internal motorisation propulsion devices, completed with upstream equipment and downstream equipment, servo-controlled so that the speeds and pressures of the overall flow leaving said internal longitudinal flow channels are greater than the speeds and pressures of the flow overall incoming, said motorised longitudinal channels each having, successively, in the direction of the internal circulation of the transferred fluid:
C) set of inlet portions of convergent sections (3, 2, 21), a set of intermediate portions of constant section (21, 2, 22),
and
a set of final outlet portions, of divergent sections (22, 2, 4),
an inlet portion of convergent section in at least one motorised internal channel (3, 2, 21), comprising:
- 'fan-compressor' devices in aeraulic applications, or
- flow 'accelerator' devices (AF1 and AF4) for hydraulic applications,
- differential pressure sensors between incoming flow and external surrounding flow (CPA to said envelope, mounted on a front leading edge separating between the external surrounding flow to said envelope and flow admitted into each of said motorised internal channels,
an intermediate portion of constant section comprising:
one or more propulsion motorisation devices acting directly on a fluid stream channelled by each motorised internal longitudinal channel and positioned along the intermediate portion of constant section,
an optional channelling longitudinal secondary envelope (GTS), which internally conducts, around each motorised fluid stream, a concentric, damping flow, extending at least over the entire length of the intermediate portion of constant section,
final outlet portion of divergent sections located downstream of each motorised internal longitudinal channel of the mobile unit, extending from the outlet of the intermediate portions to the rear end of the "external" "fuselage" envelope, and comprising
- energy sensor devices such as turbines and associated electric generators, - diffusers, and
- parallelizers of the flux leaving the motorised intermediate portion(s) and of the fluxes channelled by the channelling secondary envelopes (GTS);
D) a plurality of internal fluid channels called "transverse" non-motorised channels, connected, at the request of a control means, "upstream" to the internal motorised channels, at the height of the outlet of their actuators, or after the energy sensor devices, opening "downstream" onto specific surface areas of the external "fuselage" envelope to ensure there a controlled distribution of flows picked up from the internal motorised "longitudinal" channels and to develop therein controlled thrust forces, called "lateral"; these "transverse" fluid channels being connected to the envelope in a manner totally internalised in the "fuselage" envelope their "upstream" end and their "downstream" ends have, on their paths, variable sections related to the flow rate of the flows that they must conduct;
E) set of "available" internal volumes between the external "fuselage" envelope and the overall internal volumes occupied by said motorised longitudinal and non-motorised transverse internal fluid channels, the set of internal volumes comprising functional equipment, structured into technical operating subassemblies of the mobile unit.

2. Mobile unit according to claim 1, **characterised in that** said motorisation device or devices, adapted to each motorised internal longitudinal channel, are elongated (MI, M2, M3) or with integrated motors (MH and M), and are placed directly in the motorised longitudinal channels or in compartments arranged laterally thereto, said motorisation device comprising for each motorised internal longitudinal channel :a "front" turbine, a pump, or a combination of these pieces of equipment in order to create, in a traversed "incompressible" surrounding fluid, a "flow accelerator" effect (Rep "AF") an "accelerator-compressor" acting on front fluid stream entering at the front of each motorised internal longitudinal channel, (RC 1, RC 2, RC 3), for a "compressible" surrounding fluid, then an "accelerator" motor acting on the fluid stream in transit in the intermediate section (MI, M 2, M 3), a "turbine-diffuser-expander-and flow parallelizers" (T, PI, P 2) acting on the fluid stream being ejected in the divergent outlet section, (4).

3. Mobile unit according to Claims 1 and 2, **characterised in that**, for aeraulic applications, such as aeronautics, the said motorised internal longitudinal channels comprise one or more "elongated" motorisation devices (MI, M2, M3) extending over almost the entire length of the intermediate portion of the said motorised internal longitudinal channels.

4. Mobile unit according to Claims 1 to 3, **characterised in that** the said motorised internal longitudinal channels, in the outlet portion (22-2-4), comprise a plurality of flow adaptation devices which have participated in the motorisation in order to optimise their "rear" propulsive efficiency by slowing down the fluid, that is to say by "diffuser" (DF), by parallelisation (PI, P2) of the fluid stream(s) in the "rear" ejection path (FS), while minimising the "turbulent" and thermal energy losses; optionally, these parallelisation devices, in application to media mixed or Iic, can also be installed in the inlet portions (3, 2, 21).

5. Mobile unit according to claims 1 to 4, **characterised in that**:
A) the motorised internal longitudinal channels (C1, C2, C3, C4) are substantially parallel and may be of different lengths
B) the front inlet section of the external "fuselage" envelope is equal to the sum of the front inlet sections of the integrated motorised internal longitudinal channels (C 1-3, C 2-3, C 3-3, C 4-3) of a "multi-channel" construction and said external "fuselage" envelope outlet section is equal to the sum of the outlet sections (C 1-4, C 2-4, C 3-4, C 4-4) of said motorised internal longitudinal channels.
C) the number of "incoming" longitudinal channels is different from the number of "outgoing" longitudinal channels allowing the intermediate flows of said channels to mix and be associated,
D) the internal longitudinal channels are subdivided either into longitudinal secondary channels whose corresponding controlled flows are used to contribute to permanent thermal and/or acoustic insulation and/or ex: "double flow" effects, or into "transverse" secondary channels, connected to demand, downstream of said actuators, which allow the development of controlled lateral forces on specific surfaces of the external "fuselage" envelope.

6. Mobile unit according to Claims 1 to 5, **characterised in that** it has a leading edge for the entry of the fluid into each motorised internal longitudinal channel (Rep 2 (A/ 1-A/2, B/I- B/2)) or a set of leading edges for a plurality of motorised internal longitudinal channels (Rep (2 - AII-A/2- B/I - B/2)); each leading edge shall be **characterised in that**
- the angle formed between the profile of the outer fuselage casing and the profile of the first channelling part of the motorised inner longitudinal fluid channel(s) is a minimum of 5 degrees (Rep 'A-1/2'),
the front edge of this leading edge is not necessarily perpendicular to the longitudinal axis of the formed mobile unit and may have a non-linear, or even sinusoidal, profile.

7. Mobile unit according to claims 1 to 6, **characterised in that** it comprises at least one compartment or a plurality of compartments (AI, A2, BI, B2, B3, B4, CI, C2, DI, D2, F1, F2, G1, G2) arranged, structured between said outer "fuselage" envelope (I) and said motorised internal longitudinal channels (2) and said "transverse" fluidic channels to form:
- a flight path control and general operation supervision cell,
- specific technical compartments,
- all these compartments are insulated from the thermal, sound and vibration planes of the internal engines and fluidic channels in compliance with the applicable standards.

8. Mobile unit according to Claims 1 to 7, **characterised in that** it comprises an outer sheath 'jacket' (1) in which one or more incorporated objects (B), which may be motorised, are fixed; the said outer sheath jacket comprising:
an outer surface defining the outer contour "fuselage" (1) of said mobile unit, and
an inner surface of said sheath defining, with the outer surfaces of said incorporated known object(s) (B) said inlet, intermediate and outlet
portions of at least one motorised internal longitudinal channel; the
motorisation specific to the incorporated object (B) participates in the acceleration and circulation of the fluid flow from the front of the internal channel formed to the rear thereof by the power supply of devices (AF).

9. Mobile unit according to Claims 1 to 8, **characterised in that** at least one motorised internal longitudinal channel comprises a plurality of successive inlet sections (3), forming sub-channels, arranged in a nested and stepped manner from the most upstream end of the incorporated Rep 'B' object (B), towards both the said external envelope (1) and the downstream end of the mobile unit which may go beyond the termination of the incorporated object (4).

10. Mobile unit according to Claims I to 9, **characterised in that** it incorporates, in part or all of the motorised internal longitudinal channels, "long, non-compact, soundproofed actuators which drive turbines directly or indirectly" which allow the development of necessary electrical resources
- indirect drive of front fan-compressors »,
- the driving of the totally "electric" actuators of a part of the internal longitudinal channels,
- the implementation of other necessary internal functions such as control devices and other technical functions.

11. Mobile unit according to Claims 1 to 10, **characterised in that** the surface of the outer fuselage envelope comprises, in specific zones, flat boxes:
- fully integrated into the volume contained in the outer fuselage envelope,
- pressurised and supplied, on demand, either by deflexion of a part of the outgoing flows, collected after motorisation, at high pressure, conveyed in the "transverse" fluidic channels, or by air boosters, equipped with a multitude of regularly distributed fluid exhaust points, each acting as a mini or micro-nozzle, which locally and globally develop lateral thrust forces which apply to the whole of said mobile unit constituted

12. Mobile unit according to Claims 1 to 11, **characterised in that** it is "without wheel trains", for takeoffs and landings in vertical mode or in "slipped" tangential mode, controlled, on a "pressurised" fluid cushion.

13. Mobile unit according to claims 1 to 12, **characterised in that**:
- flat surface areas of the fuselage envelope equipped with the described pressurised flat boxes, supplied by the described "transverse" fluidic channels, whose flows controlled on demand, develop, over the whole of the unit formed, lateral, directional, distributed thrust forces, the combinations of which make it possible to obtain effectively the effects of
- vertical take-off, whereas the fluxes produced by one or more of the internal longitudinal channels are totally directed towards the internal transverse fluid channels
- permanent guidance, by controlled activation of specific pressurised flat boxes,
progressive transfer of propellant power available in horizontal movement by controlled activation of the motorised internal longitudinal channels not stressed during take-off, or by progressive reduction of the fluxes implemented in the internal transverse fluidic channels and by controlled redirection of these fluxes towards the outlet of the motorised internal longitudinal channel(s) which produce them,
- permanent or pulsed adjustment of the trajectories travelled, by controlled activation of the whole device implemented for vertical take-off and for omnidirectional guidance; the mobile units thus formed, claimed as innovative, have capacities in terms of omnidirectional manoeuvrability applicable in many fields.

14. Mobile unit according to Claims 1 to 13, **characterised in that** it switches from a subsonic mode, to a supersonic mode, to a stratospheric mode and then to a possible "suborbital" mode, by a progressive injection, in particular from the stratospheric mode, into the propulsion devices of on-board pure oxygen, or of an oxidiser other than oxygen,
- whereas in subsonic and supersonic modes, the oxidiser, which is not on board and is drawn from the flow passing through the environment, is the oxygen of the air, so that mobile units of the suborbital or space
"launcher" type do away with the carrying of the oxidiser in the launch phases which consume the most oxygen.

15. Mobile unit according to Claims 1 to 14, **characterised, in** specific embodiments, **in that** it is structured as an association of centrally controlled mobile units, made autonomous in stages, consisting of
- a central mobile unit, for ultimate use, reusable or not
- independent mobile units associated laterally with the central mobile unit, mounted symmetrically with respect to the main axis of the central mobile unit, detachable and recoverable, to form a mobile launch unit a single-use module detachable from the central mobile unit, which may be a satellite, a space shuttle, while said central mobile unit may be recovered, or
- a transport cell at very high altitude such as "suborbital", integrated into said central mobile unit, provided for a rapid return to earth
- these mobile units assembled in a "single launcher", claimed, are vertical take-off and landing units in "slipped" mode on a pressurised fluid cushion.

16. Mobile unit according to claims 1 to 15, **characterised in that** it further comprises:
- optional retractable equipment contained in the outer fuselage envelope, such as :- wings, rudders and ailerons (A-R) and (G),
- temporary ground support devices,
- sensors projecting from and outside the outer envelope,
- specific, retractable motorised devices which allow the initiation of a movement perpendicular to the main longitudinal axis of said mobile unit
- devices for the temporary or permanent, total or partial protection of all the front inputs of said mobile unit against objects carried by the incoming flow (FE 1) actuated automatically under the impulse of appropriate detectors.
